# EUROPEAN PATENT APPLICATION

(11) **EP 3 467 672 A1**
(43) Date of publication of application: **10.04.2019**
(21) Application number: 17809910.7
(22) Date of filing: 13.03.2017
(51) Int. Cl.: G06F 17/21, G06F 13/00, G06F 17/22, G06F 17/24

(54) **METHOD, PROGRAM, RECORDING MEDIUM, AND DEVICE FOR ASSISTING IN CREATING HOMEPAGE**

(30) Priority: 06.06.2016 JP 2016112593
(71) Applicant: Okada, Yasunari, Osaka-shi, Osaka 538-0037 (JP)
(72) Inventor: Okada, Yasunari, Osaka-shi, Osaka 538-0037 (JP)
(74) Representative: Uexküll & Stolberg
(86) International application number: PCT/JP2017/009981
(87) International publication number: WO 2017/212726

(57) **Abstract**

The present invention addresses the problem of creating a device for assisting in creating a homepage in such a manner that a general user can create a desired homepage on a homepage editing screen in a simple operation. The device 10 for assisting in creating a homepage according to the present invention is provided with: a means for creating content constituting the homepage on the basis of a user operation; a means for determining the positional relationship between created new content and previously created existing content; and a means for editing source code for the homepage on the basis of a layout rule that is among a plurality of layout rules for content, and that matches said positional relationship.

## Description

### [Technical Field]

The present invention relates to a method, program, recording medium, and device for assisting the creation of a home page, and particularly relates to a method for assisting the creation of a home page so that a general user can create a web page by a simple and intuitive operation on a home page editing screen, a program for performing the method with a computer, a computer readable recording medium with the program recorded thereon, and a device for assisting the creation of such a home page.

### [Background Art]

A system for viewing documents (web pages) hosted on a web server with a web browser on a user terminal is constructed on the Internet. A collection of web pages associated with an individual, a company, or the like is called a web site, which is specified by a URL from a user terminal. In this regard, URL is an acronym for uniform resource locator, which is a formal symbol indicating the location of information (i.e., web site) on the Internet.

A home page originally referred to the top page of such a web site, but a document (web page) that can be viewed on a web site is now generally called a home page. Thus, a home page refers to a web page as used herein.

A home page is described in a language such as HTML (Hypertext Markup Language) or XHTML (Extensible Hypertext Markup Language).

For example, data (HTML file) for a home page described in HTML is data in a form of text called a source code. An HTML file can use additional information called a tag (instruction to a web browser) to organize a character string, instruct a storage location of an image file, or describe a link for a related file.

However, it is challenging for a general user to create an intended home page using HTML because such home page creation requires that the user understand the writing rules unique to HTML and use various tags appropriately.

In this regard, application software that enables a user to readily create a home page on an editing screen on a personal computer (hereinafter, referred to as HP creation assisting software) has been implemented in practice.

For example, the HP creation assisting software disclosed in Patent Literature 1 is configured to present a user with several templates to automatically create an HTML file of a home page with a design intended by the user in accordance with an input on a template by the user on a personal computer to which the HP creation assisting software is installed.

A user with no specialized knowledge can create a home page by an intuitive operation on an editing screen on a personal computer by using such HP creation assisting software.

However, even general users have a desire to create a more sophisticated home page in recent years, so that HP creation assisting software increasingly has a large number of templates to meet the various needs of users, and has various functions for editing individual elements in the templates integrated into the software. As a result, the operation for executing a desired editing function has instead become more difficult to understand. Furthermore, editing functions were not sufficiently coordinated, e.g., the layout collapsing as a result of editing.

### [Citation List]

### [Patent Literature]

[PTL 1] Japanese Laid-Open Publication No. 2003-141103

### [Summary of Invention]

### [Technical Problem]

As discussed above, home page creation was challenging for general users without specialized knowledge. Home page creation as intended by general users was not simple even with the use of HP creation assisting software.

The objective of the invention is to obtain a method for assisting the creation of a home page so that a general user can create an intended home page by a simple operation on a home page editing screen, a program for performing the method with a computer, a computer readable recording medium with the program recorded thereon, and a device for assisting the creation of a home page by a general user as described above.

### [Solution to Problem]

A method according to the present invention for assisting the creation of a home page with a computer is provided, where the method comprises: the computer creating a box on an editing screen based on a user operation, the box being a rectangular frame for placing a content of the home page; the computer determining a positional relationship between a target box, which is a target of creation, and an existing box adjacent to the target box; and the computer editing at least a description for the target box between the target box and the existing box in the source code so that the description is in accordance with a layout rule matching the positional relationship among a plurality of layout rules specifying the placement of the box, thereby achieving an objective described above.

A program according to the present invention for executing a method for assisting the creation of a home page with a computer is provided, where the program is configured to make the computer execute: creating a box on an editing screen based on a user operation, the box being a rectangular frame for placing a content of the home page; determining a positional relationship between a target box, which is a target of creation, and an existing box adjacent to the target box; and editing at least a description for the target box between the target box and the existing box in the source code so that the description is in accordance with a layout rule matching the positional relationship among a plurality of layout rules specifying the placement of the box, thereby achieving an objective described above.

A computer readable recording medium according to the present invention with the aforementioned program of the present invention recorded thereon is provided, thereby achieving an objective described above.

A device according to the present invention for assisting the creation of a home page is provided, where the device has: means for creating a box on an editing screen based on a user operation, the box being a rectangular frame for placing a content of the home page; means for determining a positional relationship between a target box, which is a target of creation, and an existing box adjacent to the target box; and means for editing at least a description for the target box between the target box and the existing box in the source code so that the description is in accordance with a layout rule matching the positional relationship among a plurality of layout rules specifying the placement of the box, thereby achieving an objective described above.

A method according to the present invention for assisting the creation of a home page with a computer is provided, where the method comprises: the computer displaying an editing screen for the home page, the editing screen comprising a preview screen, a source screen, and a hierarchical structure screen, one or more contents constituting the home page being displayed in the preview screen, one or more elements constituting a source code of the home page being displayed in the source screen, and a hierarchical structure comprising one or more hierarchical nodes corresponding to each of the one or more contents being displayed in the hierarchical structure screen; and the computer executing at least one of the following display processes: a first display process in which, when one of the one or more contents is selected on the preview screen, an element corresponding to the selected content among the one or more elements is highlighted and displayed on the source screen and a hierarchical node corresponding to the selected content among the one or more hierarchical nodes is highlighted and displayed on the hierarchical structure screen by the computer; a second display process in which, when one of the one or more elements is selected on the source screen, a content corresponding to a selected element among the one or more contents is highlighted and displayed on the preview screen and a hierarchical node corresponding to the selected element among the one or more hierarchical nodes is highlighted and displayed on the hierarchical structure screen by the computer; and a third display process in which, when one of the one or more hierarchical nodes is selected on the hierarchical structure screen, a content corresponding to the selected hierarchical node among the one or more contents is highlighted and displayed on the preview screen and an element corresponding to the selected hierarchical node among the one or more elements is highlighted and displayed on the source screen by the computer, thereby achieving an objective described above.

A program according to the present invention for making a computer perform a process for assisting the creation of a home page is provided, where the program makes the computer: display an editing screen for the home page, the editing screen comprising a preview screen, a source screen, and a hierarchical structure screen, one or more contents constituting the home page being displayed in the preview screen, one or more elements constituting a source code of the home page being displayed in the source screen, and a hierarchical structure comprising one or more hierarchical nodes corresponding to each of the one or more contents being displayed in the hierarchical structure screen; and execute at least one of the following display processes; a first display process in which, when one of the one or more contents is selected on the preview screen, an element corresponding to the selected content among the one or more elements is highlighted and displayed on the source screen and a hierarchical node corresponding to the selected content among the one or more hierarchical nodes is highlighted and displayed on the hierarchical structure screen; a second display process in which, when one of the one or more elements is selected on the source screen, a content corresponding to a selected element among the one or more contents is highlighted and displayed on the preview screen and a hierarchical node corresponding to the selected element among the one or more hierarchical nodes is highlighted and displayed on the hierarchical structure screen; and a third display process in which, when one of the one or more hierarchical nodes is selected on the hierarchical structure screen, a content corresponding to the selected hierarchical node among the one or more contents is highlighted and displayed on the preview screen and an element corresponding to the selected hierarchical node among the one or more elements is highlighted and displayed on the source screen, thereby achieving an objective described above.

A computer readable recording medium according to the present invention with the aforementioned program of the present invention recorded thereon is provided, thereby achieving an objective described above.

A device according to the present invention for assisting the creation of a home page is provided, where the device comprises: displaying means for displaying an editing screen for the home page, the editing screen comprising a preview screen, a source screen, and a hierarchical structure screen, one or more contents constituting the home page being displayed in the preview screen, one or more elements constituting a source code of the home page being displayed in the source screen, and a hierarchical structure comprising hierarchical nodes corresponding to each of the one or more contents being displayed in the hierarchical structure screen; and controlling means for controlling the display means to perform at least one of the following display processes: a first display process in which, when one of the one or more contents is selected on the preview screen, the displaying means highlights and displays an element corresponding to the selected content among the one or more elements on the source screen and highlights and displays a hierarchical node corresponding to the selected content among the one or more hierarchical nodes on the hierarchical structure screen; a second display process in which, when one of the one or more elements is selected on the source screen, the displaying means highlights and displays a content corresponding to a selected element among the one or more contents on the preview screen and highlights and displays a hierarchical node corresponding to the selected element among the one or more hierarchical nodes on the hierarchical structure screen; and a third display process in which, when one of the one or more hierarchical nodes is selected on the hierarchical structure screen, the displaying means highlights and displays a content corresponding to the selected hierarchical node among the one or more contents on the preview screen and highlights and displays an element corresponding to the selected hierarchical node among the one or more elements on the source screen, thereby achieving an objective described above.

A method according to the present invention for assisting the creation of a home page with a computer is provided, wherein the method comprises: the computer displaying a plurality of blocks for placing a content of the home page so that at least one block is contained within at least one other block on an editing screen based on an editing operation of a user; the computer switching an editing mode for a parent block comprising at least one block between a normal editing mode and a batch editing mode based on a user operation; and when the editing mode for the parent block is in the batch editing mode, denying an individual editing operation on a block contained in the parent block and batch editing the block contained in the parent block with the parent block in accordance with an editing operation of a user on the parent block, and when the editing mode for the parent block is in the normal editing mode, the computer executing an editing process of the block contained in the patent block in accordance with an editing operation of a user on the block contained in the parent block, thereby achieving an objective described above.

A program according to the present invention for executing a method for assisting the creation of a home page with a computer is provided, where the program is configured to: switch an editing mode for a parent block comprising at least one block between a normal editing mode and a batch editing mode based on a user editing operation; and when the editing mode for the parent block is in the batch editing mode, deny an individual editing operation on a block contained in the parent block and batch edit the block contained in the parent block with the parent block in accordance with an editing operation on the parent block, and when the editing mode for the parent block is in the normal editing mode, execute an editing process of the block contained in the patent block in accordance with an editing operation on the block contained in the parent block by the computer, thereby achieving an objective described above.

A computer readable recording medium according to the present invention with the aforementioned program of the present invention recorded thereon is provided, thereby achieving an objective described above.

A device according to the present invention for assisting the creation of a home page is provided, wherein the device comprises: means for displaying a plurality of blocks for placing a content of the home page so that at least one block is contained within at least one other block on an editing screen based on an editing operation of a user; means for switching an editing mode of a parent block comprising at least one block between a normal editing mode and a batch editing mode based on a user operation; and means for, when the editing mode for the parent block is in the batch editing mode, denying an individual editing operation on a block contained in the parent block and batch editing the block contained in the parent block with the parent block in accordance with an editing operation of a user on the parent block and, when the editing mode for the parent block is in the normal editing mode, editing the block contained in the patent block in accordance with an editing operation of a user on the block contained in the parent block, thereby achieving an objective described above.

A method according to the present invention for assisting the creation of a home page with a computer is provided, where the method comprises: the computer determining a type of adjacent tags, an attribute contained in a tag, and an attribute value contained in a source code of a created home page; and the computer organizing the source code by replacing the adjacent tags with one tag if a result of the determination meets a predetermined condition, thereby achieving an objective described above.

A program according to the present invention for executing a method for assisting the creation of a home page with a computer is provided, where the program is configured to make the computer execute: determining a type of adjacent tags, an attribute contained in a tag, and an attribute value contained in a source code of a created home page; and organizing the source code by replacing the adjacent tags with one tag if a result of the determination meets a predetermined condition, thereby achieving an objective described above.

A computer readable recording medium according to the present invention with the aforementioned program of the present invention recorded thereon is provided, thereby achieving an objective described above.

A device according to the present invention for assisting the creation of a home page is provided, where the device comprises: means for determining a type of adjacent tags, an attribute contained in a tag, and an attribute value contained in a source code of a created home page; and means for organizing the source code by replacing the adjacent tags with one tag if a result of the determination meets a predetermined condition, thereby achieving an objective described above.

### [Advantageous Effects of Invention]

The present invention can materialize a method for assisting the creation of a home page so that a general user can create an intended home page by a simple operation on a home page editing screen, a program for performing the method with a computer, a computer readable recording medium with the program recorded thereon, and a device for assisting the creation of a home page by a general user as described above.

### [Brief Description of Drawings]

Figure **1** is a diagram showing a device for assisting the creation of a homepage according to embodiment 1 of the present invention.
Figure **2** is a diagram for explaining a box model. Figure **2(a)** shows an example of a description of HTML element **1.** Figure **2(b)** shows the default placement of box **B** corresponding to the HTML element on a display screen. Figure **2(c)** shows a description **Dc** which specifies the style of box **B.** Figure **2(d)** shows the placement of box **B** with a specified style on the display screen.
Figure **3** is a diagram for explaining a method of applying CSS to an HTML element. Figure **3(a)** shows a method of applying CSS to each HTML element (first method). Figure **3(b)** shows a method of applying CSS in batch to a plurality of HTML elements (second method). Figure **3(c)** shows a description for specifying an HTML to which CSS is applied.
Figure **4** is a diagram for explaining the position relationship of a plurality of boxes corresponding to a plurality of HTML elements. Figure **4(a)** shows a source code comprising a plurality of HTML elements. Figure **4(b)** shows the content of each HTML element displayed on a browser. Figure **4(c)** shows a box corresponding to each of the plurality of HTML elements.
Figure **5** is a diagram for explaining a layout rule for a block box to which a style is not applied. Figure **5(a)** shows a source code of a home page comprising two contents. Figure **5(b)** shows this home page being displayed.
Figure **6** is a diagram for explaining a regular layout rule for a block box to which a style is applied by the first method. Figure **6(a)** shows a source code of a home page comprising two contents. Figure **6(b)** shows this home page being displayed.
Figure **7** is a diagram for explaining a regular layout rule for a block box to which a style is applied by the second method. Figure **7(a)** shows a source code of a home page comprising two contents. Figure **7(b)** shows this home page being displayed.
Figure **8** is a diagram for explaining an irregular layout rule for a block box to which a style is applied by the first method. Figure **8(a)** shows a source code of a home page comprising two contents. Figure **8(b)** shows this home page being displayed.
Figure **9** is a diagram for explaining an irregular layout rule for a block box to which a style is applied by the second method. Figure **9(a)** shows a source code of a home page comprising two contents. Figure **9(b)** shows this home page being displayed.
Figure **10** is a diagram for explaining a layout rule for an inline box to which a style is not applied. Figure **10(a)** shows a source code of a home page comprising two contents. Figure **10(b)** shows this home page being displayed.
Figure **11** is a diagram for explaining a regular layout rule for an inline box to which a style is applied by the first method. Figure **11(a)** shows a source code of a home page comprising two contents. Figure **11(b)** shows this home page being displayed.
Figure **12** is a diagram for explaining a regular layout rule for an inline box to which a style is applied by the second method. Figure **12(a)** shows a source code of a home page comprising two contents. Figure **12(b)** shows this home page being displayed.
Figure **13** is a diagram for explaining an irregular layout rule for an inline box to which a style is applied by the first method. Figure **13(a)** shows a source code of a home page comprising two contents. Figure **13(b)** shows this home page being displayed.
Figure **14** is a diagram for explaining an irregular layout rule for an inline box to which a style is applied by the second method. Figure **14(a)** shows a source code of a home page comprising two contents. Figure **14(b)** shows this home page being displayed.
Figure **15** is a diagram showing a home page editing screen provided by an HP creation assisting device **10.**
Figure **16** is a diagram showing a state where a block box has been created on the editing screen shown in Figure **15****.**
Figure **17** is diagram showing a state where the width of a block box on the editing screen shown in Figure **16** has been set.
Figure **18** is a diagram showing a text editing screen **TSe.**
Figure **19** is a diagram showing a state where a content has been input into the block box on the editing screen shown in Figure **16****.**
Figure **20** is a diagram showing a state where the height, left and top inside margins, and left and top outside margins of the block box shown in Figure **19** have been set.
Figure **21** is a diagram showing a state where a second block box has been created below the first block box on the editing screen **Se** shown in Figure **20****.**
Figure **22** is a diagram showing a state where a content has been input into the second block box shown in Figure **21****.**
Figure **23** is a diagram showing a state where the second block box shown in Figure **21** has been moved to the right side of the first block box.
Figure **24** is a diagram showing a state where content is input into the second block box shown in Figure **23****.**
Figure **25** is a diagram showing a state where a first block box whose width, height, left and top inside margins, and left and top outside margins have been set has been created on the editing screen.
Figure **26** is a diagram showing a state where a content has been input into a text editing screen.
Figure **27** is a diagram showing a state where a content has been input into the block box shown in Figure **25****.**
Figure **28** is a diagram showing a state where two contents within the block box shown in Figure **27** are placed according to a regular layout rule for inline boxes.
Figure **29** is a diagram showing a state where two contents within the block box shown in Figure **27** are placed according to an irregular layout rule for inline boxes.
Figure **30** is a diagram showing an HTML element generation process according to a layout rule for boxes in a flowchart.
Figure **31** is a diagram for explaining an HP creation assisting device **20** according to embodiment 2 of the present invention.
Figure **32** is a diagram showing an editing screen **Se2** that is displayed on a display unit **14a** of the HP creation assisting device **20** shown in Figure **31****.**
Figure **33** is a diagram for explaining the mechanism for associating the contents displayed on a preview screen **Rep,** a source screen **Rce,** and a hierarchical structure screen **Rhd** within the editing screen **Se2** shown in Figure **32****.**
Figure **34** is a diagram showing a source element map **Mse.**
[Figure 35] Figure **35** is a diagram for explaining a DOM element map **Mde.** Figure **35(a)** shows a comparison of a source element with a DOM element. Figure **35(b)** shows the structure of the DOM element map **Mde.**
Figure **36** is a diagram for explaining hierarchical structure information **Dhs.** Figure **36(a)** shows a comparison of a source element with a DOM element. Figure **36(b)** specifically shows the hierarchical structure information **Dhs.**
Figure **37** is a diagram schematically showing an input of a source code **Sc** displayed on the source screen **Rce** into a text editor.
Figure **38** is a diagram showing a state where the source code **Sc** is being displayed on the source screen **Rce** of the editing screen **Se2.**
Figure **39** is a diagram showing a state where individual HTML elements contained in a source code have been recognized by analysis of the input source code **Sc.**
Figure **40** is a diagram schematically showing a source code being read by a browser.
Figure **41** is a diagram showing a state where a content is displayed on the preview screen **Rep** of the editing screen **Se2** by a browser reading the source code **Sc.**
Figure **42** is a diagram showing a browser DOM (hierarchical structure of HTML elements) **Eh1,** which is generated by a browser dependent function upon reading of a source code by a browser.
Figure **43** is a diagram showing how a display element guide is generated by comparison of an HTML element of the source element map **Mse** with an HTML element of browser DOM (hierarchical structure).
Figure **44** is a diagram for explaining a display element guide. Figure **44(a)** schematically shows how a display element guide is applied to a content on the preview screen **Rep.** Figure **44(b)** shows a state where a display element guide has been applied to a content. Figure **44(c)** shows a state where a guide symbol has been given to a display element guide.
Figure **45** is a diagram showing how the browser DOM (hierarchical structure of HTML elements) **Eh1** is converted to a DOM structure (hierarchical structure) **Eh** matching a source element.
Figure **46** is a diagram schematically showing the assignment of a symbol to a hierarchical node of a DOM structure and assignment of a guide sign to a symbol.
Figure **47** is a diagram schematically showing how a symbol assigned to a hierarchical node of a DOM structure is reflected in the hierarchical structure screen **Rhd.**
Figure **48** is a diagram showing how clicking on an HTML element on the source screen **Rce** results in a corresponding content on the preview screen **Rep** and a corresponding hierarchical node on the hierarchical structure screen **Rhd** to be highlighted.
Figure **49** is a diagram showing how clicking on a content of the preview screen **Rep** results in a corresponding HTML element on the source screen **Rce** and a corresponding hierarchical node on the hierarchical structure screen **Rhd** to be highlighted.
Figure **50** is a diagram showing how clicking on a symbol on the hierarchical structure screen **Rhd** results in a corresponding HTML element on the source screen **Rce** and a corresponding content on the preview screen **Rep** to be highlighted.
Figure **51** is a diagram for explaining an HP creation assisting device **30** according to embodiment 3 of the present invention.
Figure **52** is a diagram showing the editing screen **Se** displayed on the display unit **14a** of an HP creation assisting device **30** shown in Figure **51****.**
Figure **53** is a diagram showing only an expanded preview screen **Rep** on the editing screen **Se** shown in Figure **52****.**
Figure **54** is a diagram for explaining the operation of the HP creation assisting device **30** shown in Figure **51****,** and shows a state where a block (child bock) contained in a block in an individual editing mode has been copied.
Figure **55** is a diagram for explaining the operation of the HP creation assisting device **30** shown in Figure **51****,** and shows a change in the display on the preview screen when the editing mode of a block (parent block) containing a block is switched from an individual editing mode to a batch editing mode.
Figure **56** is a diagram for explaining the operation of the HP creation assisting device **30** shown in Figure **51****,** and shows a state where a parent block in batch editing mode has been copied.
Figure **57** is a diagram for explaining the operation of the HP creation assisting device **30** shown in Figure **51****,** and shows a change in the display on the preview screen when a parent block in the batch edit mode is copied and then the editing mode for the original parent block is returned to the individual editing mode.
Figure **58** is a diagram for explaining the operation of the HP creation assisting device **30** shown in Figure **51****,** and shows a process in a flow chart for executing a process in accordance with an editing operation of a user according to the editing mode of a block targeted for editing by a computer.
Figure **59** is a diagram for explaining an HP creation assisting device **40** according to embodiment 4 of the present invention.
Figure **60** is a diagram showing the editing screen **Se** displayed on the display unit **14a** of the HP creation assisting device **40** of embodiment 4.
Figure **61** is a diagram for explaining the operation of the HP creation assisting device **40** shown in Figure **59****,** and shows a change in the source code when various styles are set for contents in style setting processes S400 to S407.
Figure **62** is a diagram for explaining the operation of the HP creation assisting device **40** shown in Figure **59****,** and shows a change in the source code when various styles are set for contents in style setting processes S408 to S410.
Figure **63** is a diagram for explaining the operation of the HP creation assisting device **40** shown in Figure **59****.** Figure **63(a)** shows analysis of the first cycle for organizing the source code of contents. Figure **63(b)** shows results of organizing the source code in the first cycle.
Figure **64** is a diagram for explaining the operation of the HP creation assisting device **40** shown in Figure **59****.** Figure **64(a)** shows analysis of the second cycle for organizing the source code of contents. Figure **64(b)** shows results of organizing the source code in the second cycle.
Figure **65** is a diagram for explaining the operation of the HP creation assisting device **40** shown in Figure **59****.** Figure **65(a)** shows analysis of the third cycle for organizing the source code of contents. Figure **65(b)** shows results of organizing the source code in the third cycle.
Figure **66** is a diagram for explaining the operation of the HP creation assisting device **40** shown in Figure **59****.** Figure **66(a)** shows analysis of the fourth cycle for organizing the source code of contents. Figure **66(b)** shows results of organizing the source code in the fourth cycle.

### [Description of Embodiments]

The present application comprises four inventions for assisting the creation of a home page so that a general user can create a home page by a simple and intuitive operation on a home page editing screen.

The first invention is a method in which, when a home page is designed on a home page editing screen, a source code for displaying a designed home page in a browser is generated.

The second invention is an invention in which a preview screen for displaying a content constituting a home page, a source screen for displaying the source code of the home page, and a hierarchical structure screen for displaying a hierarchical structure of the content are displayed as home page editing screens, and the content of the home page, an element on the source screen, and a node of the hierarchical structure are associated so that the corresponding relationship with one another is recognized.

The third invention is an invention in which, when a plurality of blocks for placing contents on a home page editing screen are placed so that at least one block is contained within another block, the block editing operation is switched between an operation in a unit of individual blocks contained in another block and an operation in a unit of the another block.

The fourth invention is an invention in which, a type of adjacent tags, an attribute contained in a tag, and an attribute value contained in a source code of a created home page are determined, and the source code is organized by replacing the adjacent tags with one tag if a result of the determination meets a predetermined condition.

The embodiments of the present invention are explained hereinafter.

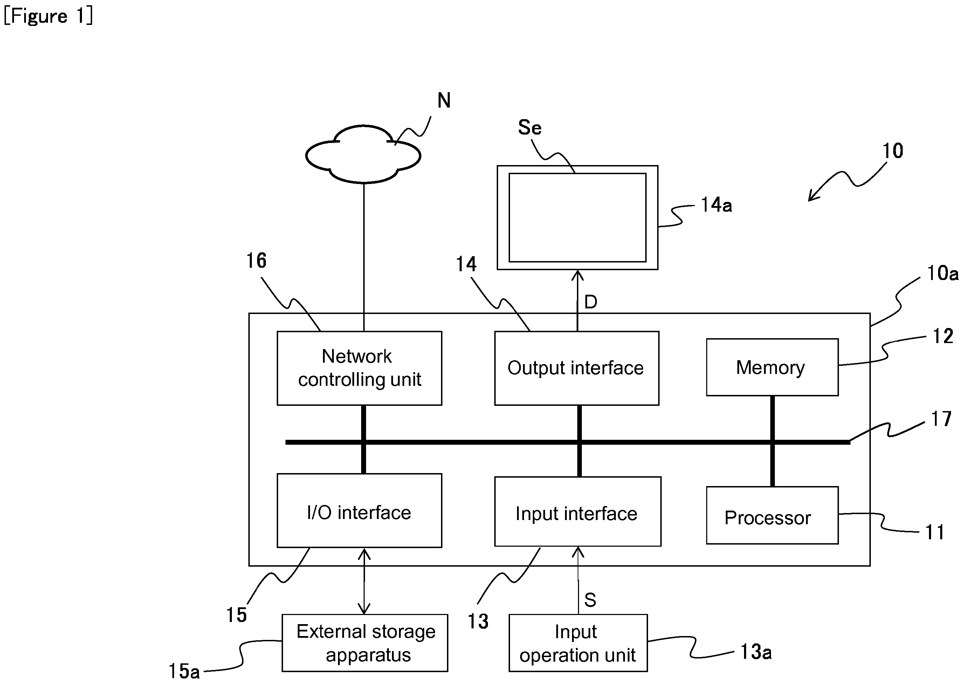

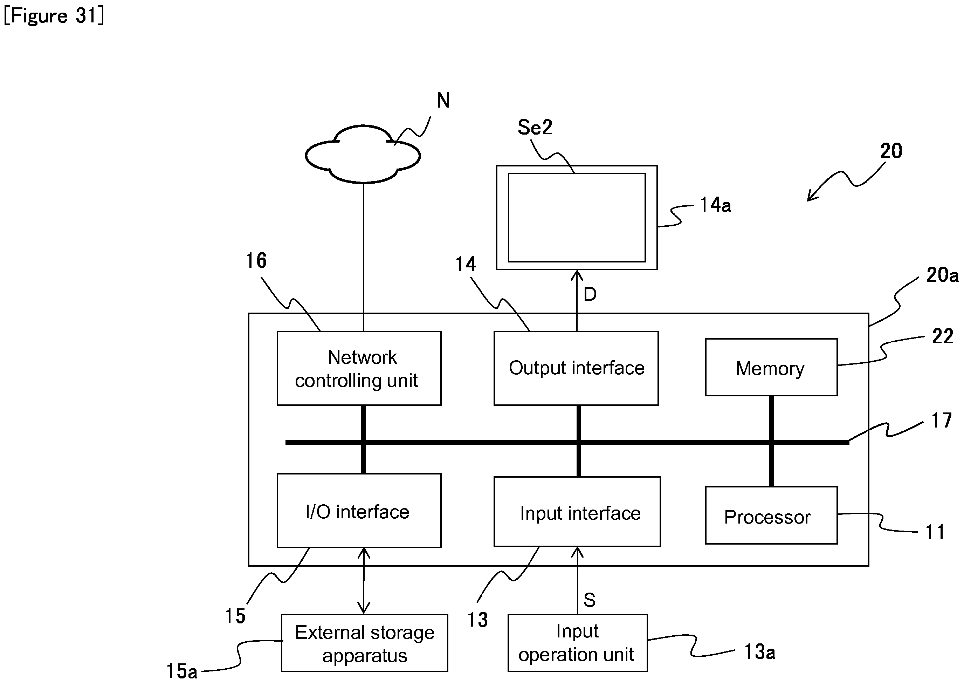

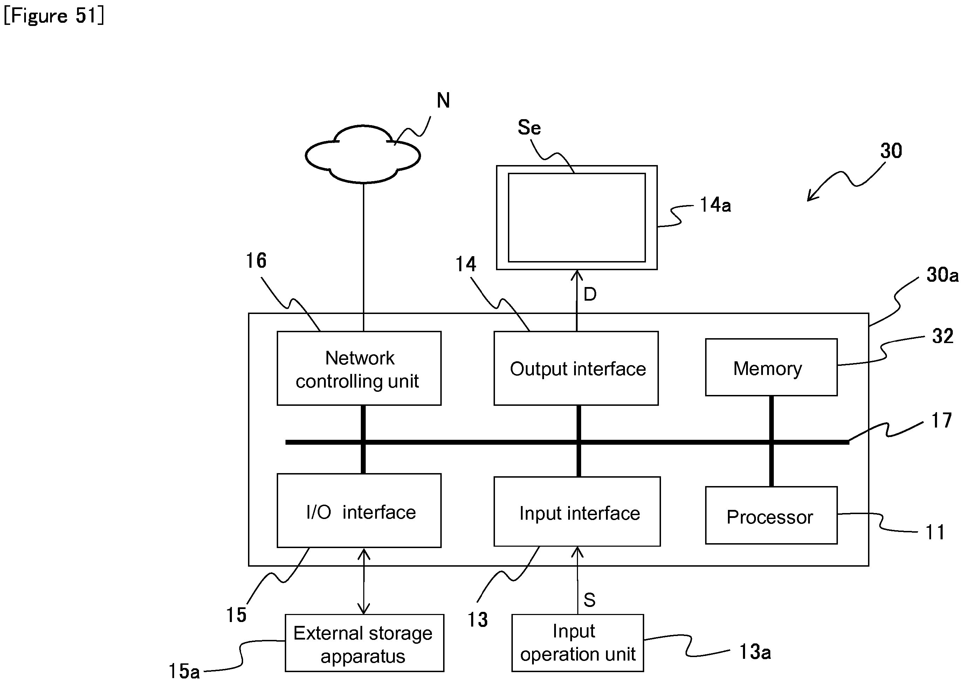

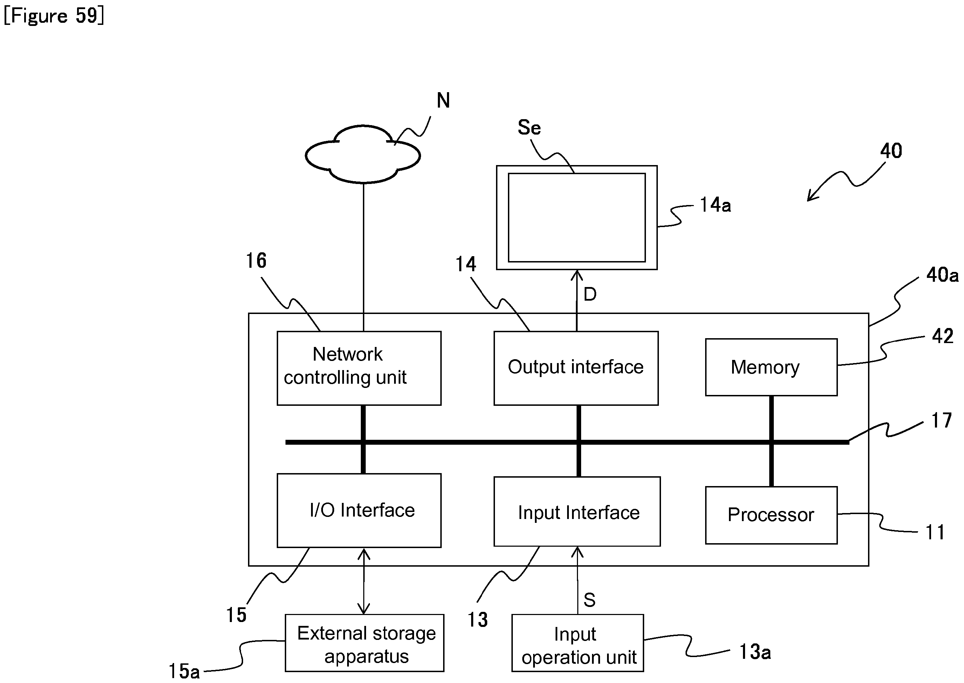

The aforementioned first to fourth inventions have the following relationship with the following embodiments (drawings).
First invention: Embodiment 1 (Figures **1** to **30**)
Second invention: Embodiment 2 (Figures **31** to **50**)
Third invention: Embodiment 3 (Figures **51** to **58**)
Fourth invention: Embodiment 4 (Figures **59** to **66**)

### (Embodiment 1)

Embodiment 1 of the present invention is a method for assisting the creation of a home page with a computer, where a content of the home page designed on a home page editing screen is converted to a source code according to a layout rule for a box model. After summarizing a device used for assisting the creation of a home page, the presumed approach for a box model, a representative style sheet CSS used for specifying the style of a box, and the layout rule for a box model are explained before specifically explaining the main subject of the method of converting a content of a home page into a source code.

The subject method for creating a home page and home page creation assisting process with a computer are explained thereafter.

The flow of explanation for this embodiment is shown in the following table of contents for embodiment 1.

### [Table of contents for embodiment 1]

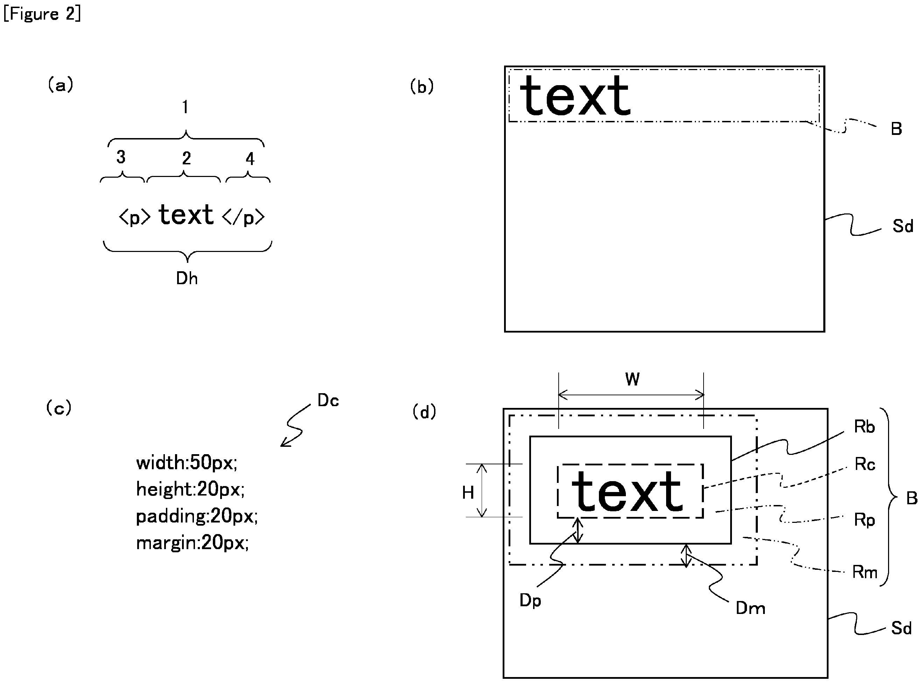

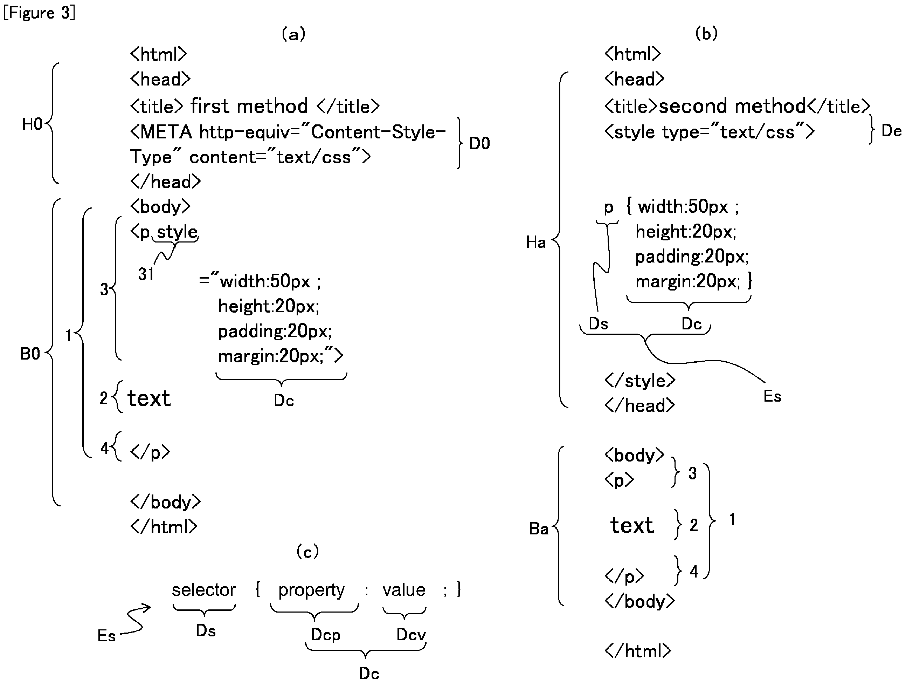

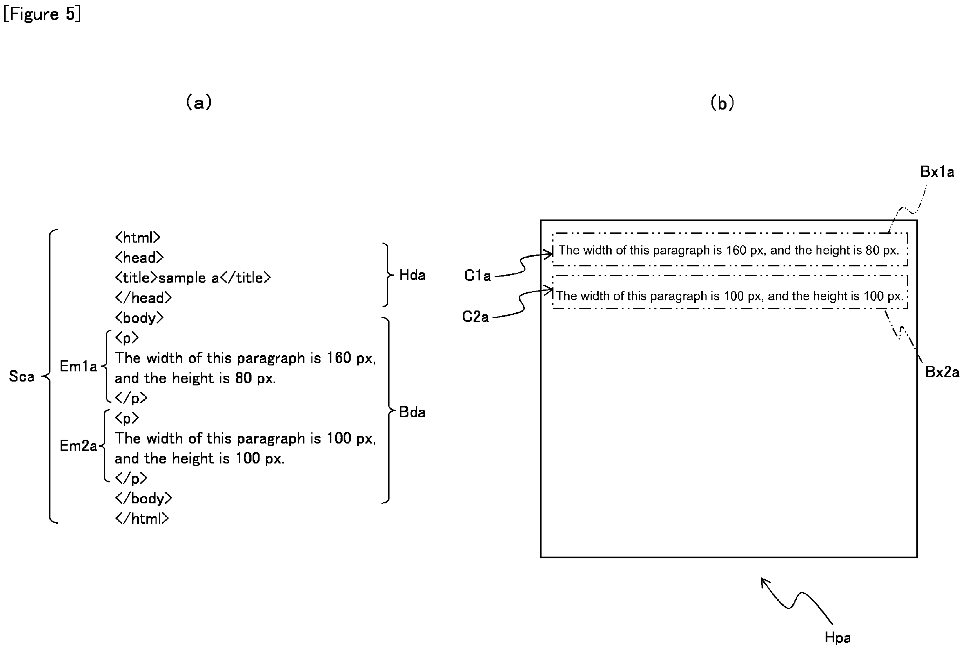

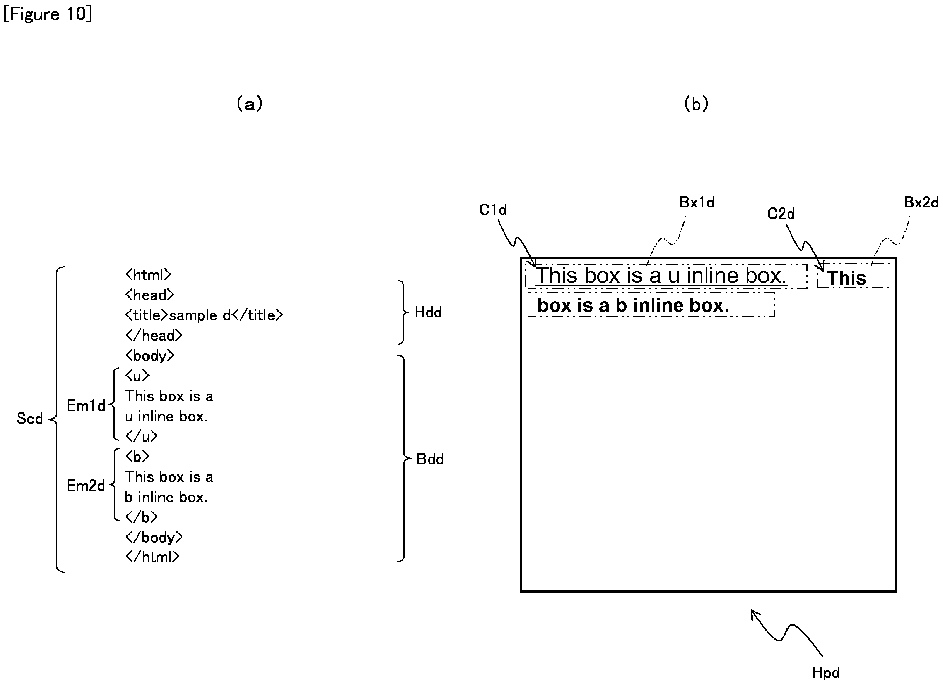

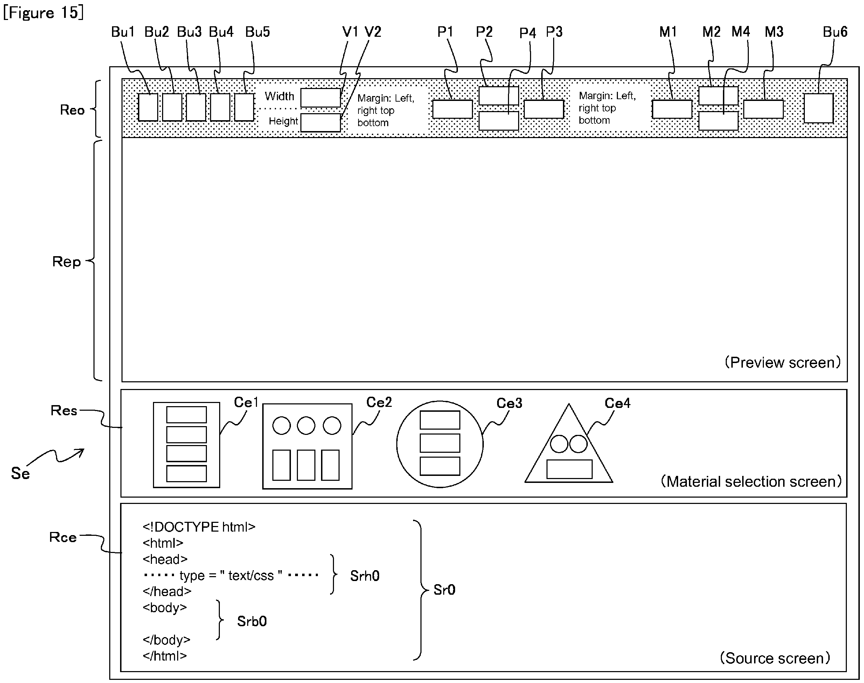

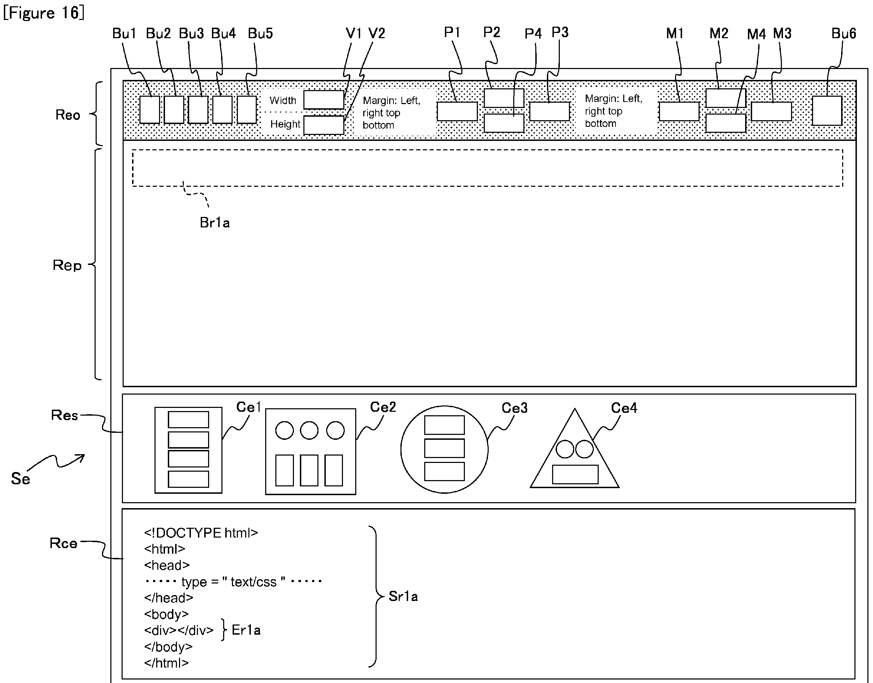

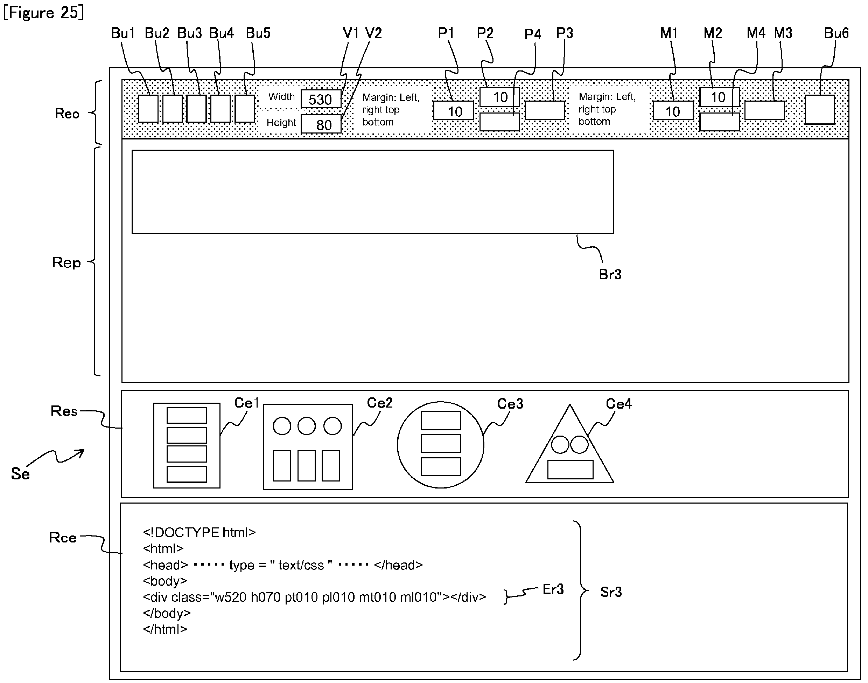

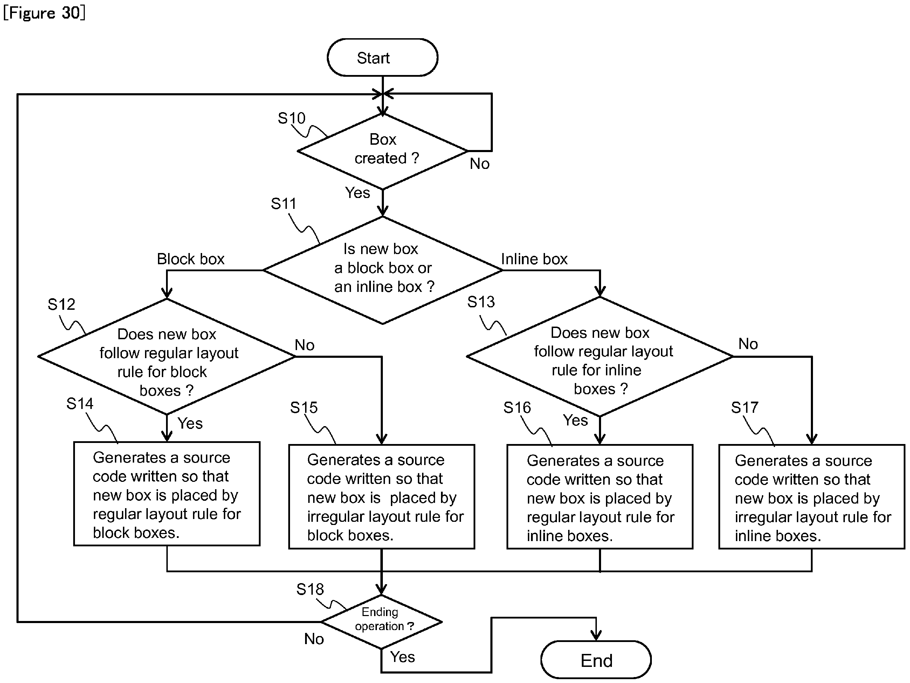

(1) Box model [Figure **2**]
   (1-1) Elements
   (1-2) Box
(2) Method of applying CSS [Figures **3** to **4**]
   (2-1) First method
   (2-2) Second method
(3) Layout rule for box [Figures **5** to **14**]
   (3-1) Layout rule for block box [Figures **5** to **9**]
   (3-2) Layout rule for inline box [Figures **10** to **14**]
(4) Home page creation method
   (4-1) Explanation of editing screen [Figure **15**]
   (4-2) Creation of source code of block element [Figures **16** to **24**]
   (4-3) Creation of source code of inline element [Figures **25** to **29**]
(5) Home page creation process [Figure **30**]

Embodiment 1 is explained in detail hereinafter.

Figure **1** shows a device for assisting the creation of a home page according to embodiment 1 of the present invention (hereinafter, also referred to as an HP creation assisting device) **10.**

The HP creation assisting device **10** of embodiment 1 has a computer **10a** for processing information, an input operation unit **13a** for inputting operation information **S** into the computer **10a** by a user operation, and a display unit **14a** for displaying an image based on display data **D** from the computer **10a.**

The computer **10a** comprises a processor **11,** a memory **12,** an input interface **13,** an output interface **14,** an I/O interface **15,** and a network controlling unit **16.** The processor **11,** memory **12,** input interface **13,** output interface **14,** I/O interface **15,** and network controlling unit **16** are connected to one another via a data bus **17.** The input operation unit **13a** comprises input devices such as a keyboard, mouse, and touch panel, which are connected to the input interface **13.** The output interface **14** is connected to a display device such as a liquid crystal display as the display unit **14a.** An external storage device **15a** or the like is connected to the I/O interface **15.** A network **N** such as the Internet is connected to the network controlling unit **16.** A scanner or the like can also be connected as an input device to the input interface **13.** A printer or the like can also be connected to the output interface **14.**

In this regard, the memory **12** stores a program for making the processor **11** assist in the creation of a home page based on an operation signal **S** from the input operation unit **13a.** The processor **11** executes a process for assisting the creation of a home page based on the operation signal **S** with the program stored in the memory **12.** It is understood that the memory **12** also stores a general operation system for making the processor **11** function as a text editor or as a browser.

A process for assisting the creation of a home page comprises a process for displaying an editing screen **Se** for editing the home page on the display unit **14a,** a process for inputting, drawing, or pasting one or more contents constituting the home page based on an operation signal **S** from a user operation, and a process for generating a source code matching the status of content created on the editing screen **Se** according to a box model.

For this reason, a user does not need to edit a source code of a home page when creating the home page using the HP creation assisting device **10.** A user can intuitively create a home page with an intended design by simply inputting a text, or drawing or pasting an image, in a desired region of the editing screen **Se** of the HP creation assisting device **10.**

Specific explanation is provided hereinafter according to the table of contents.

### (1) Box model

First, a box model is explained.

A box model is a scheme where a rectangular frame (hereinafter, referred to as a box) is provided for each of the one or more elements constituting a source code of a home page, and the content of elements (i.e., what is displayed as a content constituting the home page) is placed inside the box. Thus, when creating a home page using a box model, the content of an element can be positioned with a layout rule for a box or an attribute value of the box (height or width of the box, distance from an adjacent box, or the like).

In this regard, elements include block elements and inline elements. A block element is an element defining a content of a home page. An inline element is an element giving a predetermined role to a content of a home page. A box generated by a block element is a block box, which is a rectangular frame comprising the entire content of the block element. A box generated by an inline element is an inline box, which is a band-like frame with a height of one row, comprising the entire content of the inline element.

Figure **2** is a diagram for explaining a box model. Figure **2(a)** shows an example of a description of HTML element **1.** Figure **2(b)** shows the default placement of box **B** corresponding to the HTML element on a display screen. Figure **2(c)** shows a description **Dc** which specifies the style of box **B.** Figure **2(d)** shows the placement of box **B** with a specified style on the display screen.

### (1-1) Element

A source code is written in a markup language such as HTML (Hypertext Markup Language) or XHTML (Extensible Hypertext Markup Language). A markup language is a type of computer language for describing appointments regarding the sentence structure (paragraph or the like) or appearance (font size or the like), with the sentence in a text file.

For example, individual elements (HTML elements) contained in a source code (HTML source) described in HTML are descriptions obtaining by sandwiching a content to be displayed with a start tag and an end tag. For example, p element **1** shown in Figure **2(a)** consists of a description **Dh** obtained by sandwiching the content to be displayed "text" **2** with a start tag "<p>" **3** and an end tag "</p>" **4.**

The expression HTML element herein comprehensively indicates all elements described in HTML, while the expression html element is distinguished as indicating a description (source code) obtained by sandwiching a content with html tags, that is, "<html>" and "</html>".

### (1-2) Box

When the description "<p>text</p>" **Dh** of the p element **1** shown in Figure **2(a)** is read by a browser, the content "text" of the p element **1** is displayed as shown in Figure **2****(b**). A rectangular frame (box) **B** is provided for the p element **1** on a display screen **Sd** of a browser (hereinafter, also simply referred to as a display screen) as shown in Figure **2(b)**. Since the description **Dh** of the p element **1** shown in Figure **2(a)** does not set the width or height of the box **B,** the width of the box **B** is extended fully on the display screen **Sd,** and the height of the box **B** is the default value in a browser. The description **Dh** of the p element **1** shown in Figure **2(a)** also does not set the width or color of the border of box **B,** so that reading of the description **Dh** of the p element **1** only displays the content "text" **2** of the p element **1** on the display screen **Sd** as shown in Figure **2(b)**. The box **B** corresponding to the p element **1** appears to be absent. The box **B** corresponding to the p element **1** which is actually not observable is indicated by a double-dotted chain line for convenience of explanation in Figure **2(b)****.**

Attributes of a box, such as the width and height of box **B** (Figure **2(b)****)** corresponding to p element **1** and the position of the content relative to outer edges of the box, can be specified to place contents without information indicating the position to be placed according to a layout rule of the box.

The attributes of a box of an HTML element can be set using a tag as well as a style sheet specifying the style for the HTML element. A style sheet is a language that is different from HTML. Use of a style sheet can efficiently specify the style of an HTML element. Representative style sheets include CSS (Cascading Style Sheet). A style sheet can also specify the positional relationship (layout) of two or more boxes. The positional relationship (layout) of adjacent boxes can also be specified by a specific tag (e.g., br tag "<br/>") instead of a style sheet.

For example, attribute information **Dc** shown in Figure **2(c)** is information specifying the style (attribute) of box **B** corresponding to the p element **1.** When the style of box **B** is specified with such attribute information **Dc,** a portion (content region) **Rc** displaying the content "text" **2** of p element **1,** a border **Rb** of the box positioned around the content region **Rc,** a margin (padding region) **Rp** between the content region **Rc** and the border **Rb** of the box, and a margin (margin region) **Rm** between the border **Rb** of the box and a border of another box are specified for box **B** as shown in Figure **2(d)****.**

Specifically, a width **W** and a height **H** of the content region **Rc** of box **B** are specified by the width property "width: 50 px" and height property "height: 20 px" of the attribute information **Dc.** The width **Dp** of the padding region **Rp** of box **B** is specified by the padding property "padding: 20 px" of the attribute information **Dc,** and the width **Dm** of the margin region **Rm** of box **B** is specified by the margin property "margin: 20" of the attribute information **Dc.**

### (2) Method of applying CSS

A method of applying CSS to an HTML element is now specifically explained.

There are two methods of applying CSS to an HTML element. Each method is briefly explained hereinafter with the p element **1** shown in Figure **2(a)** as an example.

Figure **3** is a diagram for explaining a method of applying CSS to an HTML element. Figure **3(a)** shows a method of applying CSS to each HTML element (first method). Figure **3(b)** shows a method of applying CSS in batch to a plurality of HTML elements (second method). Figure **3(c)** shows a description for specifying an HTML element to which CSS is applied.

### (2-1) First method

For example, as shown in Figure **3(a)****,** CSS is declared as the style sheet by the declaration element (<META http-equiv="Content-Style-Type" content="text/css">) **D0** in a head element **H0** of the source code. In the body element **B0,** a style attribute **31** is added to a start tag **3** of p element **1** shown in Figure **2(a)****,** and attribute information **Dc** is set as the attribute value of the style attribute **31.** And thereby CSS is applied to the p element **1.**

### (2-2) Second method

This is a method in which, as shown Figure **3(b)****,** CSS is declared as the style sheet by a declaration element (<style type="text/css">) **De** in a head element **Ha** of the source code and CSS is applied in the body element Ba. However, to apply CSS in the body element **Ba,** it is necessary to specify which attribute of which HTML element in the body element **Ba** is set to what state. For this reason, a description **Es** for setting the style is used. The description **Es** for setting the style comprises a selector **Ds,** property **Dcp,** and value **Dcv** as shown in Figure **3(c)****.** The attribute information **Dc** (see Figure **2(c)****)** for applying CSS to an HTML element is created by the property **Dcp** and value **Dcv** as shown in Figure **3(b)****.** In this regard, the selector **Ds** indicates an element to which the style is set, the property **Dcp** indicates the attribute to be set, and the value **Dcv** is a value indicating what state the attribute is set. Thus, in the second method, it is not necessary to set a style in the body element **Ba.** For this reason, the description within a body element comprising many elements can be readily understood.

Since such a box is present for every HTML element, the positional relationship of boxes which are provided for each HTML element when a single home page source code contains a plurality of HTML elements is briefly explained hereinafter.

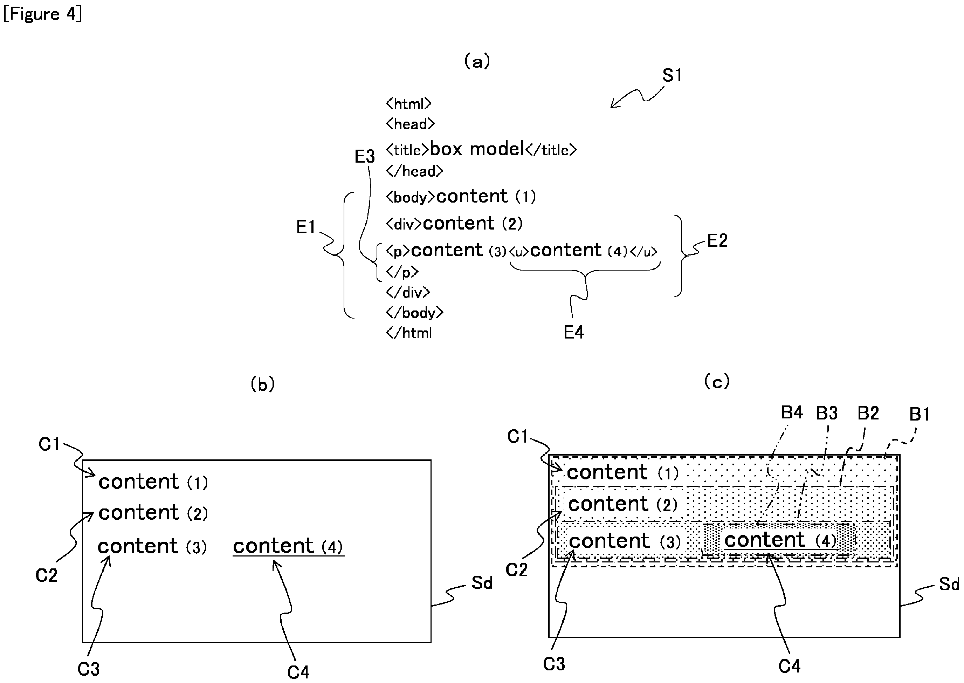

Figure **4** is a diagram for explaining the positional relationship of a plurality of boxes formed by a plurality of elements contained in a home page source code.

The source code **S1** shown in Figure **4(a)** comprises, as HTML elements, a body element **E1,** a div element **E2,** a p element **E3,** and a u element **E4.** When the source code **S1** is read by a browser, the display screen **Sd** displays content (1) **C1,** content (2) **C2,** content (3) **C3,** and content (4) **C4** as shown in Figure **4(b)****.** At this time, boxes **B1, B2, B3,** and **B4** are reserved for each HTML element, i.e., each of the body element **E1,** div element **E2,** p element **E3,** and u element **E4,** as shown in Figure **4(c)****.** In this regard, body element **E1,** div element **E2,** p element **E3** are block elements, and the u element **E4** is an inline element.

Such boxes generated by HTML elements do not have information indicating the position where the boxes are to be placed, but these boxes are positioned on the display screen **Sd** according to a regular layout rule or irregular layout rule in accordance with the application of information related to a layout of boxes for HTML elements (information from style sheet such as CSS or a specific tag such as a br tag).

### (3) Layout rule for box

The layout rule for a box is now specifically explained.

### (3-1) Layout rule for block box

Figure **5** is a diagram for explaining a layout rule (regular layout rule) for a block box when CSS is not applied to a block element.

The source code **Sea** shown in Figure **5(a)** comprises a head element **Hda** including the title element "sample a" and a subsequent body element **Bda.** Within the body element **Bda,** two block elements, that is, p element **Em1a** and **Em2a,** are subsequently described. The content **C1a** of the p element **Em1a** is "The width of this paragraph is 160 px, and the height is 80 px." The content **C2a** of the p element **Em2a** is "The width of this paragraph is 100 px, and the height is 100 px."

If CSS is not applied to these block elements **Em1a** and **Em2a,** two block boxes **Bx1a** and **Bx2a** corresponding to the block elements **Em1a** and **Em2a** are placed according to a regular layout rule of block boxes as shown in Figure **5(b)****.** Specifically, the block box **Bx2a** corresponding to the block element **Em2a** is placed below the block box **Bx1a** corresponding to the block element **Em1a** described before the block element **Em2a** on a display screen **Hpa** of a browser. However, in this case, the block boxes **Bx1a** and **Bx2a** are not displayed. Only the contents **C1a** and **C2a** positioned inside the block boxes **Bx1a** and **Bx2a** are displayed on the display screen **Hpa** in alignment from top to bottom.

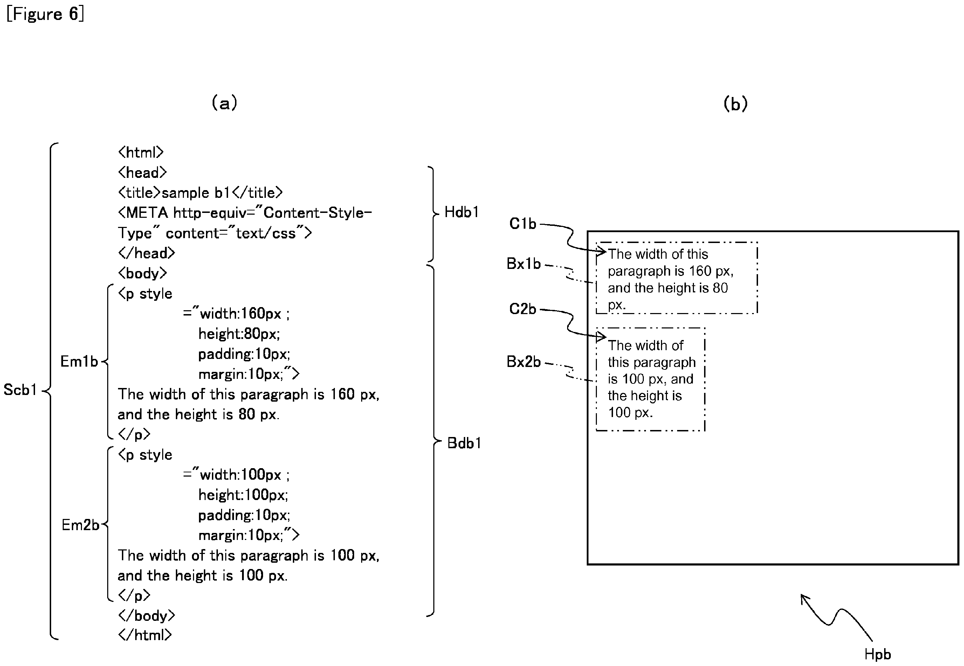

Figure **6** is a diagram for explaining a regular layout rule for a block box when CSS is applied to a block element by the first method.

The source code **Scb1** shown in Figure **6(a)** is substantially different from the source code **Sca** shown in Figure **5(a)** in that CSS is applied by the first method (see Figure **3(a)****)** to two block elements (p elements) **Em1b** and **Em2b** contained in a body element **Bdb1** following the head element **Hdb1** comprising the title element "sample b1".

Thus, in the block boxes **Bxlb** and **Bx2b** corresponding to the block elements **Em1b** and **Em2b,** as shown in Figure **6(b)****,** the width, height, width of a padding region, and the width of the margin region are set according to the applied CSS .

However, the layout is not specified by CSS in the block elements **Em1b** and **Em2b** for the block boxes **Bxlb** and **Bx2b,** so that the block box **Bx2b** corresponding to the trailing block element **Em2b** is placed below the block box **Bxlb** corresponding to the block element **Em1b** which is described first according to a regular layout rule. In this case, a display screen **Hpb** displays contents **C1b** and **C2b** in alignment from top to bottom so that the contents fit within the corresponding block boxes **Bx1b** and **Bx2b.** However, the block boxes **Bx1b** and **Bx2b** are not displayed.

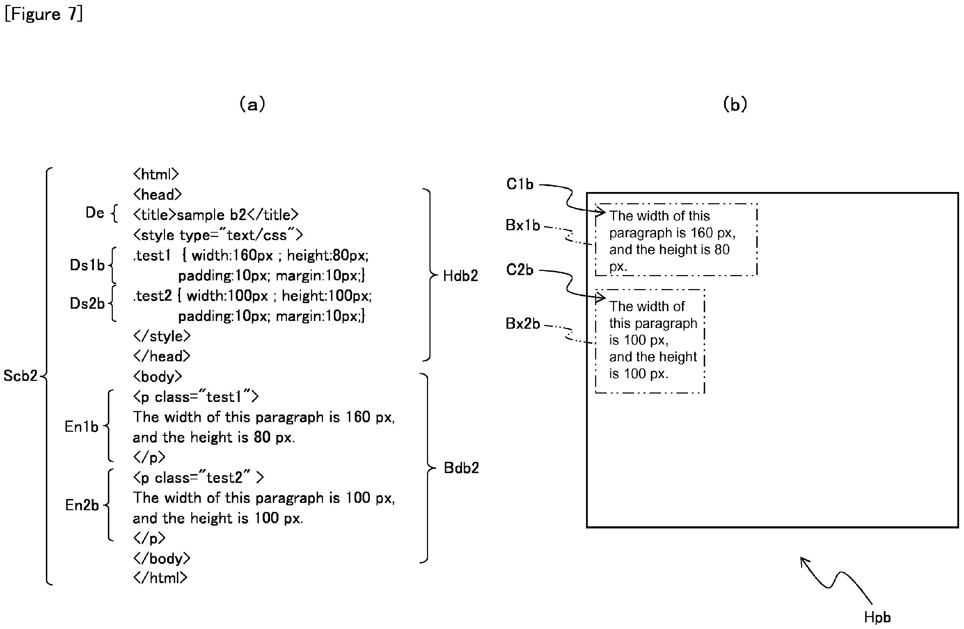

Figure **7** shows a regular layout rule for a block box when CSS is applied to a block element by the second method. The source code **Scb2** shown in Figure **7(a)** is identical to the source code **Scb1** shown in Figure **6(a)****,** other than applying CSS by the second method. Specifically, in the source code **Scb2,** CSS is declared with the declaration element (<style type="text/css">) **De** and a style to be applied is declared with test 1 attribute **Ds1b** and test 2 attribute **Ds2b** in a head element **Hdb2,** and the declared style is specified by a class attributes of each block element **En1b** and **En2b.** And thereby CSS is applied in the body element **Bdb2.** The display (Figure **7(b)****)** based on the source code **Scb2** is identical to the display (Figure **6(b)****)** based on the source code **Scb1.**

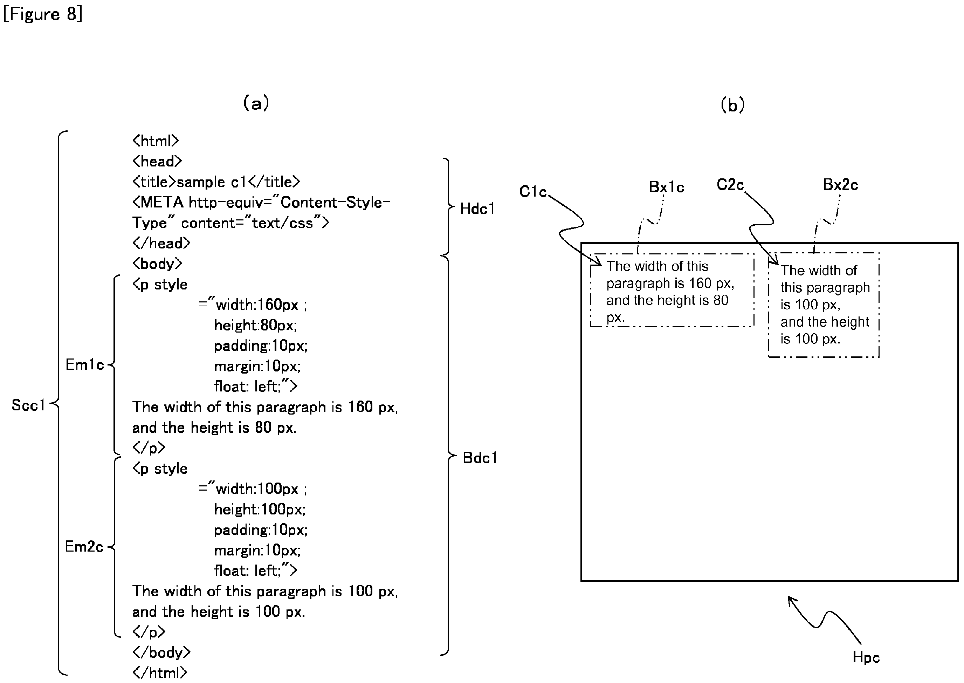

Figure **8** is a diagram for explaining an irregular layout rule for a block box when CSS is applied to a block element by the first method.

The source code **Scc1** shown in Figure **8(a)** is different from the source code **Scb1** shown in Figure **6(a)** in that the layout for block boxes is also specified in two block elements (p elements) **Em1c** and **Em2c** contained in a body element **Bdc1** following a head element **Hdc1** including the title element "sample c1".

Specifically, in p elements **Em1c** and **Em2c,** the width, height, padding, and margin of block boxes **Bx1c** and **Bx2c** generated by the p elements **Em1c** and **Em2c** are specified and further the layout information "float: left" specifies that the block box **Bx2c** corresponding to the p element **Em2c** is placed on the right side of the block box **Bx1c** corresponding to the p element **Em1c,** which is described in front of the p element **Em2c.**

According to the source code **Scc1,** the block box **Bx2c** corresponding to the block element **Em2c** in the back is placed towards the top left direction on the right side of the block box **Bx1c** corresponding to the block element **Em1c** in the front on the display screen **Hpc** according to an irregular layout rule of block boxes specified by CSS as shown in Figure **8(b)****.** In this case, the display screen **Hpc** displays contents **C1c** and **C2c** in alignment from left to right so that the contents fit within the corresponding block boxes **Bx1c** and **Bx2c.** However, the block boxes **Bx1c** and **Bx2c** are not displayed.

However, if there is no space to place the entire block box **Bx2c** corresponding to the block element **Em2c** in the back on the right side of the block box **Bx1c** corresponding to the block element **Em1c** in the front on the display screen, the block box **Bx2c** corresponding to the block element **Em2b** in the back is placed below the block box **Bx1c** corresponding to the block element **Em1c** in the front according to this irregular layout rule.

An irregular layout rule is not limited to placing the block box **Bx2c** corresponding to the block element **Em2c** in the back to the right side of the block box **Bx1c** corresponding to the block element **Em1c** in the front. An irregular layout rule can place the block box **Bx2c** corresponding to the block element **Em2c** in the back, for example, the left or top side of the block box **Bx1c** corresponding to the block element **Em1c** in the front. In this case, information specifying a layout for block boxes such as the layout information "float: right" can be used.

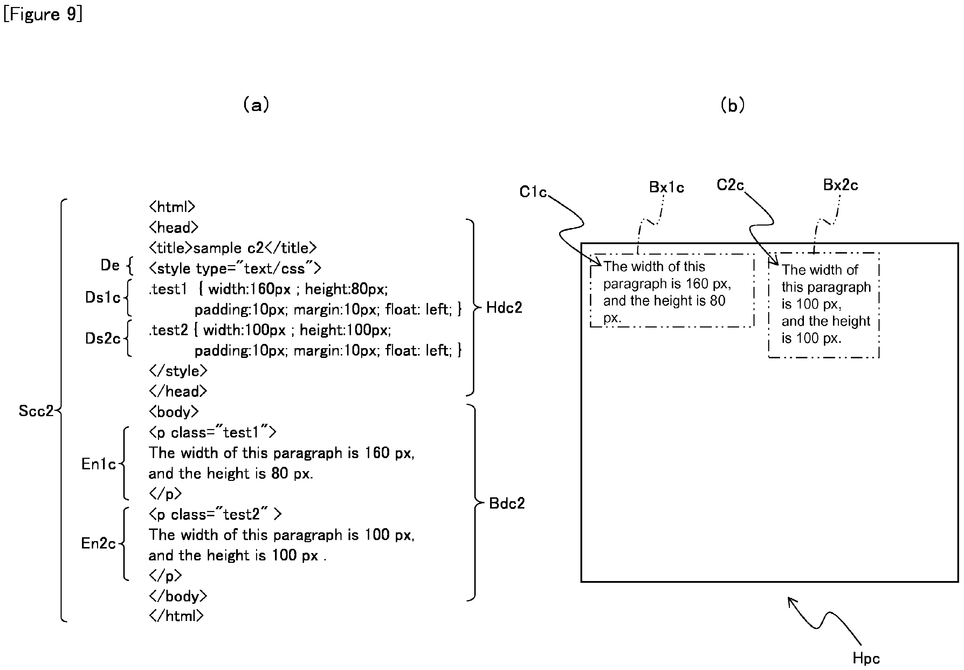

Figure **9** shows an irregular layout rule for a block box when CSS is applied to a block element by the second method. The source code **Scc2** shown in Figure **9(a)** is identical to the source code **Scc1** shown in Figure **8(a)**, other than applying CSS by the second method. Specifically, in the source code **Scc2,** CSS is declared with the declaration element (<style type="text/css">) **De** in a head element **Hdc2,** and a style including a layout for a block box is declared with test 1 attribute **Ds1c** and test 2 attribute **Ds2c** and the declared style is specified by a class attribute of each block element **En1c** and **En2c.** And thereby CSS is applied in the body element **Bdc2.** The display (Figure **9(b)**) based on the source code **Scc2** is identical to the display (Figure **8(b)**) based on the source code **Scc1.**

### (3-2) Layout rule for inline box

Figure **10** is a diagram for explaining a layout rule (regular layout rule) for an inline box when CSS is not applied to an inline element.

According to a regular layout rule for inline boxes, a plurality of inline boxes corresponding to a plurality of inline elements placed in order in the document described in HTML are basically placed so that the inline box in the back corresponding to the inline element in the back follows on the right side of the inline box in the front corresponding to the inline element in the front successively without changing the row. However, if there is no space to place the entire inline box in the back on the right side of the inline box in the front on a display screen **Hpd**, only the front portion of the inline box in the back is placed on the right side of the inline box in the front, and the rest of the inline box in the back is placed below the inline box in the front after changing the row.

For example, the source code **Scd** shown in Figure **10(a)** comprises a head element **Hdd** including the title element "sample d" and a subsequence body element **Bdd.** The body element **Bdd** includes two inline elements **Em1d** and **Em2d** therein. If CSS is not applied to these inline elements, contents **C1d** and **C2d** of the two inline elements **Em1d** and **Em2d** are displayed on the display screen **Hpd** to align with a sentence writing path from the top left end on the display screen **Hpd** according to the regular layout rule as shown in Figure **10(b)****.** In this regard, the content **C1d** of the inline element **Em1d** is "This box is a u inline box. (underlined)", and the content **C2d** of the inline element **Em2d** is "This box is a b inline box. (bolded)".

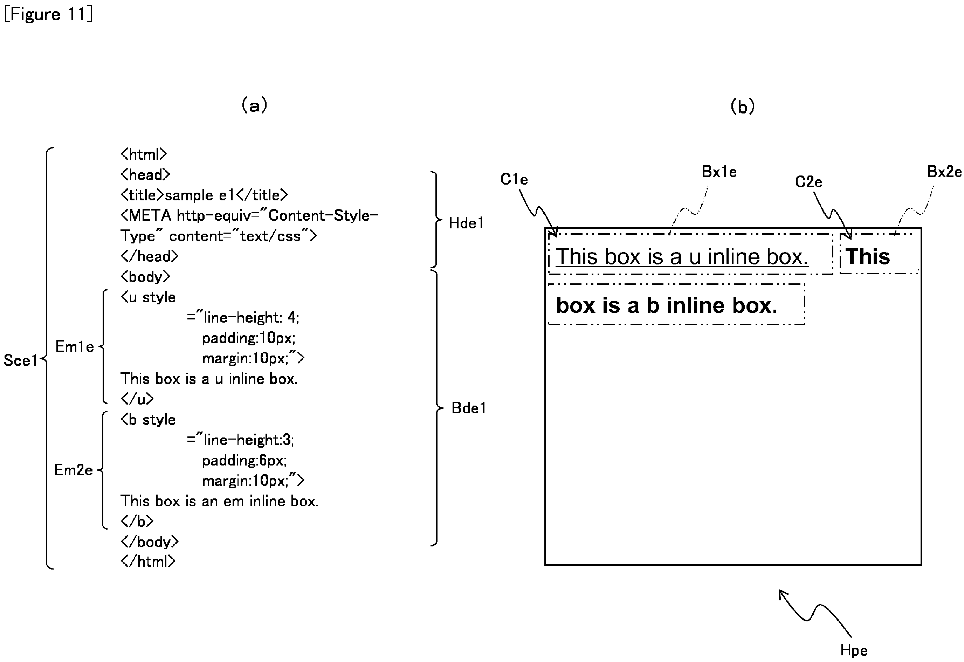

Figure **11** is a diagram for explaining a regular layout rule for an inline box when CSS is applied to an inline element by the first method.

The source code **Sce1** shown in Figure **11(a)** is substantially different from the source code **Scd** shown in Figure **10(a)** in that CSS is applied by the first method (see Figure **3(a)**) to each element **Em1e** and **Em2e** contained in a body element **Bde1** following a head element **Hde1** including the title element "sample e1".

Thus, row spacing, padding, and margin are set according to the applied CSS as shown in Figure **11(b)** for inline boxes **Bx1e** and **Bx2e** corresponding to the inline elements **Em1e** and **Em2e.**

However, a layout for inline boxes is not specified by CSS in the corresponding inline elements **Em1e** and **Em2e.** Thus, the inline boxes **Bx1e** and **Bx2e** corresponding to each inline element **Em1e** and **Em2e** are placed so that the inline box **Bx2e** corresponding to the inline element **Em2e** in the back is placed on the right side of the inline box **Bx1e** corresponding to the inline element **Em1e** in the front along the sentence writing path in the same manner as a case where CSS is not set according to a regular layout rule for inline boxes as shown in Figure **11(b)****.** However, if there is no space to place the entire inline box **Bx2e** on the right side of the inline box **Bx1e**, the portion of the inline box **Bx2e** sticking out from a display screen **Hpe** is placed on the next line. Also, in this case, the inline boxes **Bx1e** and **Bx2e** are not displayed on the display screen **Hpe.** Contents **C1e** and **C2e** are displayed along the sentence writing path so that the contents fit within the corresponding inline boxes **Bx1e** and **Bx2e.**

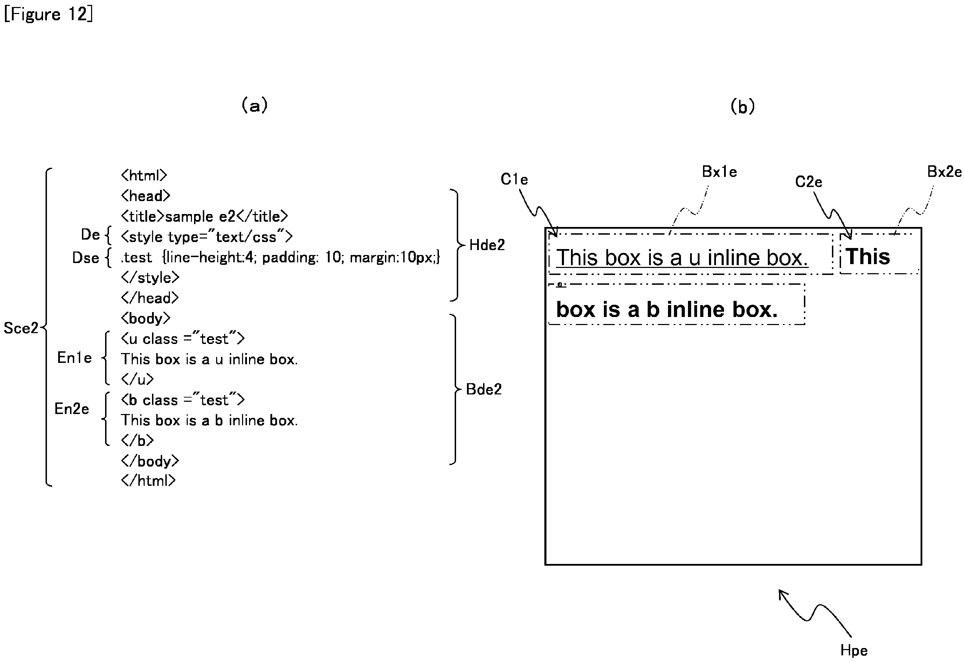

Figure **12** shows a regular layout rule for inline boxes when CSS is applied to inline elements by the second method. The source code **Sce2** shown in Figure **12(a)** is identical to the source code **Sce1** shown in Figure **11(a)****,** other than applying CSS by the second method. Specifically, in the source code **Sce2,** CSS is declared with the declaration element (<style type="text/css">) **De** and a style to be applied is declared with test attribute **Dse** in a head element **Hde2,** and the declared style attribute is specified by a class attribute of inline element **En1e** and **En2e.** And thereby CSS is applied in the body element **Bde2.** The display (Figure **12(b)**) based on the source code **Sce2** is identical to the display (Figure **11(b)**) based on the source code **Sce1.**

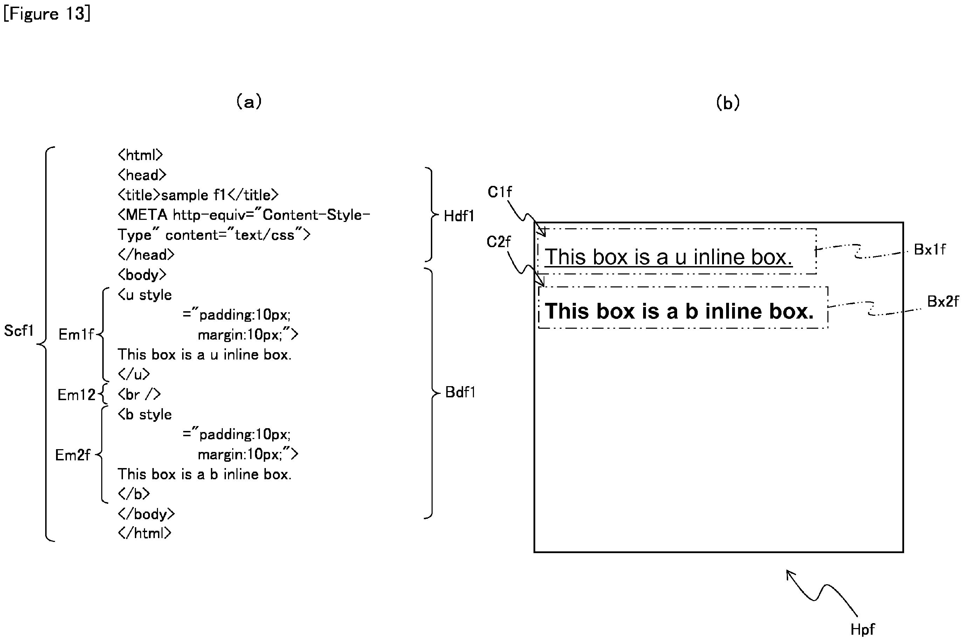

Figure **13** is a diagram for explaining an irregular layout rule for an inline box when CSS is applied to an inline element by the first method and a br tag is used to specify a layout.

The source code **Scf1** shown in Figure **13(a)** is fundamentally different from the source code **Sce1** shown in Figure **11(a)** in terms of comprising two inline elements **Em1f** and **Em2f** contained in a body element **Bdf1** following a head element **Hdf1** including the title element "sample f1" as well as a br tag "<br/>" **Em12** between the inline elements **Em1f** and **Em2f** placed to specify the layout for inline boxes. Specifically, as shown in Figure **13(b)****,** the inline box **Bx2f** in the back is placed below the inline box **Bx1d** in the front when there is no space to place the entire inline box **Bx2f** in the back for the trailing inline element **Em2f** on the right side of the inline box **Bxlf** in the front corresponding to the inline element **Em1f** described first.

Also in this case, contents **C1f** and **C2f** are displayed on a display screen **Hpf** so that the contents fit within the corresponding inline boxes **Bx1f** and **Bx2f,** while the inline boxes **Bx1f** and **Bx2f** are not displayed.

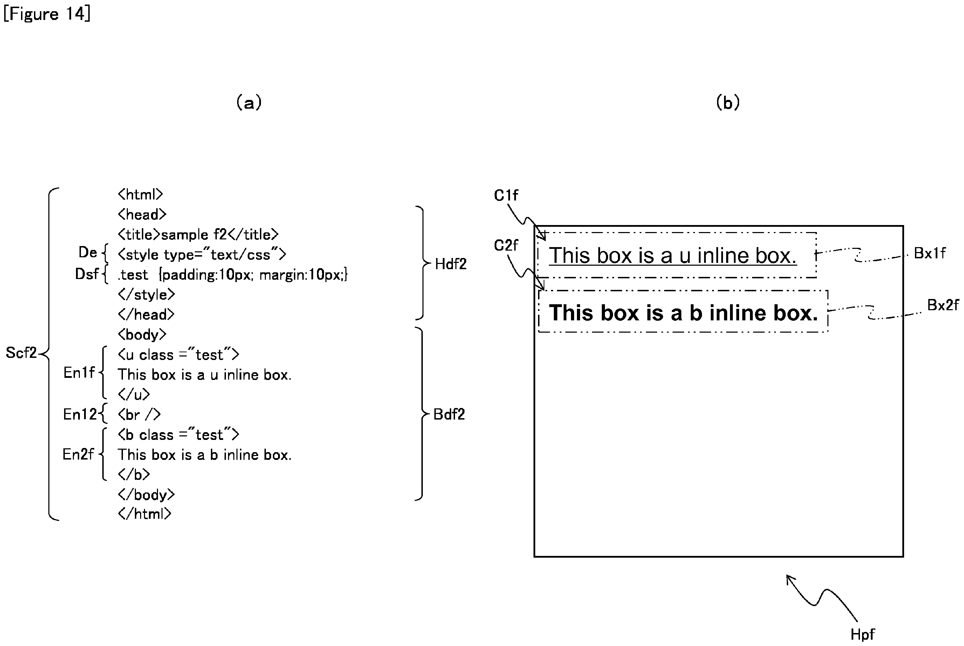

Figure **14** shows an irregular layout rule for an inline box when CSS is applied to an inline element by the second method and a br tag is used for specifying a layout. The source code **Scf2** shown in Figure **14(a)** is identical to the source code **Scf1** shown in Figure **13(a)****,** other than applying CSS by the second method. Specifically, In the source code **Scf2,** CSS is declared with the declaration element (<style type="text/css">) **De** and a style that is not a layout for an inline box is declared with test attribute **Dsf** in a head element **Hdf2,** and the declared style is specified by a class attribute of each of the elements **En1f** and **En2f.** And thereby CSS is applied in the body element **Bdf2.** Furthermore, the layout for the inline boxes **Bx1f** and **Bx2f** is specified by a br tag "<br/>" **En12** positioned between the two inline elements **En1f** and **En2f.**

The display (Figure **14(b)**) based on the source code **Scf2** is identical to the display (Figure **13(b)**) based on the source code **Sce1.**

An irregular layout rule for inline boxes is not limited to a rule that places a new inline box below an existing inline box as discussed above, but can be freely set with a specific tag or with CSS in some cases. For example, a new inline box can be placed on the top side or the like of an existing inline box.

### (4) Home page creation method

A method of creating a home page by a user using the HP creation assisting device **10** shown in Figure **1** is now explained.

Since a box is generated according to a given layout rule on a display screen by all the HTML elements in a source code, and the contents of the HTML elements are displayed within the boxes as discussed above, the HP creation assisting device **10** is configured to set a region for displaying a content as a box on an editing screen **Se** based on a user operation and to generate a description of an HTML element corresponding to the content created within the box according to a layout rule.

### (4-1) Explanation of editing screen

Figure **15** is a diagram showing a home page editing screen provided by the HP creation assisting device **10.**

The editing screen **Se** comprises an operation screen **Reo** for creating a content of a home page, a preview screen **Rep** for displaying the created content, a material selection screen **Res** for selecting a material used in editing the home page, and a source screen **Rce** for editing a source code.

A plurality of operation buttons **Bu1** to **Bu6** and a plurality of value inputting regions **V1** to **V2, P1** to **P4,** and **M1** to **M4** for inputting a numerical value are placed on the operation screen **Reo.**

The operation button **Bu1** is a button for creating a new block box. The operation button **Bu2** is an editing button for inputting a text as a content within a created block box. The operation button **Bu3** is a button for copying a selected box. The operation button **Bu4** is a button for deleting a selected box. The operation button **Bu5** is a lock button for denying individual operation on each of the plurality of boxes contained within a box. The operation button **Bu6** is a button for switching between displaying and not displaying a line (outer line) representing the contour of a box (outer edge of a padding region). The function of the operation button **Bu5** is explained in more detail as an invention for switching the operation on a region (referred to as a block in embodiment 3) for placing contents between batch operation and individual operation in embodiment 3.

The value inputting region **V1** is a region for inputting a numerical value indicating the width of a box (value obtained by adding, to the width of the content region, the size of the left and right inside margins thereof, i.e., width of left and right padding regions thereof). The value inputting region **V2** is a region for inputting a numerical value indicating the height of a box (value obtained by adding, to the height of the content region, the size of the top and bottom inside margins thereof, i.e., width of the top and bottom padding regions thereof). The value inputting regions **P1** to **P4** are regions for inputting a numerical value for setting the inside margin (width of a padding region) of a box. The inside margin on the left, top, right, and bottom sides of a box is set with the numerical values input into the value inputting regions **P1, P1, P3,** and **P4.** The value inputting regions **M1** to **M4** are regions for inputting a numerical value to set the outside margin (width of a margin region) of a box. The outside margin on the left, top, right, and bottom sides of a box is set with the numerical values input into the value inputting regions **M1, M2, M3,** and **M4.**

The preview screen **Rep** displays a created content and a box that is set for the content. However, a box can be displayed or not displayed by operating the operation button **Bu6.**

The material selection screen **Res** displays, for example, a plurality of materials **Ce1** to **Ce4,** which can include materials that are created in advance with the HP creation assisting device **10,** materials that are downloaded from an Internet site, or materials that are copied from a recording medium. These materials are used as a content on the editing screen **Se.** A source code for displaying the material on a display screen as a content of a home page is stored in the memory **12** for each material. The material is not limited to those shown in Figure **15** and the like. The material can be anything that can be utilized as a content of a home page.

The source screen **Rce** displays a source code matching the creation stage of a content on the editing screen **Se.** In the initial state before content creation, the source screen **Rce** displays a source code **Sr0** comprising a head element **Srh0** including a declaration (abbreviated) for applying CSS and an empty body element **Srb0.**

The editing screen **Se** that has been explained using Figure **15** is one example of an editing screen. The arrangement of the operation buttons **Bu1** to **Bu6,** and the placement and the shape of the preview screen **Rep,** source scree **Rce,** and material selection screen **Res** are not limited to those shown in Figure **15****.** The preview screen **Rep** and the source screen **Rce** can be placed from left to right instead of the alignment from top to bottom. The material selection screen **Res** is not required. The operation region **Reo** with operation buttons placed therein does not necessarily need to be placed at a determined position. The operation buttons can be configured to appear at any position on the editing screen **Se** by an operation such as a right click of a mouse.

### (4-2) Creation of source code of block element

First, a case is explained where a user creates a home page comprising two contents **C1b** and **C2b** placed on top and bottom as shown in Figure **6(b)** (or Figure **7(b)**).

A user opens the editing screen **Se** of the HP creation assisting device **10** and operates the creation button **Bu1.** The operation of the creation button **Bu1** creates a new block box **Br1a** whose width extends fully on the preview screen **Rep** of the editing screen **Se** as shown in Figure **16****.** A source code **Sr1a** reflecting the creation of the new block box **Br1a** is generated on the source screen **Rce.**

In the body element of the source code **Sr1a,** a description corresponding to the new block box **Br1a** is formed as a div element "<div></div>" **Er1a.** A description corresponding to a block box is not limited to a div element without any meaning (style). While this may be another block element with a meaning such as a p element, the HP creation assisting device **10** basically uses a div element without a meaning in a newly created block element so as not to restrict the degree of freedom upon giving a block element a meaning using a style sheet such as CSS with a class attribute at a later time.

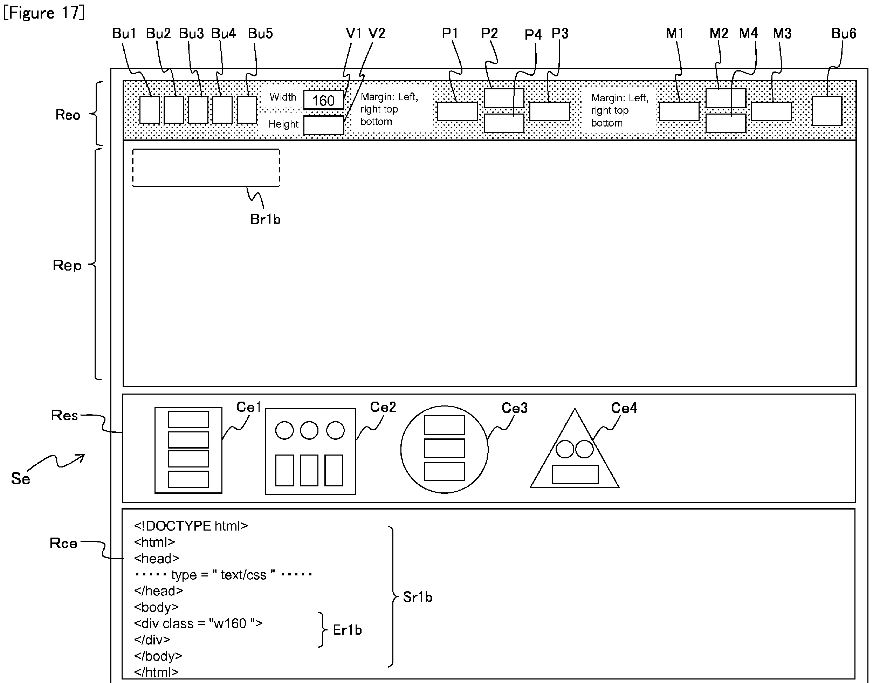

If a numerical value "160" is input into the value inputting region **V1** on the editing screen **Se** in this state, the width of the block box **Br1a** is set. The block box **Br1a** (see Figure **16**) displayed on the preview screen **Rep** is changed thereby to a block box **Br1b** with a set width as shown in Figure **17****.** In the source screen **Rce,** a source code **Sr1b** comprising a div element "<div class = "w160"></div>" **Er1b** is created by editing the div element **Er1a** of the source code **Sr1a.**

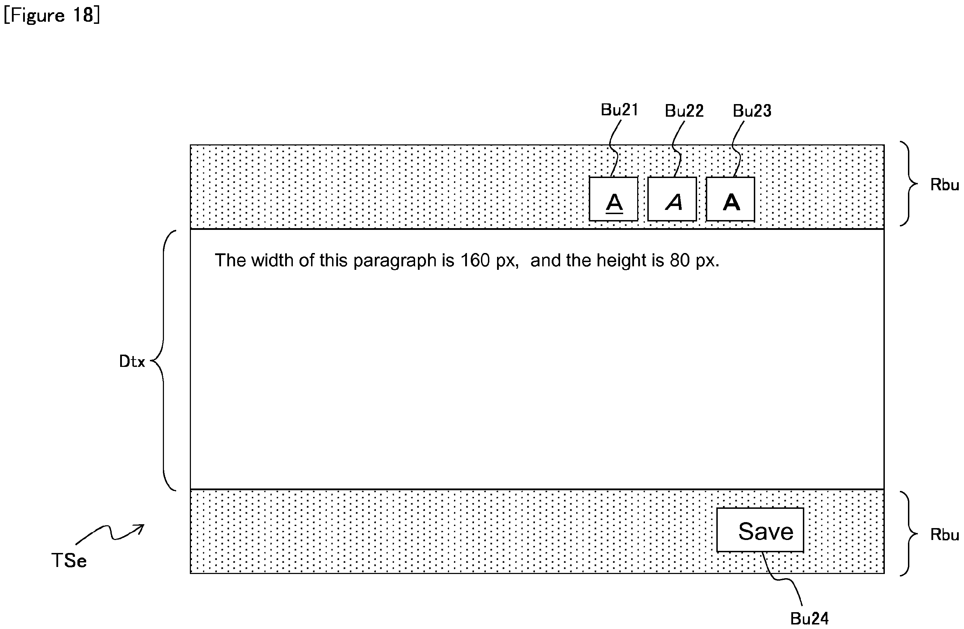

When a user selects the newly created block box **Br1a** as a target for inputting a text by a click operation on the preview screen **Rep** and operates the editing button **Bu2,** a text editing screen **TSe** is displayed to enable input of text information as shown in Figure **18****.**

The text editing screen **TSe** comprises a text inputting region **Dtx** and a button placement region **Rbu** comprising operation buttons **Bu21** to **Bu24.** The operation button **Bu21** is a button for underlining a selected portion of a text. The operation button **Bu22** is a button for italicizing a selected portion of a text. The operation button **Bu23** is a button for bolding a selected portion of a text. The operation button **Bu24** is a save button for displaying the input text data on the block box **Br1b.** However, the operation buttons are not limited thereto. A button for setting the text color or background color, a button for setting other styles for a text and the like can be provided.

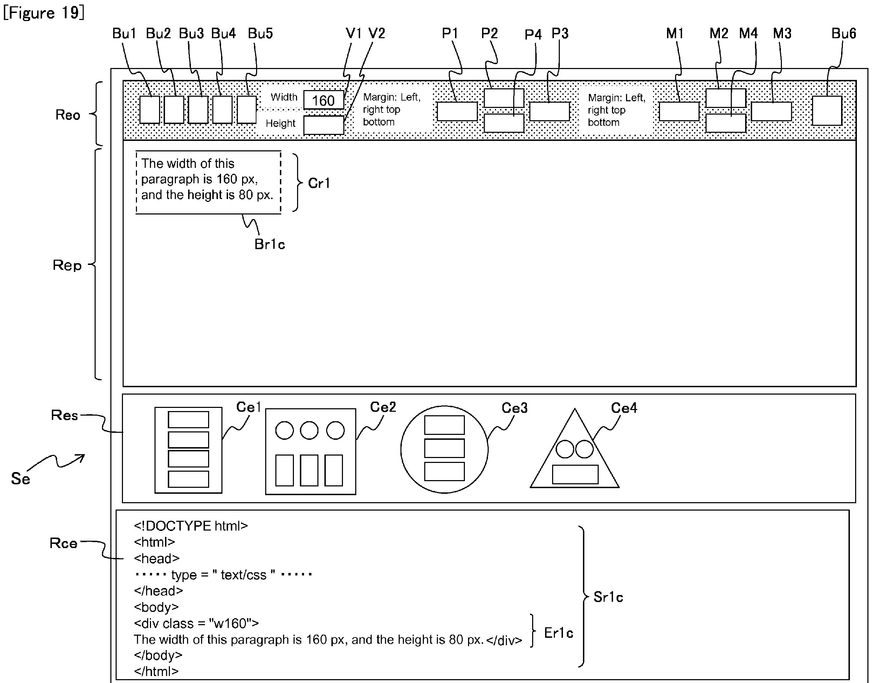

When a user inputs, for example, "The width of this paragraph is 160 px, and the height is 80 px" as a content into the text inputting region **Dtx,** and operates the save button **Bu24,** the new block box **Br1b** (see Figure **17**) displayed on the preview screen **Rep** is changed to a block box **Br1c** comprising the content "The width of this paragraph is 160 px, and the height is 80 px." **Cr1,** and the source code **Sr1b** is changed to a source code **Sr1c** on the source screen **Rce** as shown in Figure **19****.** In the source code **Sr1c,** the div element "<div class = "w160"></div>" **Er1b** within the body element of the source code **Sr1b** is changed to a div element "<div class = "w160">The width of this paragraph is 160 px, and the height is 80 px.</div>" **Er1c.**

When only one of width and height of a block box is specified, the block box extends in the direction for which the size of width or height is not specified with an input of a text if a region occupied by the text does not fit within the block box due to the input of the text into the block box.

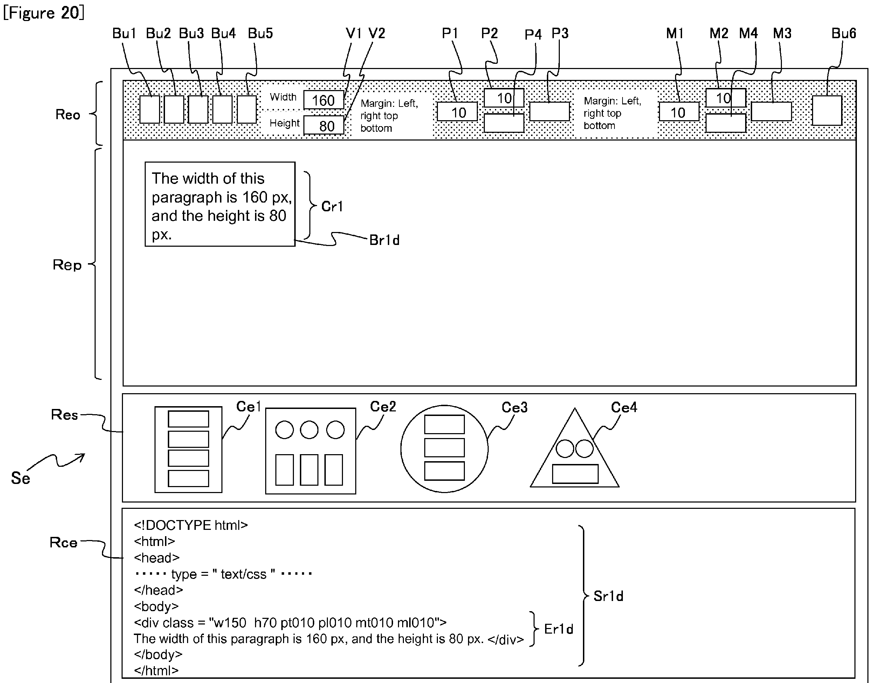

If the numerical values "80", "10", "10", "10", and "10" are input into the value inputting regions **V2, P1, P2, M1,** and **M2** of the editing screen **Se,** respectively, the height, left inside margin, top inside margin, left outside margin, and the top outside margin of the block box **Br1c** are set, which changes the new block box **Br1c** (see Figure **19****)** with only a set width to a new block box **Br1d** with a set width, height, left and top inside margins, and left and top outside margins in the preview screen **Rep,** and changes the source code **Sr1c** to a source code **Sr1d** in the source screen **Rce** as shown in Figure **20****.** In the source code **Sr1d,** the description of a div element **Er1d** has changed to "<div class = "w150 h70 pt010 pl010 mt010 ml010">The width of this paragraph is 160 px, and the height is 80 px.</div>" to reflect the inputs of numerical values on the editing screen **Se.**

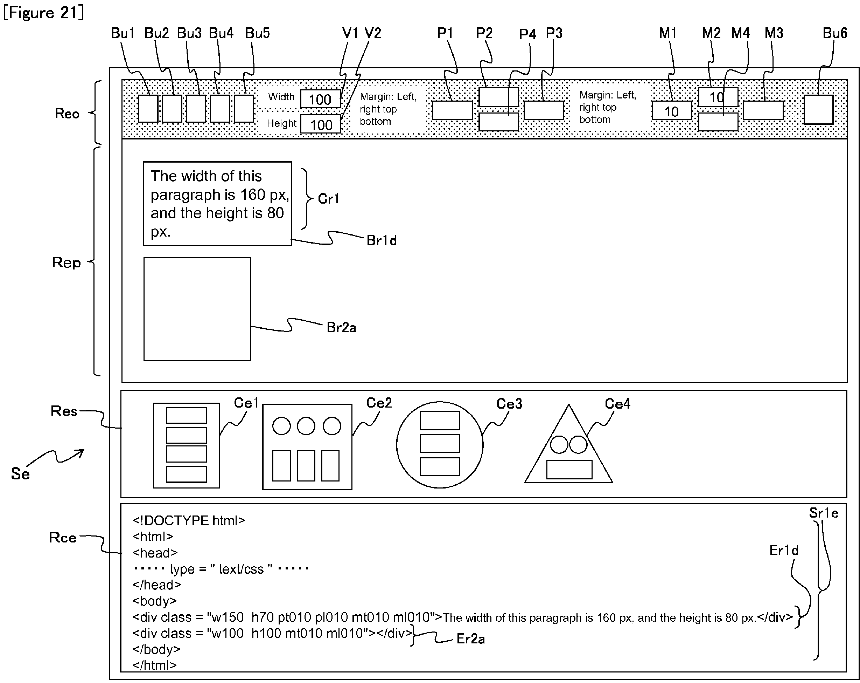

If the operation button **Bu1** is pressed, for example, to create a second content thereafter, a new block box is placed below the first block box **Br1d** as shown in Figure **16****.** If the new block box is set to width "100", height "100", left outside margin "10", and top outside margin "10", the new block box becomes a block box **Br2a** that is set to width "100", height "100", left outside margin "10", and top outside margin "10" as shown in Figure **21****.** At this time, the source code **Sr1d** (see Figure **20**) is changed to a source code **Sr1e** on the source screen **Rce** in accordance with the generation of a new block box. Since the placement of the new block box **Br2a** relative to the existing block box **Br1d** in this case is a placement according to a regular layout rule as explained in Figures **6** and **7****,** a div element **Er2a** containing no information specifying the layout for the block box is generated as an element corresponding to the block box **Br2a** in the source code **Sr1e.** The code of the div element **Er2a** is "<div class = "w100 h100 mt010 ml10"></div>".

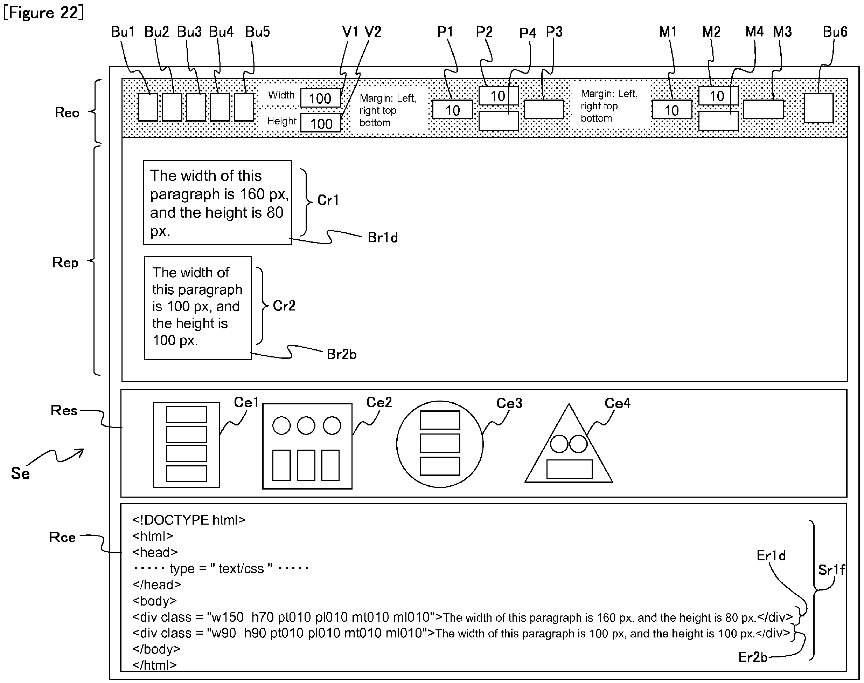

When a text is then input into the newly created block box **Br2a,** and the left inside margin is set to "10" and the top inside margin is set to "10", a home page with contents **Cr1** and **Cr2** placed on the top and bottom is created on the preview screen **Rep,** and the source code **Sr1e** (see Figure **21****)** is changed to a source code **Sr1f** due to a change from the div element **Er2a** to a div element **Er2b** in the source screen **Rce** as shown in Figure **22****.** In this regard, the code of the div element **Er2b** is "<div class = "w90 h90 pt010 pl010 mt010 ml010">The width of this paragraph is 100 px, and the height is 100 px.</div>".

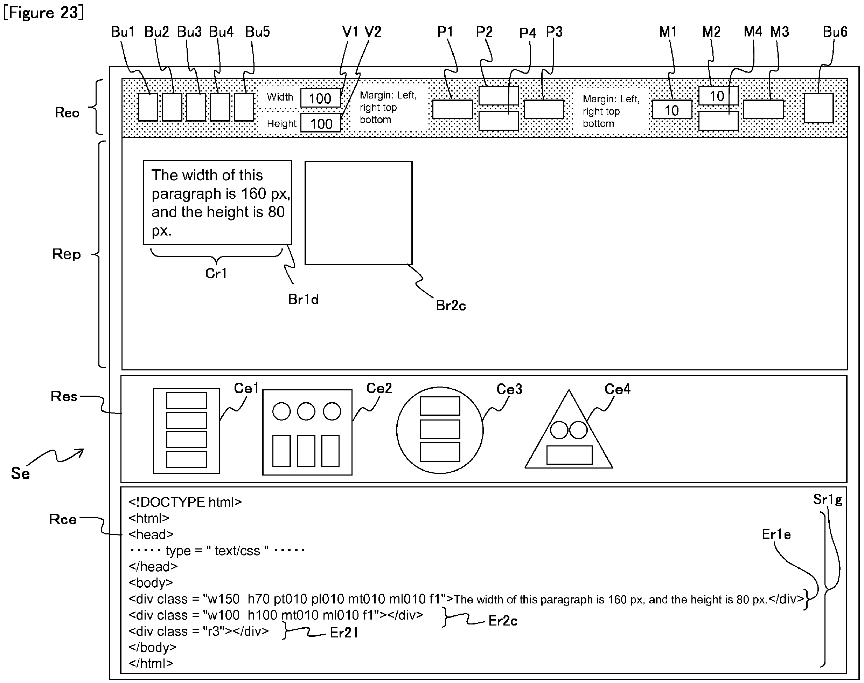

Meanwhile, when a user creates a home page comprising two contents **C1c** and **C2c** placed on the left and right as shown in Figure **8(b)** (or Figure **9(b)**), if the new block **Br2a** is created below the existing block box **Br1d** as shown in Figure **21****,** and then the new block box **Br2a** is moved to the right side of the existing block box **Br1d** by dragging with a mouse or the like, the source code **Sr1e** is changed to a source code **Sr1g** on the source screen **Rce** as shown in Figure **23****.** The new block box **Br2a** after the move is considered block box **Br2c** for convenience of explanation.

In this case, the placement of the new block box **Br2c** after the movement relative to the existing block box **Br1d** is a placement according to one of the irregular layout rules. Thus, a div element **Er2c** comprising information "f1" for specifying the layout of the block box is generated as an element corresponding to the block box **Br2c** in the source code **Sr1g.** The description of the div element **Er2c** is "<div class = "w100 h100 mt010 ml10 f1"></div>".

The div element **Er1d** corresponding to the existing block box **Br1d** is also rewritten into a div element **Er1e,** which is written to add the information "f1" specifying the layout for the block box to the description of the div element **Er1d.** Furthermore a div element **Er21** for blocking the effect due to the information "f1" for forcibly placing a block box side by side is generated as an HTML element following the div element **Er2c.** The description of the div element **Er21** is "<div class="r3"><div>".

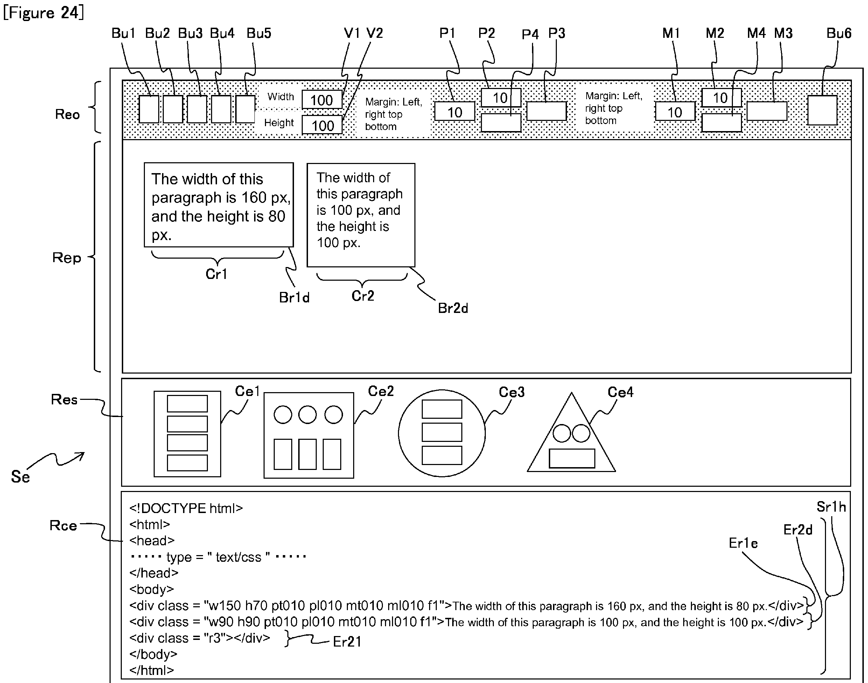

A text is then input into the newly created block box **Br2c,** and the left inside margin is set to "10" and the top inside margin is set to "10" to create a home page with contents **Cr1** and **Cr2** placed on the left and right, while the source code **Sr1g** is simultaneously changed to a source code **Sr1h** as shown in Figure **24****.** Specifically, the div element **Er2c** changes to a div element **Er2d** "<div class = "w90 h90 pt010 pl10 mt010 ml10 f1">The width of this paragraph is 100 px, and the height is 100 px.</div>".

Editing of a block box such as inputting a text within the block boxes **Br1d** and **Br2c** can be performed any time after the creation of the block boxes. Clicking on a region of a block box to select a target block box for text input and then pressing the editing button **Bu2** displays the text editing screen **TSe,** enabling input of a text into the selected block box.

The above explanation of content creation does not show an instance where another block box is placed in a block box, but editing operations such as inputting a text into each block box when at least one other block box is contained in a block box is performed in the same manner as when a block box does not contain another block as discussed above. In this regard, in a method of placing a block box inside a block box, a block box is placed within a block box by pressing the creation button **Bu1** while a block box is selected, for example, by clicking. When the creation button **Bu1** is pressed without selecting an existing block box, a new block box is placed below an existing block box.

The placement of hierarchical block boxes where a block box is contained in another block box can be a multi-hierarchy placement in which a block box is contained in another block box, and the another block box is further contained in another block box.

### (4-3) Creation of source code of inline element

For example, when a user creates a home page comprising two contents **C1e** and **C2e** as shown in Figure **11(b)** (or Figure **12(b)**), the user operations the creation button **Bu1.** By the operation of the creation button **Bu1,** a new block box **Br1a** is created on the editing screen **Se,** and the newly created block box **Br1a** is displayed on the preview screen **Rep** of the editing screen **Se** as shown in Figure **16****.** A div element "<div></div>" **Er1a** corresponding to the new block box **Br1a** is added to the body element of the source code **Sr1a** in the source screen **Rce.**

If, for example, the numerical values "530", "80", "10", "10", "10", and "10" are input into the value inputting regions **V1, V2, P1, P2, M1,** and **M2** of the editing screen **Se** in this state, the width, height, left inside margin, top inside margin, left outside margin, and top outside margin of the block box **Br1a** are set, which results in display of a new block box **Br3** with a set width, height, left inside margin, top inside margin, left outside margin, and top outside margin on the preview screen **Rep** as shown in Figure **25****.** A div element "<div class = "w520 h70 pt010 pl010 mt010 ml010"></div> **Er3** is generated in a source code **Sr3** displayed on the source screen **Rce.** As discussed above, the width and height of a block box indicated by a source code are values subtracting the set values of the left and right and top and bottom inside margins from the width and height shown in the value inputting regions **V1** and **V2** on the editing screen **Se** due to the specification of the device.

Next, when a user selects the newly created block box **Br3** by clicking on the preview screen **Rep** as a target of text input and operates the editing button **Bu2,** the text editing screen **TSe** is displayed, enabling the input of text information.

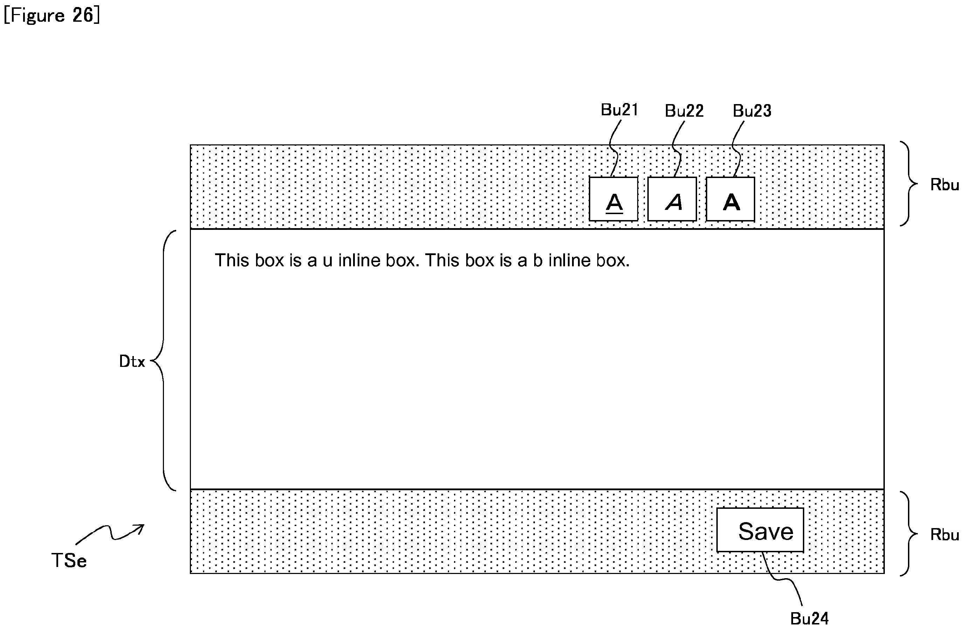

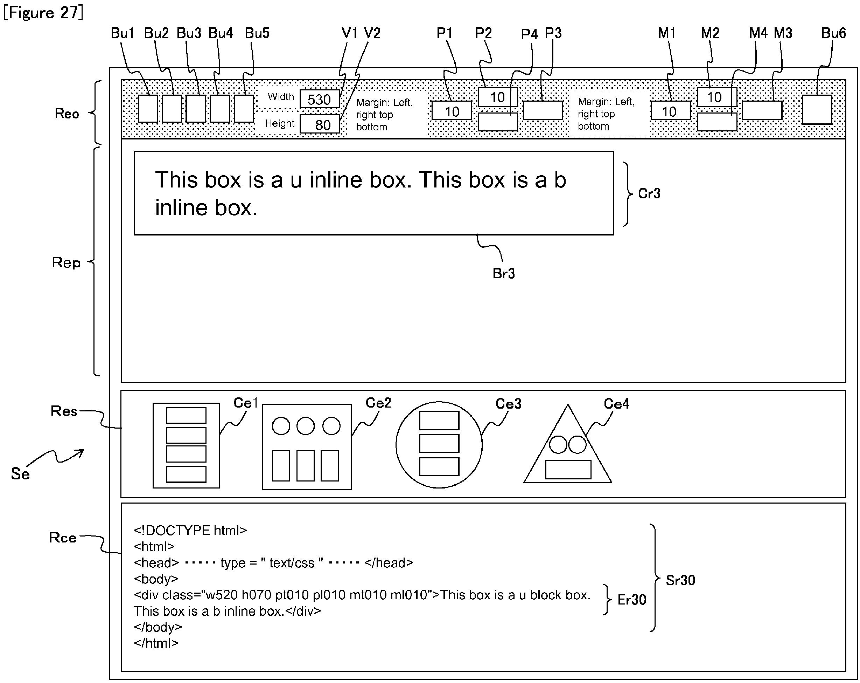

If for example the content "This box is a u inline box. This box is a b inline box." is input into a text inputting region **Dtx** on the text editing screen **TSe** as shown in Figure **26****,** a content "This box is a u inline box. This box is a b inline box." **Cr3** is generated in the block box **Br3** on the preview screen **Rep** as shown in Figure **27****.** When the content **Cr3** is generated, a source code **Sr30** displayed on the source screen **Rce** on the editing screen **Se** includes the div element "<div class = "w520 h70 pt010 pl010 mt010 ml010">This box is a u inline box. This box is a b inline box.</div>" **Er30**

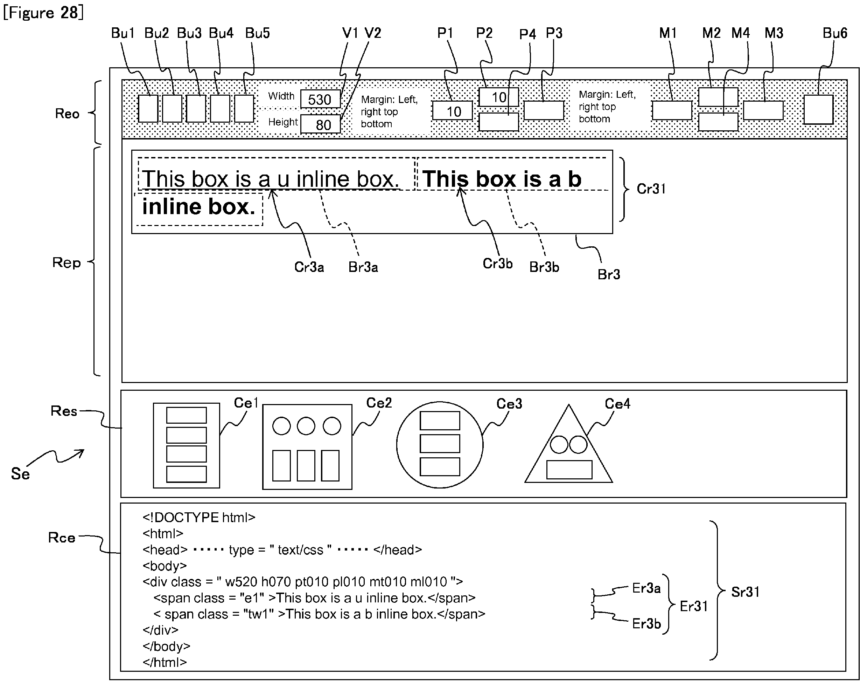

When the description for the first half of the content "This box is a u inline box." is underlined with the operation button **Bu21** and the description for the second half "This box is a b inline box." is bolded with the operation button **Bu23** followed by the operation of the save button **Bu24,** content **Cr31** comprising two contents **Cr3a** and **Cr3b** is displayed inside the new block box **Br3** displayed on the preview screen **Rep** as shown in Figure **28****.** An inline box corresponding to a tag specifying a style is generated by setting the style (underlined characters, bolded characters, or the like) of the content **Cr3** of a block element displayed within the block box **Br3** in this manner.

In this case, the two contents **Cr3a** and **Cr3b** are contents of an inline element, and the contents are displayed within the corresponding inline boxes **Br3a** and **Br3b.**

The placement of the inline boxes **Br3a** and **Br3b** matches the regular layout rule, in which the inline box corresponding to the trailing inline element successively is placed on the right side of the inline box corresponding to the preceding inline element on the same line. Thus, the source code **Sr31** is described so that the descriptions of inline elements **Er3a** and **Er3b** do not contain information indicating the positional relationship of the inline boxes **Br3a** and **Br3b** as shown in Figure **28****.** Attribute value "e1" of the class attribute of a span element in the inline element **Er3a** is an attribute value specifying an underline by CSS. Attribute value "tw1" of the class attribute of a span element in the inline element **Er3b** is an attribute value specifying bold by CSS.

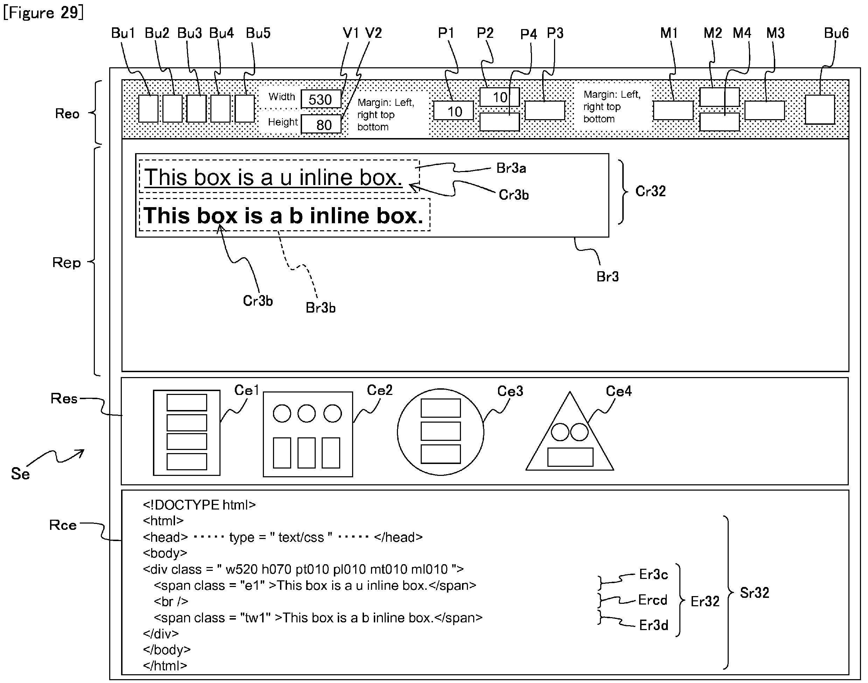

Meanwhile, when the two contents **Cr3a** and **Cr3b** are moved to align on the top and bottom as shown in Figure **29** by dragging the content **Cr3b** with a mouse while the two contents **Cr3a** and **Cr3b** are aligned with the writing path as shown in Figure **28****,** the contents follow one of the irregular layout rules of inline boxes. In this case, as shown in Figure **29****,** a content **Cr32** comprising the two contents **Cr3a** and **Cr3b** placed on top and bottom is displayed inside the new block box **Br3** displayed on the preview screen **Rep**. In a source code **Sr32,** descriptions of inline elements **Er3c** and **Er3d** comprise information indicating the positional relationship of the inline boxes **Br3a** and **Br3b.** Specifically, span elements **Er3c** and **Er3d** are generated such that the span elements **Er3c** and **Er3d** sandwich information (br tag "<br />") **Ercd** specifying the layout of the inline boxes **Br3c** and **Br3d,** as an inline element. Attribute value "e1" of the class attribute of a span element in the inline element **Er3c** is an attribute value specifying an underline by CSS. Attribute value "tw1" of the class attribute of a span element in the inline element **Er3d** is an attribute value specifying bold by CSS.

Edits such as text input into the inline boxes **Br3a** and **Br3b** can also be made any time after the inline boxes have been created in the same manner as block boxes.

A process of generating a description of an HTML element corresponding to contents based on positional relationship of the contents on the editing screen **Se** with the computer **10a** of the HP creation assisting device **10** is now explained.

The source codes shown in Figures **15** to **29** are unique to the HP creation supporting device **10.** After the source codes of a home page have been completed with the HP creation assisting device **10,** the unique source codes are automatically converted to a common source code explained in Figures **5** to **14****.**

Specifically, the source code **Sr1f** of a home page shown in Figure **22** is converted to the source code **Scb1** or **Scb2** shown in Figure **6(a)** or **7(a)****.** The source code **Sr1h** of a home page shown in Figure **24** is converted to the source code **Scc1** or **Scc2** shown in Figure **8(a)** or **9(a)****.**

The source code **Sr31** of a home page shown in Figure **28** is converted to the source code **Sce1** or **Sce2** shown in Figure **11(a)** or **12(a)****.** The source code **Sr32** of a home page shown in Figure **29** is converted to the source code **Scf1** or **Scf2** shown in Figure **13(a)** or **14(a)****.**

A case explained as for the aforementioned home page creation methods is a case where, simply by a user designing the home page by creating or moving a content on the preview screen **Rep,** the HP creation assisting device **10** generates a source code of a home page designed by the user. It is understood however that a user can directly edit the source code of a home page.

### (5) Home page creation process

Figure **30** is a diagram showing an HTML element generation process according to a layout rule for a box in a flowchart.

First, when a user operates the input operation unit **13a** of the HP creation assisting device **10,** an operation signal **S** is input into the processor **11** via the input interface **13** from the input operation unit **13a.** The processor **11** performs a computation in accordance with the operation signal **S.** For example, the processor **11** outputs display data **D** to the display unit **14a** via the output interface **14** to display a display screen such as the home page editing screen **Se,** or operates the network controlling unit **16** to communicate data via the network **N** such as the Internet, or accesses data between the external storage device **15a** and the memory **12** via the I/O interface **15** to read or write data from/on the external storage device **15a.**

When a user creates one or more contents constituting a home page on the editing screen **Se** displayed on the display unit **14a** in the HP creation assisting device **10,** the created content is automatically converted to a source code of a home page and whereby the creation of the home page is assisted.

This is specifically explained.

The processor **11** executes a process of displaying the home page editing screen **Se** on the display unit **14a** based on the operation of the input operation unit **13a** by a user and starts the following processes of steps S10 to 18.

The processor **11** determines whether a new box is created on the editing screen **Se** (step S10), and repeats the determining process if a new box is not created. On the other hand, if a new box has been created, the processor determines whether the new box is a block box or an inline box (step S11).

For example, a block box is formed in a process of generating a new box in addition to the existing block box **Br1d** as shown in Figure **21****,** and two inline boxes **Br3a** and **Br3b** are formed inside the block box **Br3** in a process of underlining the first half and bolding the latter half of content **Cr3** within the block box **Br3** as shown in Figure **28****.**

Whether a newly formed box is a block box or an inline box in this manner is determined by whether the created element is a block element or an inline element.

If the new box is a block box, the processor **11** determines whether the new box follows a regular layout rule for block boxes (step S12). If the placement of the new box **Br2a** relative to the existing block box **Br1d** follows a regular layout rule for block boxes as shown in Figure **21****,** the processor **11** generates a source code **Sr1e** described so that the new box is placed by the regular layout rule for block boxes (step S14).

On the other hand, if the placement of the new box **Br2c** does not follow a regular layout rule for block boxes, the processor **11** generates a source code (e.g., source code **Sr1g)** described so that the new box **Br2c** is placed by a rule compatible with the positional relationship of this case among the multiple irregular layout rules as shown in Figure **23** (step S15).

The processor **11** then determines whether an ending operation such as closing the editing screen **Se** has been performed by a user operation (step S18). If an ending operation has been performed, the processor **11** ends the editing process. If not, a process of the processor **11** is returned to the process in step S10.

If a new box is determined to be an inline box in step S11, the processor **11** determines whether the new box follows an regular layout rule for inline boxes (step S13). If the placement of the new inline box **Br3b** relative to the inline box **Br3a** follows a regular layout rule for inline boxes, the processor **11** generates a source code (e.g., source code **Sr31**) described so that the new inline box is placed by a regular layout rule for inline boxes as shown in Figure **28** (step S16).

On the other hand, if the positional relationship of the new inline box **Br3b** relative to the inline box **Br3a** does not follow a regular layout rule for inline boxes as shown in Figure **29**, a source code described so that the new inline box **Br3b** is placed by a rule compatible with the positional relationship of this case among the multiple irregular layout rules is generated (step S17).

It is then determined whether an ending operation such as closing the editing screen **Se** has been performed by a user operation (step S18). If an ending operation has been performed, the editing process is ended. If not, a process of the processor **11** is returned to the process in step S10.

In this manner, in the HP creation assisting device **10** of embodiment 1, the processor **11** creates a box for placing a content of a home page on an editing screen based on a user operation, and determines the positional relationship between a target box which is a target of creation and an existing box adjacent the target box, and edits the description of at least the target box of the target box and the existing box in the source code so that the description is in accordance with a layout rule compatible with the positional relationship among multiple layout rules for specifying the placement of boxes. Thus, a user can create a source code of a home page on which a plurality of contents without information indicating the position to be placed on an editing screen are placed at a desired position simply by specifying the relative positional relationship of boxes for placing contents. As a result, a general user can create an intended home page by a simple operation on an editing screen of a computer.

A case explained in Embodiment 1 is the case where, when a positional relationship between a target box which is a target of creation and an existing box adjacent to the target box does not follow a regular layout rule for these boxes, descriptions for both the target box and the existing box in a source code is edited to be descriptions in accordance with a layout rule compatible with the positional relationship among multiple layout rules specifying the placement of boxes. Meanwhile, if the positional relationship between a target box and an existing box does not follow a regular layout rule, the description for only the target box in the source code can be edited to be a description in accordance with a layout rule compatible with the positional relationship.

A case explained in Embodiment 1 is also the case where a program for assisting the creation of a home page is stored on a user side terminal, but such a program can be stored on a server on the Internet. The user side terminal can transit an operation signal to the server to create the home page and assist the creation of the home page by a user on the server.

In particular, the home page creation process explained in embodiment 1 can be executed by a web application which operates in cooperation between a program installed on a web server and a program in a programming language that operates on a browser on the user side terminal instead of a stand-alone application that is operated by a program installed on the user side terminal as in embodiment 1.

Specifically, an environment is constructed where a web browser (browser) on the user side terminal can access a home page creation assisting site (web server) and a web application can execute a home page creation assisting process on the browser by cooperation bewteen a program operated on the browser and a program for performing a home page creation assisting process on the server side.

In this case, a source code of a home page completed by the home page creation assisting process can be stored on the server side or provided to the user side terminal from the server side.

### (Embodiment 2)

Figure **31** is a diagram for explaining an HP creation assisting device according to embodiment 2 of the present invention.

The HP creation assisting device **20** of embodiment 2 has a computer **20a** for processing information, an input operation unit **13a**, and a display unit **14a** as in the HP creation assisting device **10** in embodiment 1. The computer **20a** comprises a memory **22** instead of the memory **12** of the computer **10a** in embodiment 1. A program for making the processor **11** execute a process that is different from that of the HP creation assisting device **10** in embodiment 1 as a process for assisting the creation of a home page is stored in the memory **22**.

The configuration of the HP creation assisting device **20** in embodiment 2 is identical to the configuration of the HP creation assisting device **10** in embodiment 1 other than the memory **22** of the computer **20a**.

A process of assisting the creation of a home page (hereinafter, the HP creation assisting process) performed by the HP creation assisting device **20** in embodiment 2 is specifically explained hereinafter.

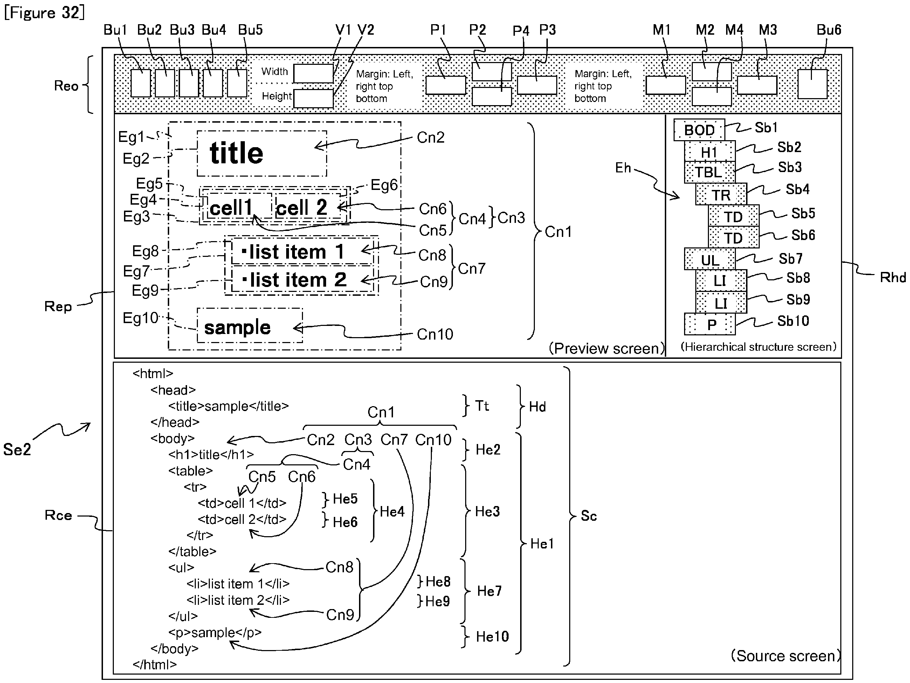

Figure **32** is a diagram showing an editing screen **Se2** that is displayed on a display unit **14a** of the HP creation assisting device **20** in embodiment 2. Elements in Figure **32** assigned with the same symbol as those in Figure **15** are identical to those in the editing screen **Se** of embodiment 1.

The HP creation assisting process performed by the HP creation assisting device **20** in embodiment 2 comprises a process of displaying the editing screen **Se2** for editing a home page on the display unit **14a**, a process of creating (inputting, drawing, pasting, or the like) one or more contents constituting the home page based on an operation signal **S** by a user operation, and a process of simultaneously displaying the status of content creation on the preview screen **Rep**, source screen **Rce**, and hierarchical structure screen **Rhd**. These processes are performed by the processor **11** executing a program stored on the memory **22.** It is understood that a common operation system is stored on the memory **22** for functioning the processor **11** as a text editor or as a browser. A program for performing a process of assisting the creation of a home page in the same manner as the HP creation assisting device **10** in embodiment 1 can be further stored in the memory **22**. In this case, a content can be edited on the preview screen **Rep**. In addition, a source code corresponding to one or more contents that have been edited on the preview screen **Rep** is displayed on the source screen **Rce**, and the hierarchical structure of the one or more contents that have been edited on the preview screen **Rep** is displayed on the hierarchical structure screen **Rhd**. However, to simplify the explanation, the HP creation assisting device **20** in embodiment 2 is assumed to lack a function for performing the HP creation assisting process of the HP creation assisting device **10** in embodiment 1.

In this regard, in the source screen **Rce**, an HTML element contained in a source code **Sc** that has been input into a text editor is displayed. In the preview screen **Rep**, contents of one or more elements contained in the source code **Sc** are displayed. In the hierarchical structure screen **Rhd**, a hierarchical structure **Eh** of the one or more contents is displayed.

For example, when 10 contents **Cn1** to **Cn10** are created by an input of a source code on the editing screen **Se2** of the HP creation assisting device **20**, in the source screen **Rce**, the source code **Sc** comprising HTML elements **He1** to **He10** specifying the contents **Cn1** to **Cn10** are displayed. In the preview screen **Rep**, the contents **Cn1** to **Cn10** of the HTML elements **He1** to **He10** contained in the body portion of the source code **Sc** are displayed as shown in Figure **32**. In the hierarchical structure screen **Rhd**, the hierarchical structure **Eh** of the HTML elements **He1** to **He10** contained in the body portion of the source code **Sc** is displayed with symbols **Sb1** to **Sb10** indicating a hierarchical node.

In the HP creation assisting device **20** in embodiment 2, the corresponding HTML elements **He1** to **He10** contained in the source code **Sc** displayed on the source screen **Rce**, the contents **Cn1** to **Cn10** displayed on the preview screen **Rep**, and the hierarchical node-indicating symbols **Sb1** to **Sb10** displayed on the hierarchical structure screen **Rhd** are associated with one another.

Thus, if a user clicks on any content on the preview screen **Rep**, any HTML element on the source screen **Rce**, or any symbol on the hierarchical structure screen **Rhd**, portions corresponding to the clicked content, HTML element, or symbol are highlighted on the screens other than the clicked screen.

A general home page contains a very large number of HTML elements. With such association, a user can see at a glance where on the home page the HTML element which the user is editing in the source screen **Rce** is positioned or which hierarchy in the hierarchical structure it belongs to.

The technique of identifying the position of a content displayed on a screen of the display unit **14a** for displaying display data **D** from the computer **10** based on a reference position on the screen by the processor **11** and the technique for recognizing the position specified by a pointing device such as a mouse on the screen based on a reference position on the screen by a processor are conventional. The specific explanation thereof is omitted.

The mechanism for associating an HTML element displayed on the source screen **Rce**, content displayed on the preview screen **Rep**, and symbol displayed on the hierarchical structure screen **Rhd** is specifically explained hereinafter.

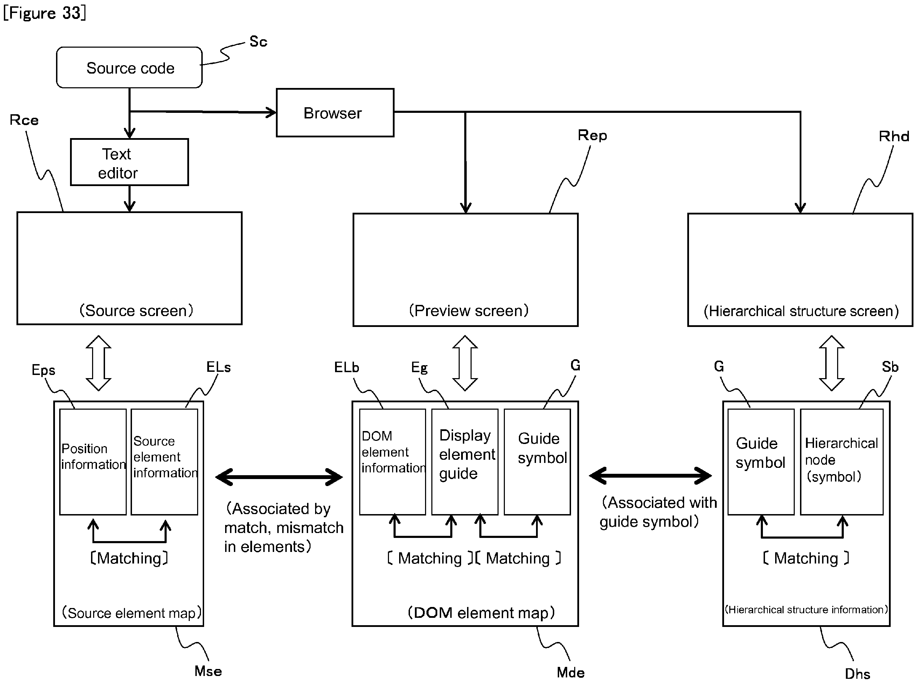

Figures **33** to **36** are diagrams for explaining such a mechanism.

For association between the screens, a source element map **Mse**, a DOM element map **Mde**, and hierarchical structure information **Dhs** are used. These maps are stored in the memory **22**.

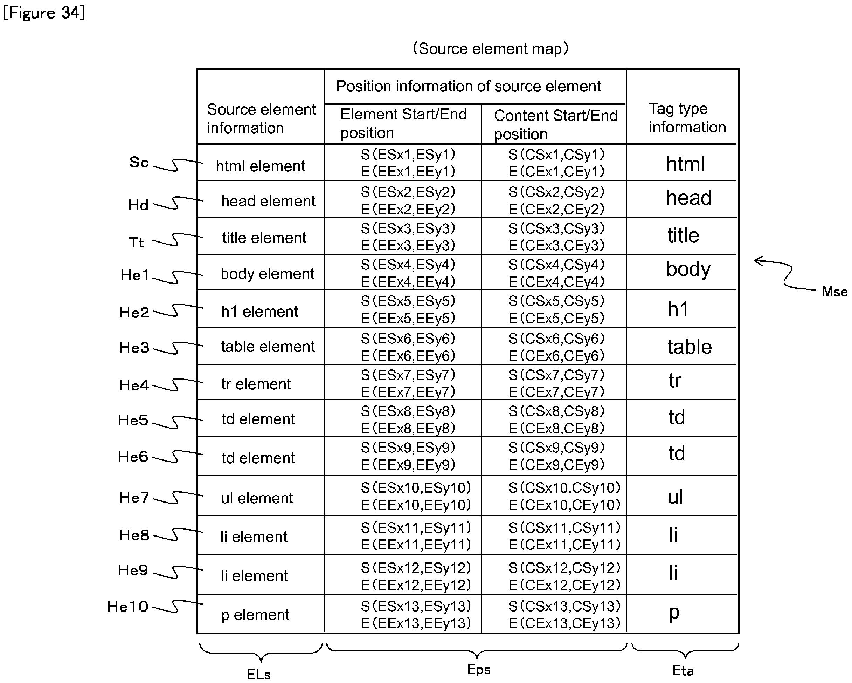

The source element map **Mse** shown in Figure **34** is created based on at least the source code **Sc** that has been input into a text editor. The map comprises source element information **ELs** showing one or more HTML elements (source elements) contained in the source code **Sc** and position information **Eps** showing the position of each source element on the source screen **Rce**. Such a source element map **Mse** is updated so that the source element information **ELs**, position information **Eps** of the source element, and tag type information **Eta** correspond with the latest source code being edited when a source code is input into a text editor. In this regard, a source code from a text editor can be read on a periodic cycle or when a source code being edited changes.

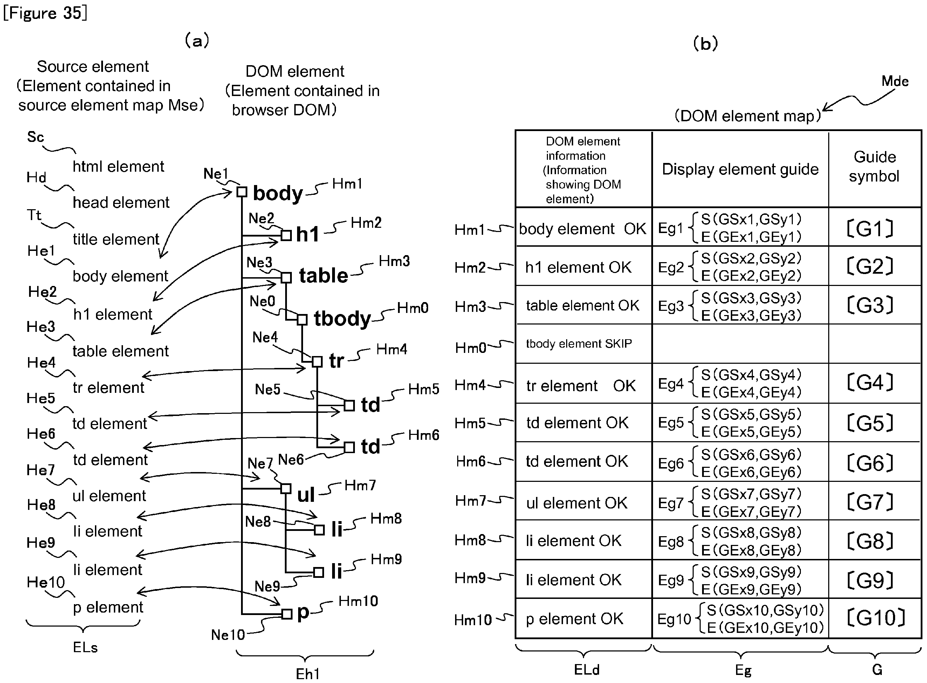

The DOM element map **Mde** shown in Figure **35(b)** is created based on the source element map **Mse** and browser DOM. The browser DOM is a hierarchical structure **Eh1** of an HTML element generated by a browser reading a source code.

The DOM element map **Mde** comprises information (DOM element information) **ELd** showing one or more HTML elements (DOM elements) generated by a browser reading a source code, a display element guide **Eg** created for each DOM element, and a guide symbol G assigned to each display element guide **Eg**. DOM elements **Hm0** to **Hm10**, display element guides **Eg1** to **Eg10**, and guide symbols [**G1**] to [**G10**] correspond to one another.

In this regard, the DOM element information **ELd** shows the HTML elements **Hm1** to **Hm10** recognized when a browser reads the source code **Sc** and HTML element **Hm0** generated by a browser dependent function. A display element guide **Eg** is a rectangular frame set for each content when a browser displays content on the preview screen **Rep**. The display element guide **Eg** has position information showing, for example, the positions of the top left corner and bottom right corner of the rectangular frame. Guide symbol **G** is an identifier for the display element guide **Eg**.

Such a DOM element map **Mde** is updated so that the latest source code being edited corresponds to the DOM element information **ELd**, display element guide **Eg**, and guide symbol **G** by a browser reading a source code. In this regard, a source code can be read by a browser on a periodic cycle, or when the source code being edited changes.

The hierarchical structure information **Dhs** shows the hierarchical structure **Eh** of an HTML in the body portion of the source code **Sc** with a symbol corresponding to each hierarchical node, wherein the hierarchical structure (browser DOM) **Eh1** of an HTML element generated by a browser reading a source code is corrected based on a comparison of a DOM element with a source element. In the hierarchical structure information **Dhs**, the guide symbol **G** assigned to the display element guide **Eg** is matched with the symbol **Sb** representing a hierarchical node **Nd** of the hierarchical structure **Eh**. Such hierarchical structure information **Dhs** is updated so that the relationship between the guide symbol **G** and the symbol **Sb** representing the hierarchical structure **Eh** of an HTML element in the body portion of the source code **Sc** matches the latest source code being edited by a browser reading a source code.

The source element map **Mse**, DOM element map **Mde**, and hierarchical structure information **Dhs** are discussed in more detail hereinafter.

Figure **34** is a diagram for explaining the source element map **Mse**.

The source element map **Mse** is a map where features of HTML elements that can be obtained from the source code **Sc** are stored on the memory **22** in a table format.

The source element map **Mse** contains the source element information **ELs**. The source element information **ELs** shows one or more HTML elements (source elements) contained in the source code **Sc** obtained by analysis of the source code **Sc** as shown in Figure **34**. In this regard, one or more source elements shown by the source code element information **ELs** are specifically the html element (source code itself) **Sc**, head element **Hd**, title element **Tt** contained in the head element **Hd**, body element **He1**, h1 element **He2** contained in the body element **He1**, table element **He3**, tr element **He4**, td element **He5**, td element **He6**, ul element **He7**, li element **He8**, li element **He9**, and p element **He10**. Position information **Eps** of a resource element and tag type information **Eta** indicating the type of tag contained in source elements are recorded with being matched with each source element in a region assigned to the source element map **Mse** on the memory **22** in a table format.

In this regard, the position information **Eps** of source elements comprises information showing the start position and end position of each of the source elements **Sc**, **Hd**, **Tt**, and **He1** to **He10** (element start/end positions) and information indicating the start and end positions of a content of a source element (content start/end position). For the element start/end positions of the source elements **Sc**, **Hd**, **Tt**, and **He1** to **He10**, the first positions S(ESx1, ESy1) to S(ESx13, ESy13) and the last positions of source elements E(EEx1, EEy1) to E(EEx13, EEy13)) of the source elements can be used. For the content start/end positions of the source elements **Sc**, **Hd**, **Tt**, and **He1** to **He10**, the first positions (S(CSx1, CSy1) to S(CSx13, CSy13)) and last positions E(CEx1, CEy1) to E(CEx13, CEy13)) of the content of source elements can be used. Furthermore, tag type information for the source elements **Sc**, **Hd**, **Tt**, and **He1** to **He10** is indicated by "html", "head", "title", "body", "h1", "table", "tr", "td", "td", "ul", "li", "li", and "p".

Figure **35** is a diagram for explaining a DOM element map.

Figure **35** shows only the source element information **ELs** in the source element map **Mse** shown in Figure **34**.

The DOM element map **Mde** is created based on the source element information **ELs** of the source element map **Mse** and the browser DOM (hierarchical structure of HTML elements generated by a browser reading a source code) **Eh1** as shown in Figure **35**.

When, for example, the source code **Sc** displayed on the source screen **Rce** shown in Figure **32** is read by a browser, a browser dependent function recognizes a description corresponding to the body portion of the source code **Sc** as the hierarchical structure **Eh1** of the browser DOM shown in Figure **35(a)**. In the hierarchical structure **Eh1**, a hierarchical node **Ne1** corresponding to the body element **He1** of the source code **Sc** is used as the root node, and the hierarchical nodes **Ne2**, **Ne3**, **Ne7**, and **Ne10** corresponding to the h1 element **He2**, table element **He3**, ul element **He7**, and p element **He10** of the source code **Sc** are used as child hierarchical nodes of the hierarchical node **Ne1**. A hierarchical node **Ne0** corresponding to the tbody element **Hm0** with no corresponding source element in the source code is used as a child hierarchical node of the child hierarchical node **Ne3** by a browser dependent function, and a hierarchical node **Ne4** corresponding to the tr element **He4** of the source code **Sc** is used as a child hierarchical node of the child hierarchical node **Ne0**. Hierarchical nodes **Ne8** and **Ne9** corresponding to the li elements **He8** and **He9** of the source code **Sc** are used as child hierarchical nodes of the child hierarchical node **Ne7**. Furthermore, hierarchical nodes **Ne5** and **Ne6** corresponding to the td elements **He5** and **He6** are used as child hierarchical nodes of the child hierarchical node **Ne4**.

In this regard, the DOM element map **Mde** shows results of comparing HTML elements (source elements) contained in the source element map **Mse** with the HTML elements (DOM elements) constituting the hierarchical structure **Eh1** of the browser DOM (Figure **35(a)**) for each element corresponding to the nodes **Ne0** to **Ne10** of the browser DOM.

Specifically, the DOM element map **Mde** contains individual DOM elements **Hm0** to **Hm10** shown by the DOM element information **ELd**. In this regard, a description of "OK" is recorded with the element name for the DOM elements **Hm1** to **Hm10** matching with the source elements shown by the source element information **ELs** of the source element map **Mse** among the DOM elements shown by the DOM element information **ELd**. A description of "SKIP" is recorded with the element name for the DOM element **Hm0** which does not match with the source element **ELs** of the source element map **Mse**. Furthermore, the DOM elements **Hm1** to **Hm10** matching the source elements are assigned with the display element guides **Eg1** to **Eg10** and the guide symbols [**G1**] to [**G10**].

In this regard, the display element guides **Eg1** to **Eg10** are rectangular frames placed to surround the individual contents **Cn1** to **Cn10** displayed on the preview screen **Rep.** The positions of the top left corner (S(GSx1, GSy1) to S(GSx10, GSy10)) of this rectangular frame and the positions of the bottom right corner (E(GEx1, GEy1) to E(CGx10, CGy10)) of the rectangular frame are recorded in advance in the memory **22**. The guide symbols [**G1**] to [**G10**] are identifiers for the display element guides **Eg1** to **Eg10**.

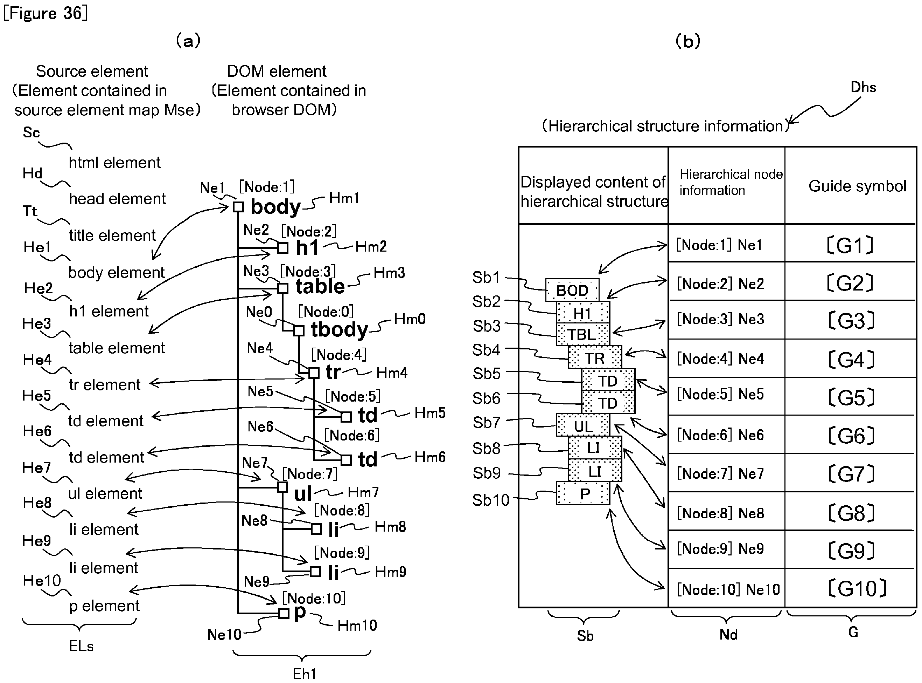

Figure **36** is a diagram for explaining the hierarchical structure information **Dhs**.

In the hierarchical structure information **Dhs** shown in Figure **36(b)**, the guide symbols **G1** to **G10** are matched with the hierarchical nodes **Ne1** to **Ne10** of the DOM elements **Hm1** to **Hm10**, which match the source elements **He1** to **He10** of the source element map **Mse** among the DOM elements **Hm0** to **Hm10** shown by the DOM element information **ELd**. Furthermore, the hierarchical nodes **Ne1** to **Ne10** of the DOM elements **Hm1** to **Hm10** are assigned the symbols "BOD", "H1", "TBL", "TR", "TD", "TD", "UL", "Li", "Li", and "P" indicating the respective nodes.

Specifically, information indicating the symbols **Sb1** to **Sb10** and the guide symbols [**G1**] to [**G10**] are associated with the nodes [Node: 1] **Ne1** to node [Node: 10] **Ne10** and stored in a region allotted to hierarchical structure information on the memory **22.**

A process of creating the source element map **Mse** shown in Figure **34** is explained.

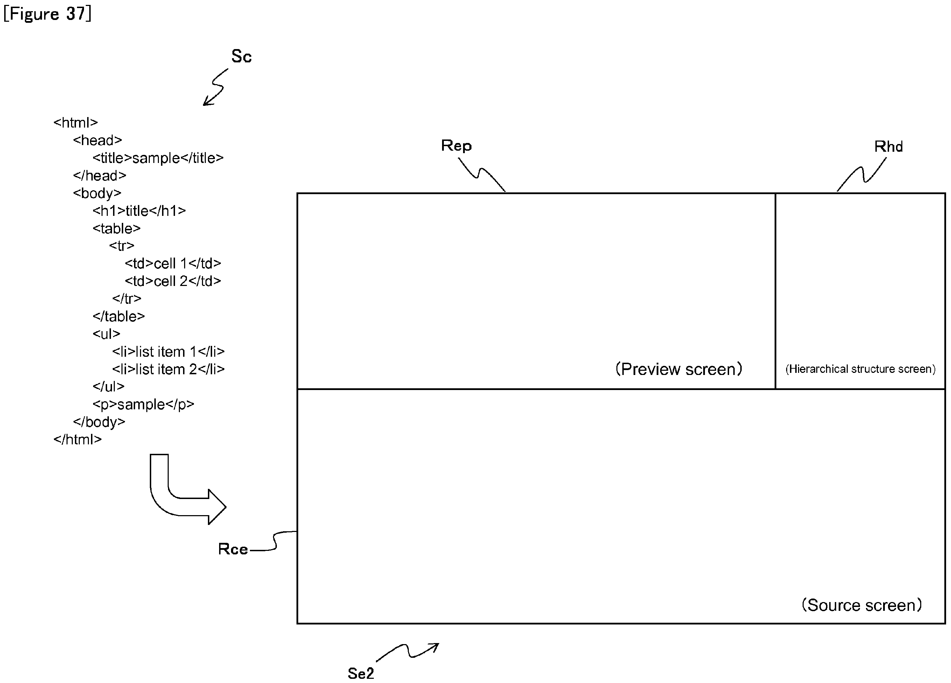

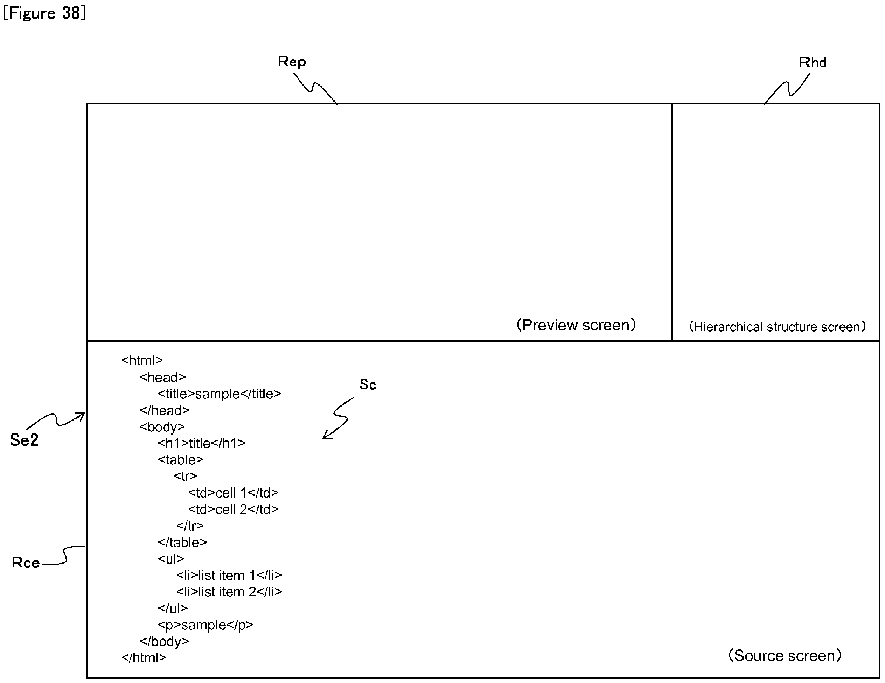

First, when the source code **Sc** is input into the HP creation assisting device **20** as shown in Figure **37**, the source code **Sc** is displayed on the source screen **Rce** as shown in Figure **38** by a text editor materialized by the processor **11** of the HP creation assisting device **20**.

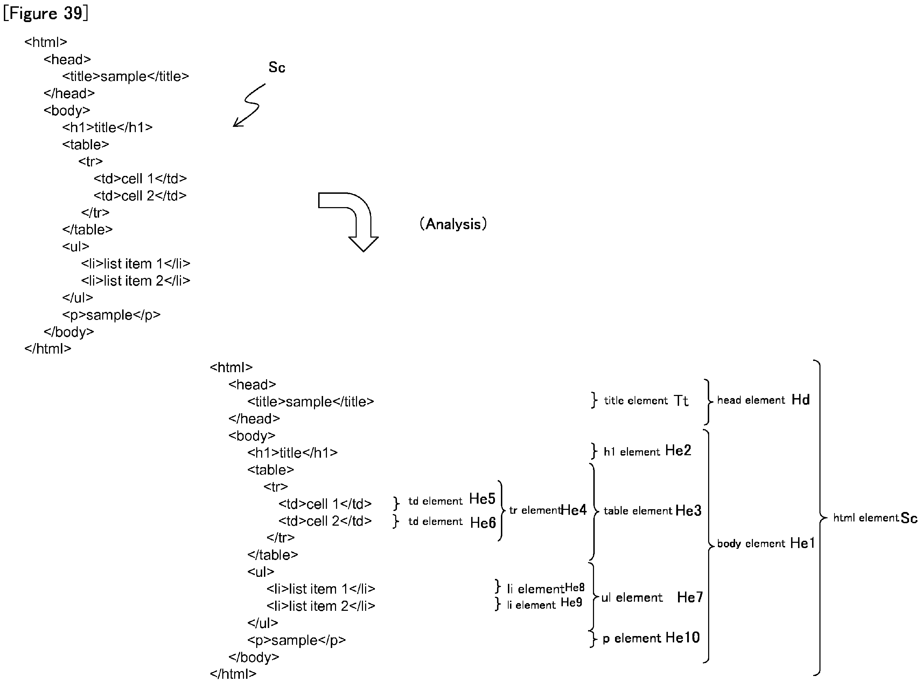

Subsequently, the input source code **Sc** is analyzed by the processor **11**, and the individual HTML elements (source elements) **Sc**, **Hd**, **Tt**, and **He1** to **He10** in the source code **Sc** are recognized by the processor **11** as shown in Figure **39**. As a result, a feature of each HTML element that can be obtained from the source code **Sc** displayed on the source screen **Rce** is stored on the memory **22** in a table format.

In this regard, the element start/end positions and content start/end positions are matched with the source elements **Sc**, **Hd**, **Tt**, and **He1** to **He10** and stored as the position information **Eps** in the storage region of the memory **22** as shown particularly in Figure **34**. The tag type information **Eta** is also matched with source elements and stored in the storage region of the memory **22.**

The source element map **Mse** matching the latest source code **Sc** being edited is completed thereby.

Next, a process of creating the DOM element map **Mde** shown in Figure **35(b)** is explained.

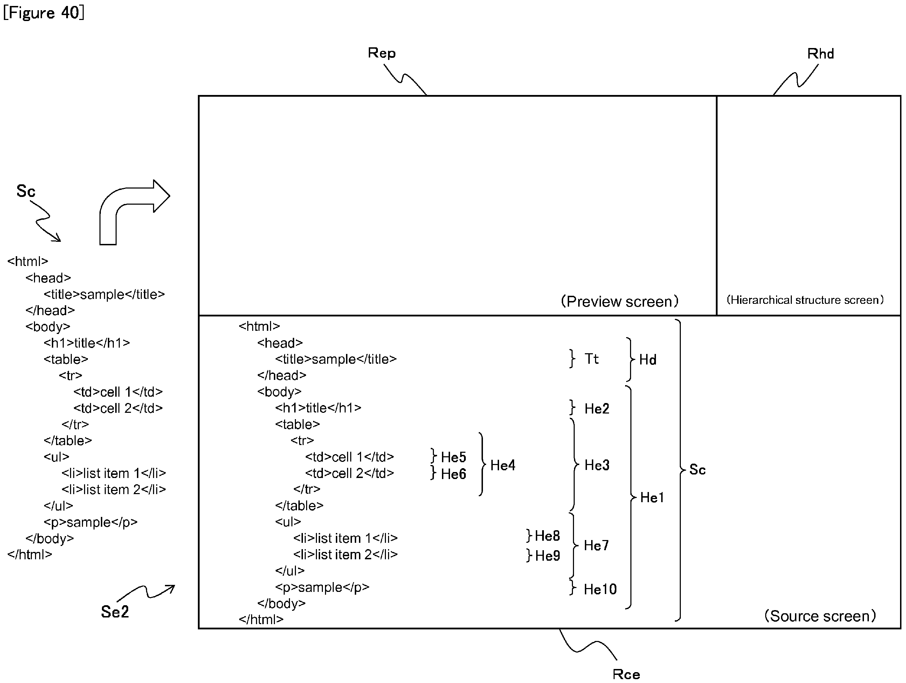

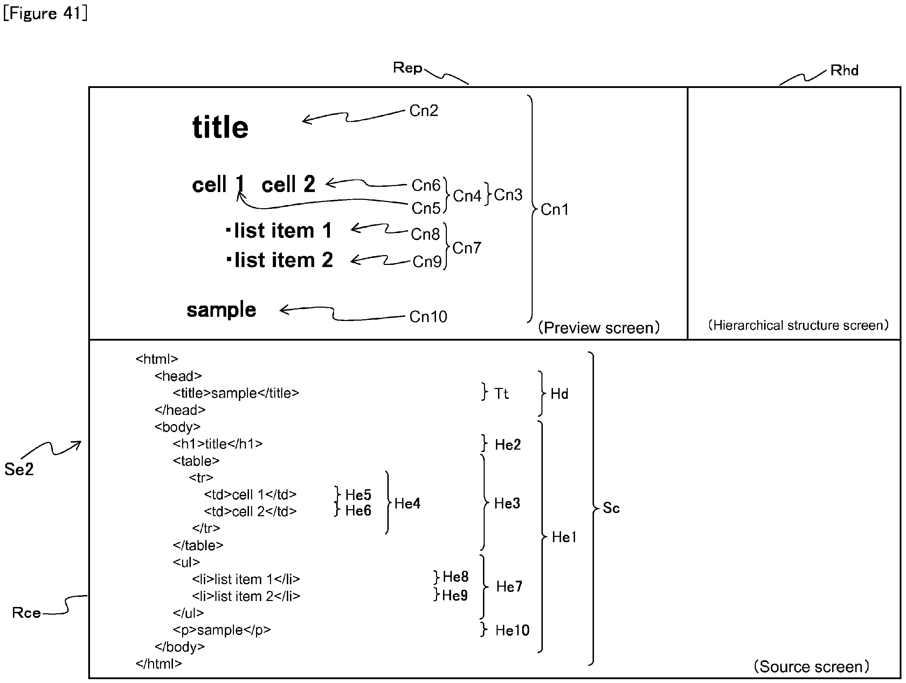

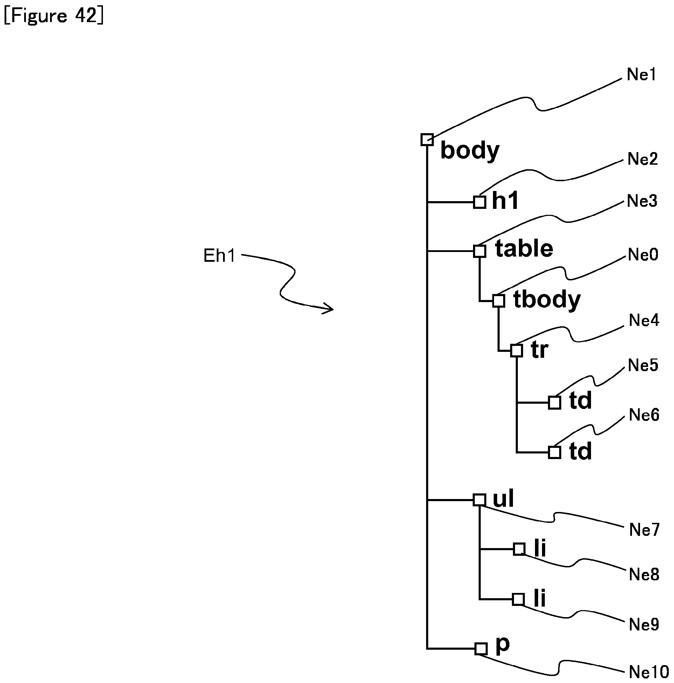

As shown in Figure **40**, when the source code **Sc** is read by a browser so that contents of the source code **Sc** are displayed on the preview screen **Rep**, in the preview screen **Rep**, the contents (home page contents) **Cn1** to **Cn10** contained in each element of the source code **Sc** are displayed as shown in Figure **41**. When the source code **Sc** is read into a browser in this manner, the browser recognizes the hierarchical structure **Eh1** comprising a source element constituting the body portion of the source code **Sc** as browser DOM by a browser dependent function as shown in Figure **42**.

The hierarchical nodes **Ne1** to **Ne10** of the hierarchical structure **Eh1** are nodes corresponding to the HTML elements **He1** to **He10** of the body portion of the source code **Sc**, respectively, while the hierarchical node **Ne0** is an HTML element (tbody element) formed in a browser dependent manner, so that the node does not correspond to an element contained in the source code **Sc**.

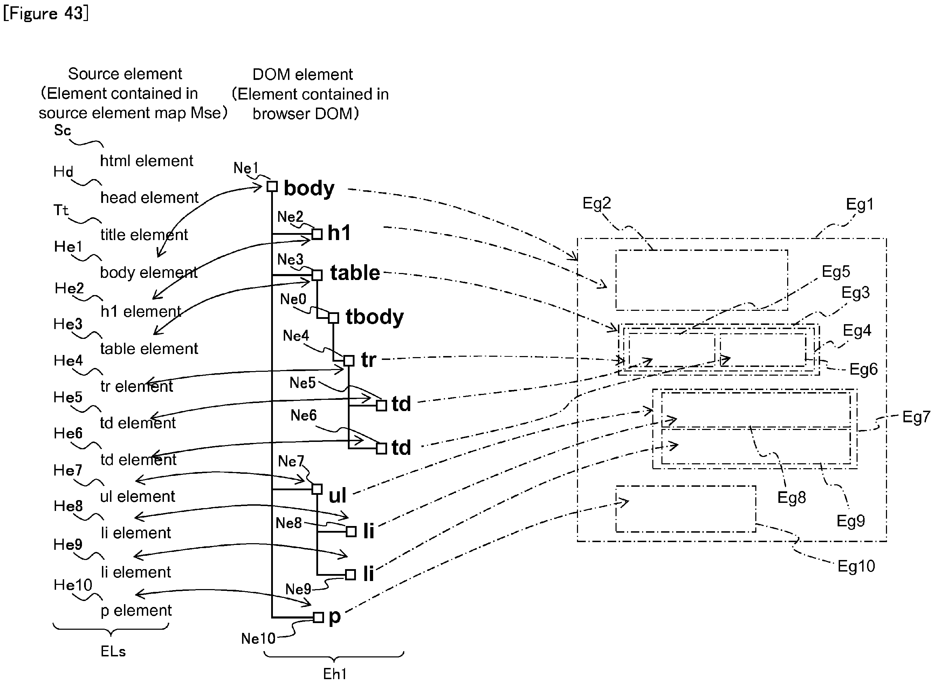

Next, as shown in Figure **43**, the display element guides **Eg1** to **Eg10** are created for the DOM elements **Hm1** to **Hm10** matching the source element, based on results of comparing the HTML elements contained in the source element map **Mse** (Figure **34**) with HTML elements corresponding to each of the hierarchical nodes **Ne0** to **Ne10** of browser DOM.

Figure **43** omits the position information **Eps** in the source element map **Mse**. The display element guides **Eg1** to **Eg10** are rectangular frames placed on the preview screen **Rep** so as to surround contents corresponding to individual HTML elements displayed on the preview screen **Rep**.

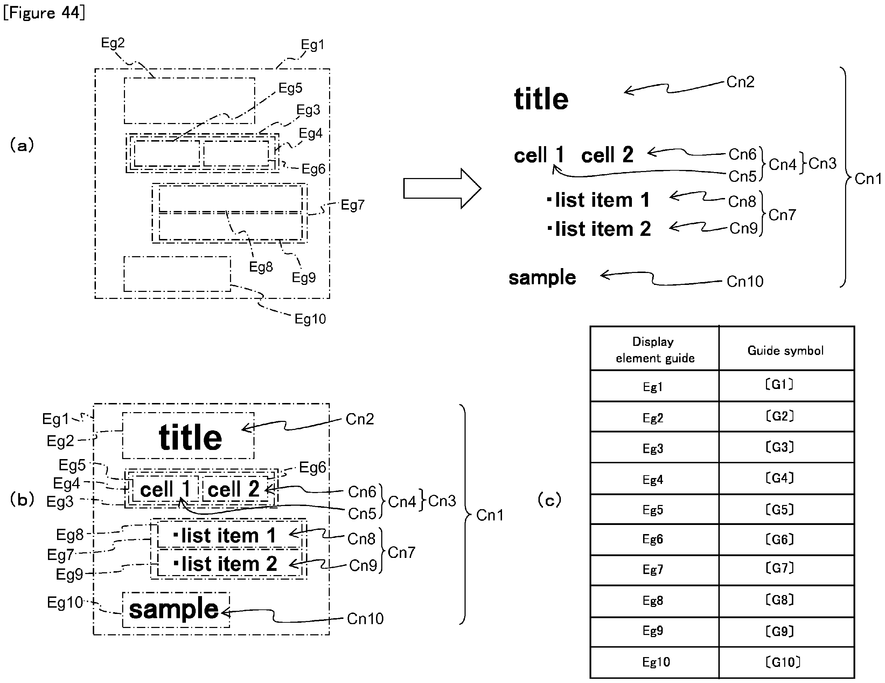

Furthermore, the display element guides **Eg1** to **Eg10** are applied to the contents **Cn1** to **Cn10** of individual HTML elements displayed on the preview screen **Rep** as shown in Figure **44(a)**, resulting in the display element guides **Eg1** to **Eg10** being displayed on the preview screen **Rep** such that the display element guides **Eg1** to **Eg10** surround the contents **Cn1** to **Cn10** of DOM constituent element as shown in Figure **44(b)**.

These display element guides **Eg1** to **Eg10** are further assigned the guide symbols [**G1**] to [**G10**] as shown in Figure **44(c)**.

The DOM element map **Mde** (see Figure **35**) is thereby obtained, with the display element guides **Eg1** to **Eg10** and the guide symbols [**G1**] to [**G10**] matched to the HTML elements **Hm1** to **Hm10** corresponding to each hierarchical node of the hierarchical structure **Eh1** of browser DOM, as a DOM element map corresponding to the latest source code **Sc** during editing of the source code.

A process of creating the hierarchical structure information **Eh** shown in Figure **36** is now explained.

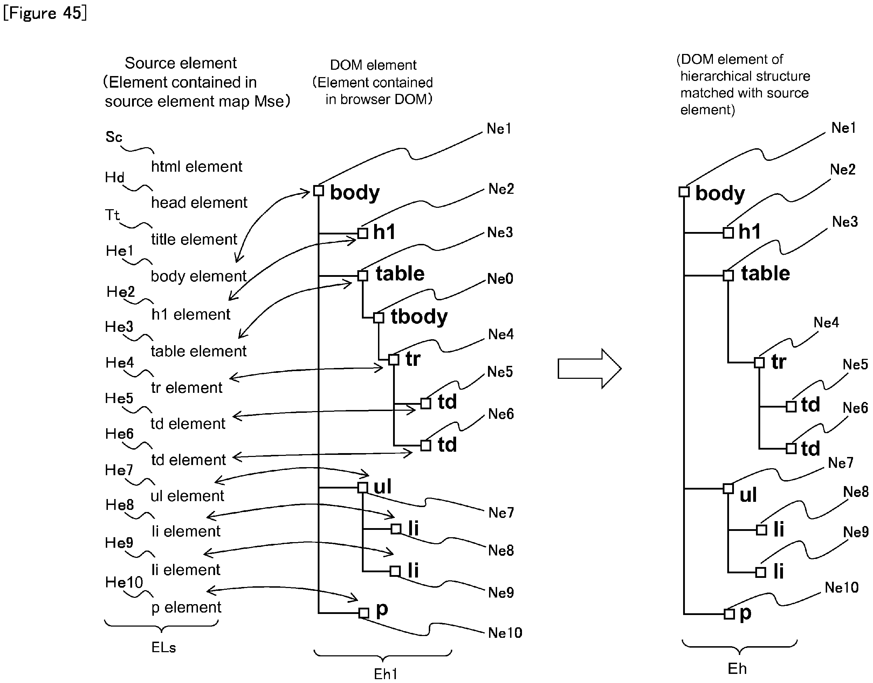

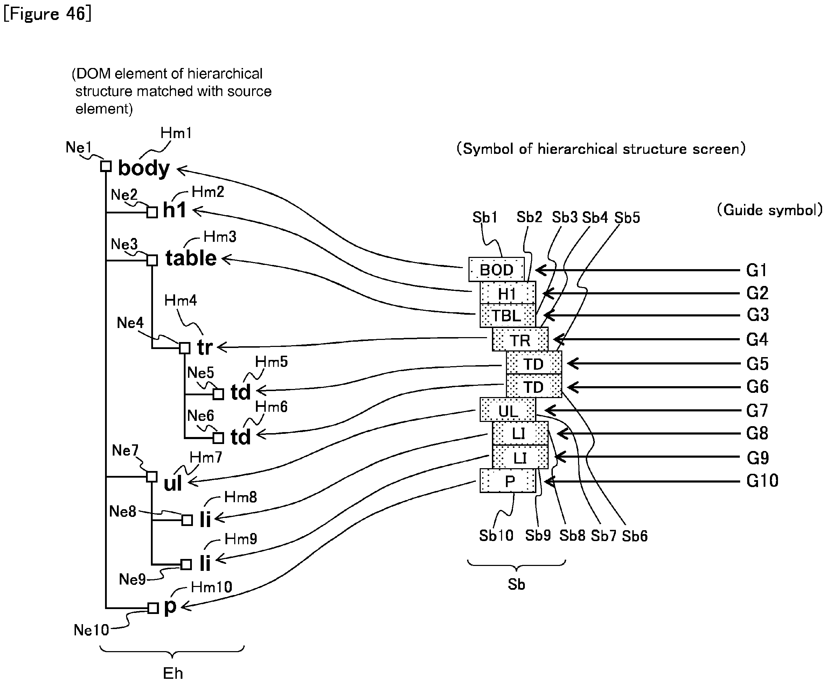

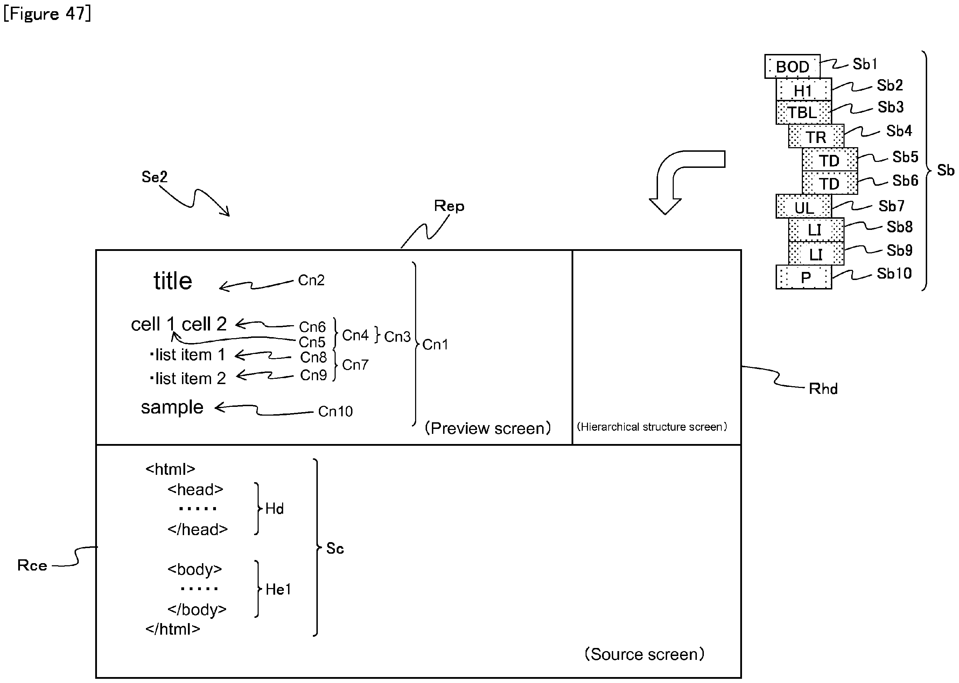

As shown in Figure **45**, the hierarchical structure **Eh** matching the source elements **He1** to **He10** is created as a hierarchical structure to be displayed on the hierarchical structure screen **Rhd** by excluding hierarchical nodes that do not correspond to a source element from hierarchical nodes in the hierarchical structure **Eh1** of the browser DOM based on a comparison of elements (DOM elements) corresponding to each hierarchical node of the hierarchical structure **Eh1** of the browser DOM with HTML elements (source elements) contained in the source element map **Mse**. The symbols **Sb1** to **Sb10** corresponding to the hierarchical nodes **Ne1** to **Ne10** of the hierarchical structure **Eh** are further created as shown in Figure **46**. Furthermore, as shown in Figure **46**, the guide symbols [**G1**] to [**G10**] are assigned to the symbols **Sb1** to **Sb10** so that the relationship between the guide symbols [**G1**] to [**G10**] and the symbols **Sb1** to **Sb10** indicating the DOM elements **Hm1** to **Hm10** of the hierarchical structure **Eh** matches the relationship between the guide symbols [**G1**] to [**G10**] and the DOM elements **Hm1** to **Hm10** shown in Figure **35(b)**. The hierarchical structure information **Dhs** is thereby obtained. The symbols **Sb1** to **Sb10** are also displayed on the hierarchical structure screen **Rhd** so that the hierarchical structure **Eh** of the source elements **He1** to **He10** of the body portion of the source code **Sc** is recognized as shown in Figure **47**.

As a result, the source code **Sc** is displayed on the source screen **Rce**, the contents **Cn1** to **Cn10** of the HTML elements **He1** to **He10** contained in the source code **Sc** are displayed on the preview screen **Rep**, and the hierarchical structure **Eh** of the HTML elements **He1** to **He10** contained in the source code **Sc** is displayed on the hierarchical structure screen **Rhd**, as shown in Figure **32**.

The HP creation assisting operation performed by the HP creation assisting device **20** is now explained.

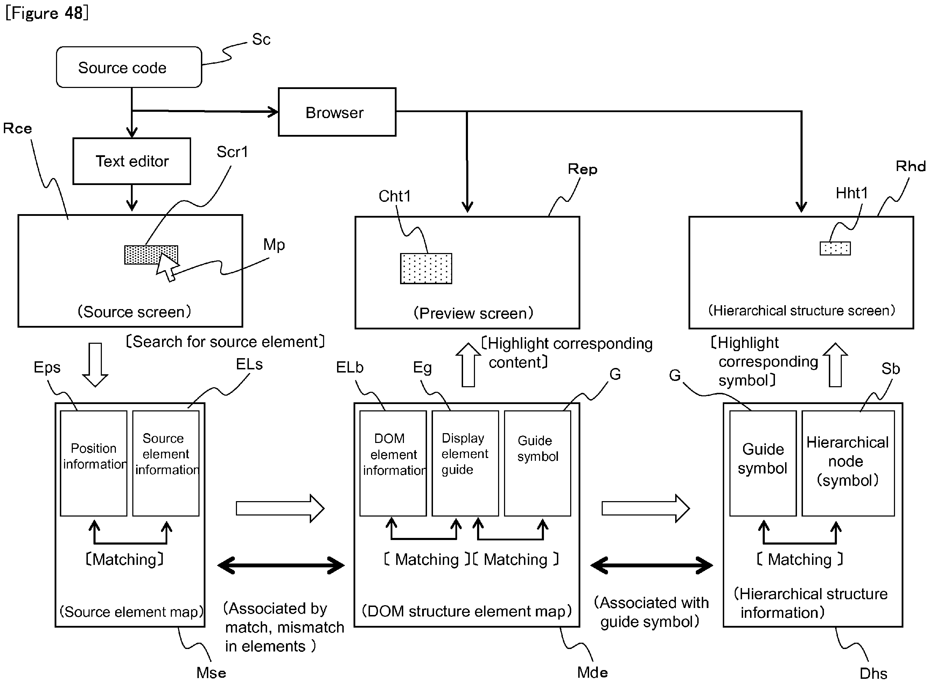

When a user clicks on a position on the source screen **Rce** with a mouse pointer **Mp** as shown in Figure **48**, the processor **11** search the position information **Eps** of the source element map **Mse** shown in Figure **34** to recognize that a source element **Scr1** at a position corresponding to the clicked position is a source element targeted by the search of the user.

For example, when the h1 element **He2** is recognized as the clicked HTML element, the h1 element **Hm2** is identified as a DOM element corresponding to the h1 element **He2** based on the DOM element map **Mde** (Figure **35(b)**). This highlights a region **Cht1** occupied by the display element guide **Eg2** of the DOM element **Hm2**.

Furthermore, a symbol {H1] **Sb2** assigned the same guide symbol as the guide symbol [**G2**] assigned to the display element guide **Eg2** in the DOM element map **Mde** (Figure **35(b)**) is identified based on the hierarchical structure information **Dhs** (Figure **36(b)**), and a region **Hht1** occupied by the symbol [H1] **Sb2** is highlighted.

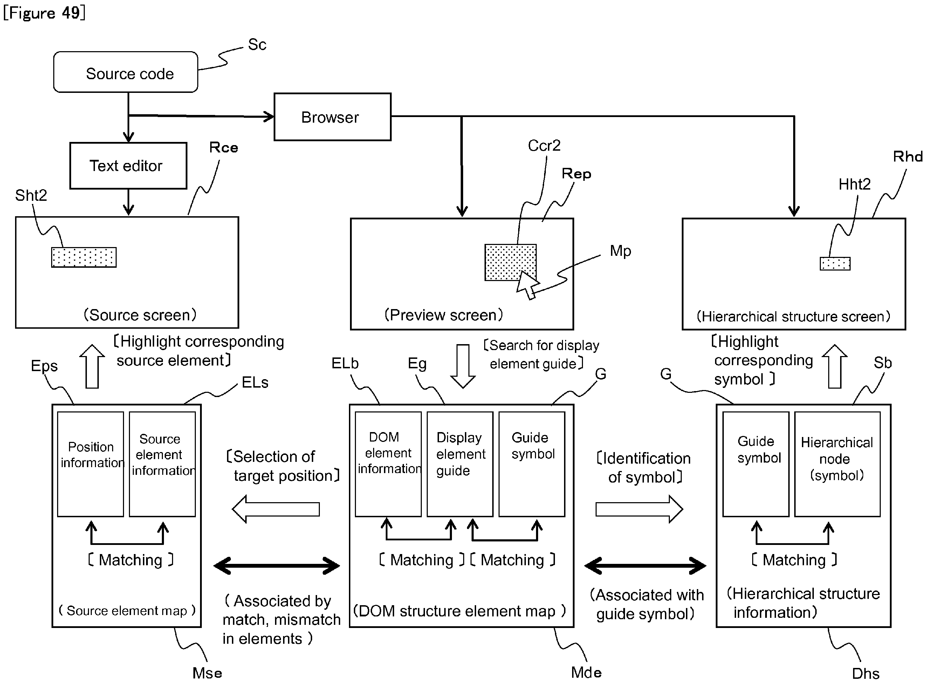

When a user clicks on a region **Ccr2** occupied by a display element guide of a content on the preview screen **Rep** as shown in Figure **49** with a mouse pointer **Mp**, a DOM element can be identified based on the DOM element map **Mde** shown in Figure **35(b)**. For example, when a region occupied by the display element guide **Eg3** is clicked, the DOM element **Hm3** corresponding to the display element guide **Eg3** is identified. Furthermore, the source element **He3** matching the DOM element **Hm3** is obtained based on the source element map **Mse** (Figure **34**), and a region **Sht2** corresponding to the source element **He3** is highlighted as shown in Figure **49**. A symbol [TBL] **Sb3** assigned with the same guide symbol as the guide symbol [**G3**] assigned to the display element guide **Eg3** in the DOM element map **Mde** is identified based on the hierarchical structure information **Dhs**, and a region **Hht2** occupied by the symbol [TBL] **Sb3** is highlighted.

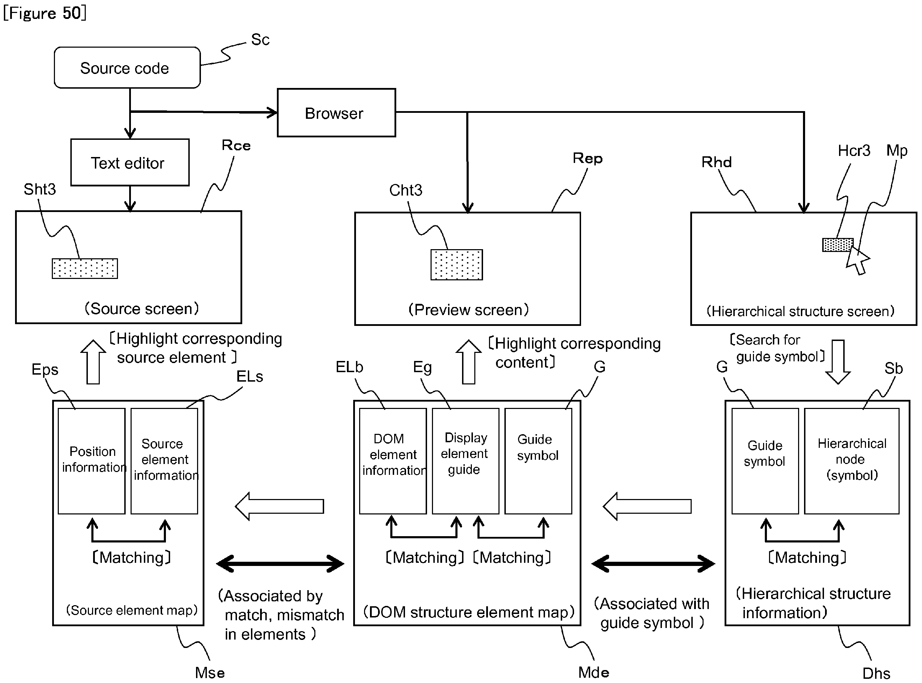

When a user clicks with a mouse pointer **Mp** on a region **Hcr3** where one symbol constituting a hierarchical structure on the hierarchical structure screen **Rhd** is placed as shown in Figure **50**, a guide symbol corresponding to a symbol of the clicked region is identified based on the hierarchical structure information **Dhs** shown in Figure **36(b)**. For example, when the placement region **Hcr3** for the top symbol [TD] of the two symbols [TD] aligned to the top and bottom is clicked with the mouse pointer **Mp**, a guide symbol [**G5**] corresponding to the symbol [TD] **Sb5** is identified. Furthermore, the display element guide **Eg5** corresponding to the guide symbol [**G5**] is selected based on the DOM element map **Mde** (Figure **35(b)**), and a region **Cht3** occupied by the display element guide **Eg5** is highlighted as shown in Figure **50****.** In this case, a region **Sht3** corresponding to the source element **He5** matching the element **Hm5** of the DOM element is highlighted as shown in Figure **50**.

In this manner, in the HP creation assisting device **20** of embodiment 2, when a user clicks on any content on the preview screen **Rep** or clicks on a region corresponding to any HTML element on the source screen **Rce** or the hierarchical structure screen **Rhd**, the clicked content or a portion corresponding to a clicked element is highlighted on the screens other than the clicked screen. For this reason, for example, by a user simply clicking a specific HTML element displayed on the hierarchical structure screen **Rhd**, the user can readily find a corresponding HTML element contained in the source code **Sc** displayed on the source screen **Rce** and simultaneously find a content corresponding to a symbol clicked on the hierarchical structure screen **Rhd** on the preview screen **Rep**.

A case explained in Embodiment 2 is the case where, when a certain position is clicked on the source screen **Rce**, a region occupied by a display element guide corresponding to an HTML element at the clicked position on the preview screen **Rep** is highlighted and a region occupied by a symbol corresponding to an HTML element at the clicked position on the hierarchical structure screen **Rhd** is highlighted, but the display element guides **Eg1** to **Eg10** and the corresponding symbols **Sb1** to **Sb10** can be configured to be displayed with the same color so that the relationship between the display element guides **Eg1** to **Eg10** and the corresponding symbols **Sb1** to **Sb10** can always be recognized.

A case explained in Embodiment 2 is also the case where a program for assisting the creation of a home page is stored on a user side terminal, but such a program can be stored on a server on the Internet, and the user side terminal can transit an operation signal to the server to create a home page and assist the creation of the home page by a user on the server.

The home page creation process explained in embodiment 2 can be executed, in the same manner as embodiment 1, by a web application which operates by cooperation between a program installed on a web server and a program by a programming language that operates on a browser on the user side terminal instead of a stand-alone application that is operated by a program installed on the user side terminal as in embodiment 2.

In this case, a source code of a completed home page can be stored on the server side or provided to the user side terminal.

A case explained in Embodiment 2 is also the case where the following three first to third processes are performed, but the HP creation assisting device **20** can be configured to perform at least one of the following first to third processes.

The first process is the process where, when one of the contents is selected on the preview screen, a source element corresponding to a selected content is highlighted on the source screen **Rce** and a symbol corresponding to the selected content is highlighted on the hierarchical structure screen **Rhd**.

The second process is the process where, when one of the source elements is selected on the source screen **Rce**, a content corresponding to a selected source element is highlighted on the preview screen **Rep** and a symbol (hierarchical node) corresponding to the selected source element is highlighted on the hierarchical structure screen **Rhd.**

The third process is the process where, when one of the symbols is selected on the hierarchical structure screen **Rhd,** a content corresponding to a selected symbol is highlighted on the preview screen **Rep** and a source element corresponding to the selected symbol is highlighted on the source screen **Rce**.

### (Embodiment 3)

Figure **51** is a diagram for explaining an HP creation assisting device **30** according to embodiment 3 of the present invention.

The HP creation assisting device **30** of embodiment 3 has a computer **30a** for processing information, an input operation unit **13a**, and a display unit **14a** as in the HP creation assisting device **10** in embodiment 1. The computer **30a** comprises a memory **32** instead of the memory **12** of the computer **10a** in embodiment 1. A program for making the processor **11** execute a process that is different from that of the HP creation assisting device **10** in embodiment 1 as a process for assisting the creation of a home page is stored in the memory **32**.

The configuration of the HP creation assisting device **30** in embodiment 3 is identical to the configuration of the HP creation assisting device **10** in embodiment 1 other than the memory **32** of the computer **30a**.

A process of assisting the creation of a home page (hereinafter, the HP creation assisting process) performed by the HP creation assisting device **30** in embodiment 3 is specifically explained hereinafter.

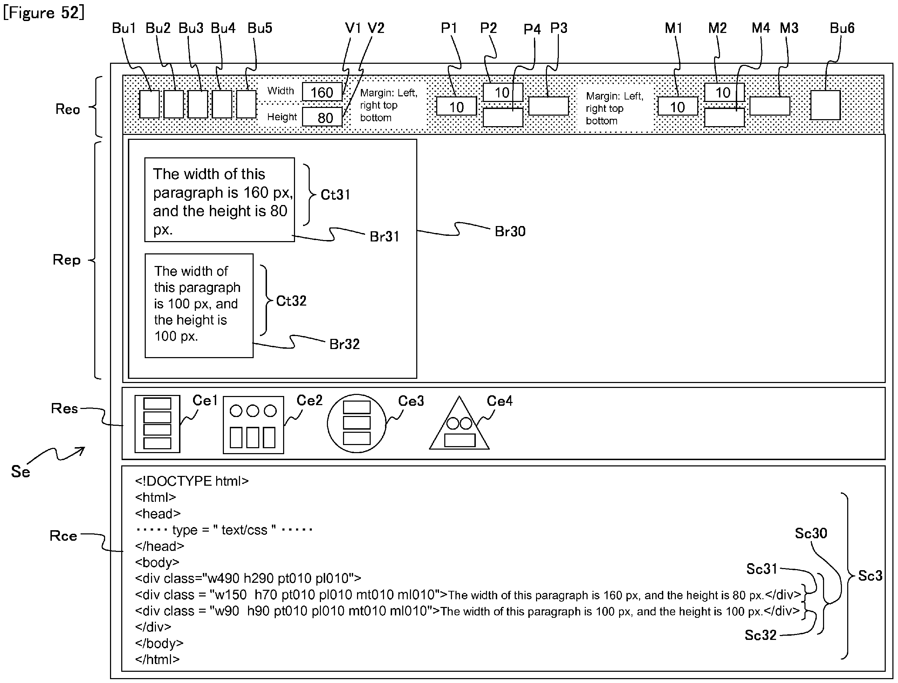

Figure **52** is a diagram showing an editing screen **Se** that is displayed on the display unit **14a** of the HP creation assisting device **30** in embodiment 3. Elements in Figure **52** assigned with the same symbol as those in Figure **15** are identical to those in the editing screen **Se** of embodiment 1.

The editing mode of a block comprising a block can be switched between a normal editing mode and a batch editing mode in the HP creation assisting process performed by the HP creation assisting device **30** in embodiment 3.

In the following explanation, when at least one block is contained in another block, a block obtained in another block is referred to as a child block, and the another block containing at least one block is referred to as the parent block.

Specifically, an HP creation assisting process performed by the HP creation assisting device **30** in embodiment 3 comprises the following three processes.

The first process is a process where a plurality of blocks for placing contents of a home page are displayed on an editing screen so that at least one block is contained in at least one other block (parent block) based on a user operation.

The second process is a process where the editing mode for a parent block is switched between a normal editing mode and a batch editing mode.

The third process is a process where, when the editing mode of the parent block targeted for editing is in a batch editing mode, individual editing operation for editing each block (child block) contained in a parent block is denied and a batch editing operation for editing the child block with the parent block in a batch is permitted, and when the editing mode of the parent is in a normal editing mode, both individual editing operation and a batch editing operation on the child block are permitted. The following explanation also refers to switching the editing mode to a batch editing mode as locking, and returning the editing mode to a normal editing mode as unlocking.

These processes are performed by the processor **11** executing a program stored on the memory **32**. It is also understood that a common operation system for making the processor **11** function as a text editor or as a browser is stored in the memory **32**. A program for performing a process of assisting the creation of a home page as in the HP creation assisting device **10** of embodiment 1 can be further stored in the memory **32**. In this case, a content can be edited on the preview screen **Rep**, and a source code corresponding to one or more contents edited on the preview screen **Rep** would be displayed on the source screen **Rce**. A program for performing a process of assisting the creation of a home page as in the HP creation assisting device **20** of embodiment 2 can be further stored in the memory **32**. In this case, a home page content, corresponding source element, and corresponding hierarchical node (symbol) can be simultaneously associated and displayed on the preview screen **Rep**, source screen **Rce**, and the hierarchical structure screen **Rhd**.

The HP creation assisting device **30** in embodiment 3 does not need to have a function of performing the HP creation assisting process of the HP creation assisting device **10** in embodiment 1, but is assumed hereinafter to have the function of the HP creation assisting device **10** in embodiment 1 for convenience of explanation.

A home page editing process using the HP creation assisting device **30** is explained in detail hereinafter.

For example in the editing screen **Se** shown in Figure **52**, a large block (same as the block box in embodiment 1) **Br30** is created on the preview screen **Rep**, and two small blocks **Br31** and **Br32** are placed within the large block **Br30**, and contents **Ct31** and **Ct32** are placed within the small blocks **Br31** and **Br32**, respectively. In this regard, the large block is a parent block and the small blocks are child blocks. An operation of placing the child blocks within the parent block is an operation of pressing the creation button **Bu1** after selecting the parent block by clicking or the like. By such an operation, a new block is placed within an existing block (parent block) as a child block. In the editing screen **Se** shown in Figure **52**, the block **Br31** is in a selected state.

An HTML element (div element) **Sc30** corresponding to the large block **Br30** and HTML elements (div elements) **Sc31** and **Sc32** corresponding to the small blocks **Br31** and **Br32** are displayed on the source screen **Rce**. An HTML element **Sc3** is an html element corresponding to the entire home page.

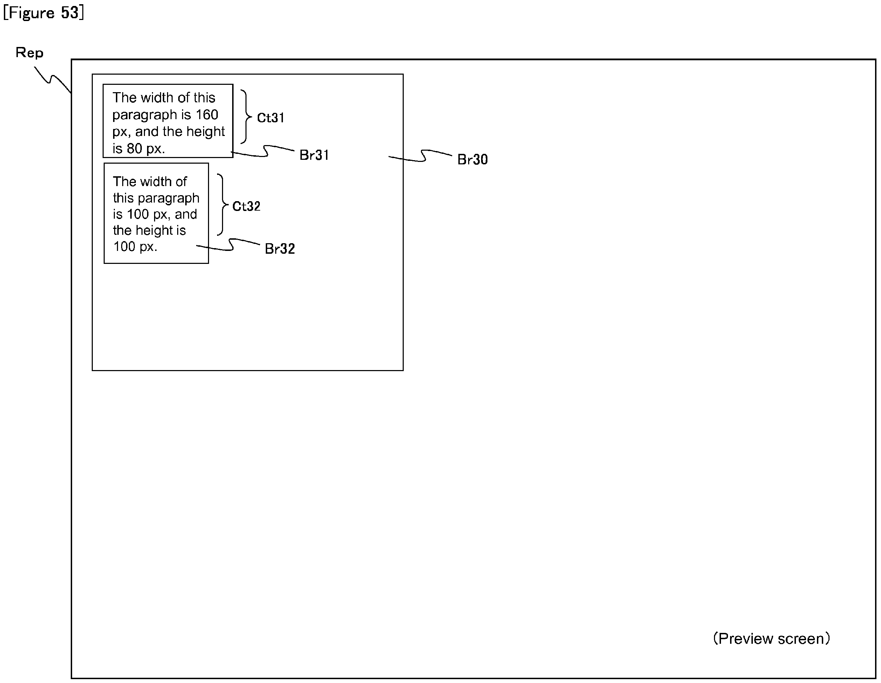

Figure **53** is a diagram showing only an expanded preview screen **Rep** on the editing screen **Se** shown in Figure **52**.

In the editing state shown in Figure **53**, the large block **Br30** is not locked, and the editing mode of the block is a normal editing mode, in which individual editing operation (operation such as copy, move, or delete) on the small blocks **Br31** and **Br32** within the block **Br30** is enabled, and a batch editing operation (operation such as copy, move, or delete) for editing the small blocks **Br31** and **Br32** within the block **Br30** with the large block is enabled.

Thus, in the normal editing mode, the outer line indicating the contour of each block displayed on the preview screen **Rep** is displayed.

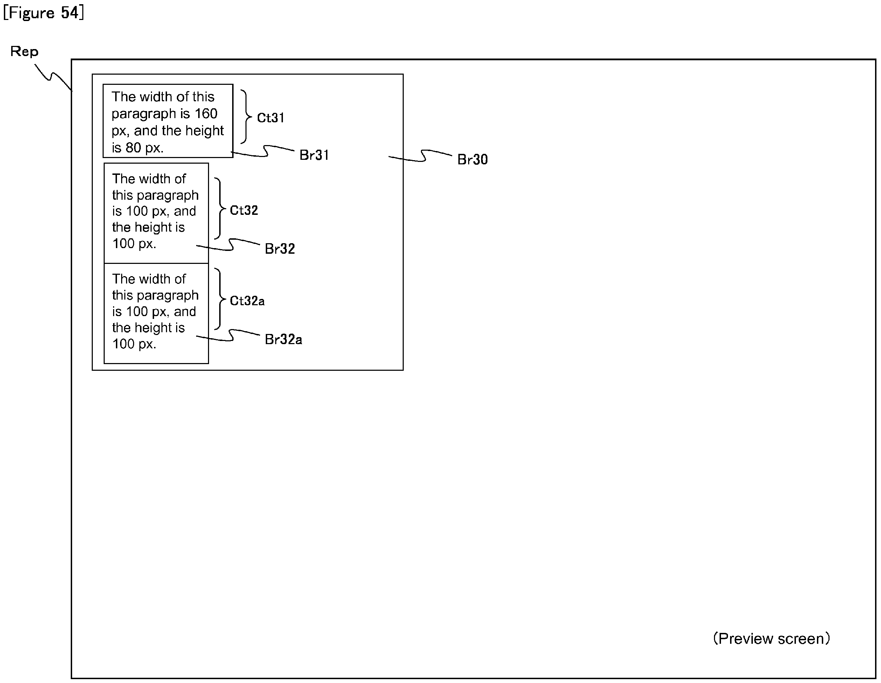

When a user selects for example the small block **Br32** within the large block by clicking and then operates for example the copy button **Bu3** in this state, the copy operation is reflected in the small block **Br32**. In other words, the small block **Br32** is copied with the content **Ct32** therein and the copied block **Br32a** is placed below the original block **Br32** as shown in Figure **54**. The copied block **Br32a** contains the same content **Ct32a** as the content **Ct32** in the original block **Br32**.

In a normal editing mode, when a large block is selected and then an operation such as copy is performed, the large block as well as the small block therein are both copied and placed below the original large block.

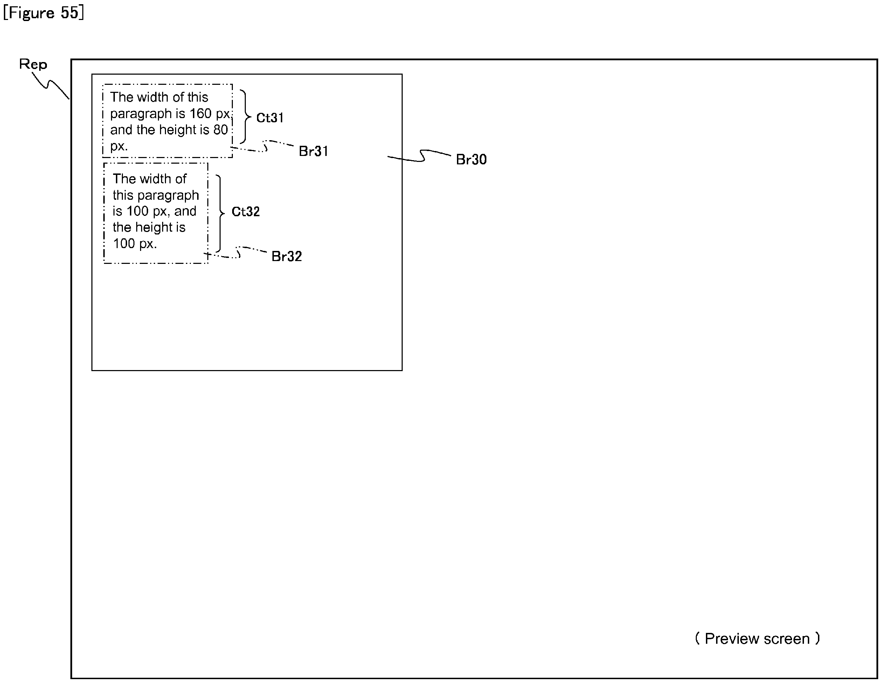

On the other hand, in the editing state shown in Figure **53**, when a user clicks on a region within the large block **Br30** and then switches the editing mode of the large block **Br30** from a normal editing mode to a batch editing mode by operating the lock button **Bu5**, the outline of the small blocks **Br31** and **Br32** placed within the large block **Br30** disappears as shown in Figure **55**, denying individual operations on the blocks **Br31** and **Br32** placed within the large block **Br30**. Figure **55** shows the outer line that in actuality disappears as a double dotted chain line for convenience of explanation. Thus, operations on the small blocks **Br31** and **Br32** are denied in a batch editing mode. The difference on a display screen between a normal editing mode and a batch editing mode is only an example, which is not limited to such a difference in display.

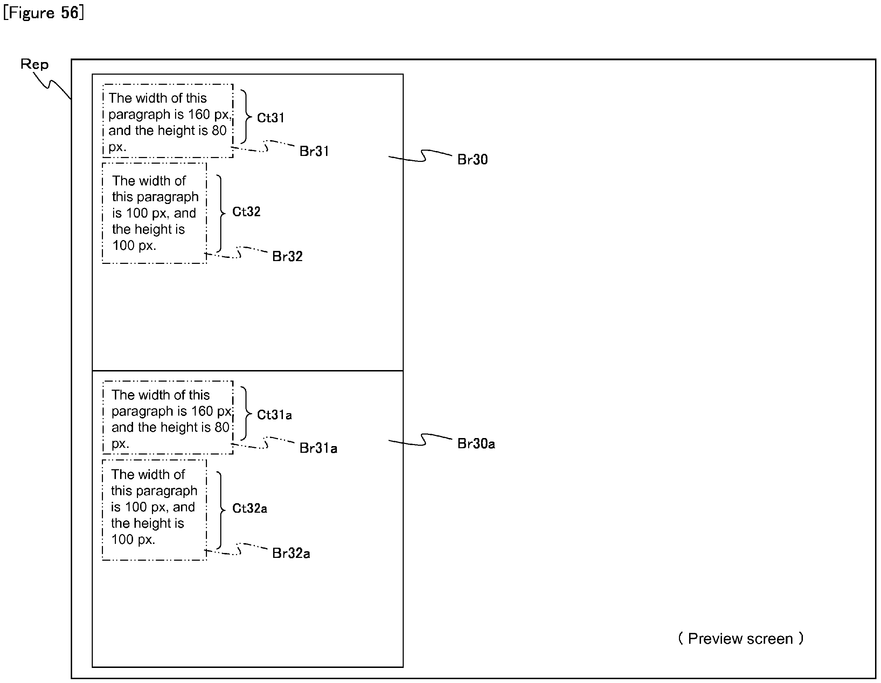

In this editing state, when a user clicks on a region within the large block **Br30** to select the block **Br30** and then operates for example the copy button **Bu3**, the large block **Br30** is copied with the contents **Ct31** and **Ct32** contained within the small blocks **Br31** and **Br32** therein, and the copied large block **Br30a** is placed below the original large block **Br30** as shown in Figure **56**. The copied large block **Br30a** contains contents **Ct31a** and **Ct32a** that are the same as the contents **Ct31** and **Ct32** of the small blocks **Br31** and **Br32** that were in the original block **Br30.**

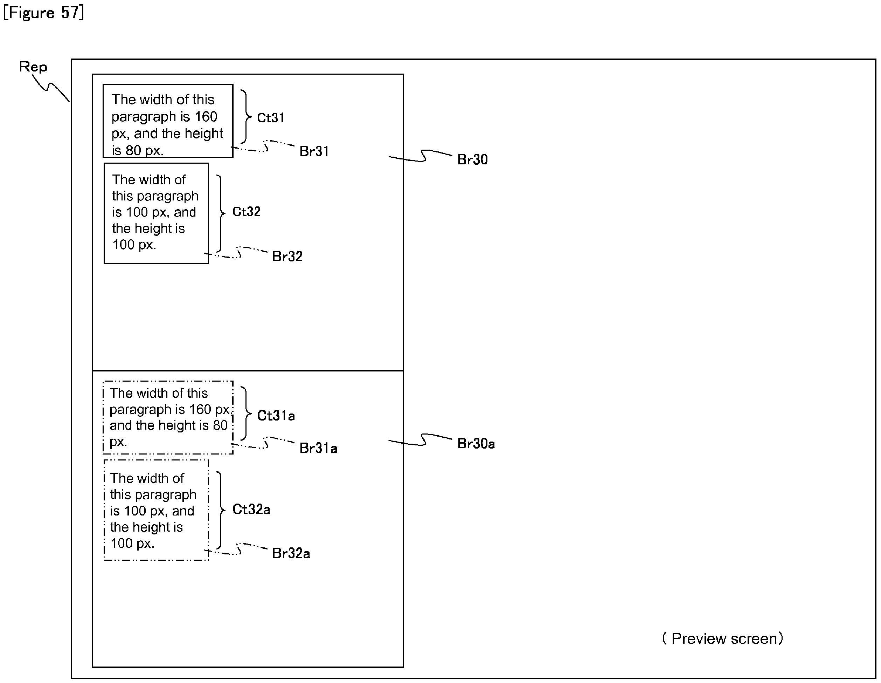

In the editing state shown in Figure **56**, when the editing mode of the original large block **Br30** is returned from a batch editing mode to a normal editing mode by an unlocking operation with the lock button **Bu5**, the outer lines of the small blocks **Br31** and **Br32** within the original large block **Br30** appear as shown in Figure **57**. However, the outer lines of the small blocks **Br31a** and **Br32a** within the copied large block **Br30a** do not appear, where the block **Br30a** is still locked. Thus, in the editing state shown in Figure **57**, an editing operation targeting individual small blocks within the original large block **Br30** is possible, but an editing operation on the small blocks **Br31a** and **32a** within the copied large block **Br30a** is not possible.

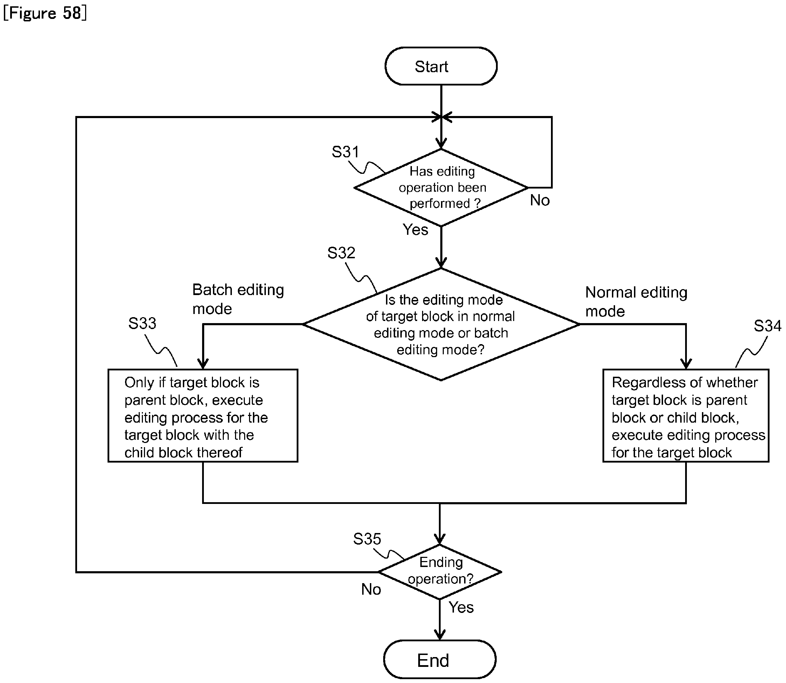

Figure **58** is a diagram for explaining the operation of the HP creation assisting device **20** shown in Figure **51**, and shows a process in a flow chart executing a process in accordance with an editing operation of a user according to the editing mode by a computer.

The processor **11** executes a process of displaying the home page editing screen **Se** on the display unit **14a** based on a user operation of the input operation unit **13**, and performs the following processes of steps S31 to 35.

The processor **11** determines whether a user has performed an editing operation targeting a given block (step S31), and repeats the determination process if an editing operation has not been performed. On the other hand, if an editing operation has been performed, the processor **11** determines whether the editing mode of a block targeted for editing is a normal editing mode or a batch editing mode (step S32).

For example, if the editing mode of a target block is a batch editing mode, the processor **11** executes a process in accordance with an editing operation on the target block and the child block thereof only if the target block is a parent block (step S33).

On the other hand, if the editing mode of a target block is a normal editing mode, the processor **11** executes a process in accordance with an editing operation on the target block, regardless of whether the target block is a parent block or a child block (step S34).

When the processor **11** performs an ending operation thereafter, the process is ended, and if an ending operation is not performed, the process returns to step S31.

In the HP creation assisting device **30** in embodiment 3, since a user can switch the editing mode of a parent block targeted to be operated between a batch editing mode and a normal editing mode with a lock button in this manner, only batch editing of the target block and a block contained therein is enabled when the parent block is the block targeted for editing, by locking the parent block, and individual editing on individual child blocks within the parent block is enabled, by unlocking the parent block.

The HP creation assisting process performed by the HP creation assisting device **30** in embodiment 3 can also be executed by a web application which operates by cooperation between a program installed on a web server and a program in a programming language that operates on a browser on the user side terminal as in embodiment 1 or 2 instead of a stand-alone application that is operated by a program installed on the user side terminal as in embodiment 3.

In this case, a source code of a completed home page can be stored on the server side or provided to the user side terminal.

### (Embodiment 4)

Figure **59** is a diagram for explaining an HP creation assisting device **40** according to embodiment 4 of the present invention.

The HP creation assisting device **40** of embodiment 4 has a computer **40a** for processing information, an input operation unit **13a**, and a display unit **14a** as in the HP creation assisting device **10** in embodiment 1. The computer **40a** comprises a memory **42** instead of the memory **12** of the computer **10a** in embodiment 1. A program for making the processor **11** execute a process that is different from that of the HP creation assisting device **10** in embodiment 1 as a process for assisting the creation of a home page is stored in the memory **42**.

The configuration of the HP creation assisting device **40** in embodiment 4 is identical to the configuration of the HP creation assisting device **10** in embodiment 1, other than the memory **42** of the computer **40a**.

A process of assisting the creation of a home page (hereinafter, the HP creation assisting process) performed by the HP creation assisting device **40** in embodiment 4 is specifically explained hereinafter.

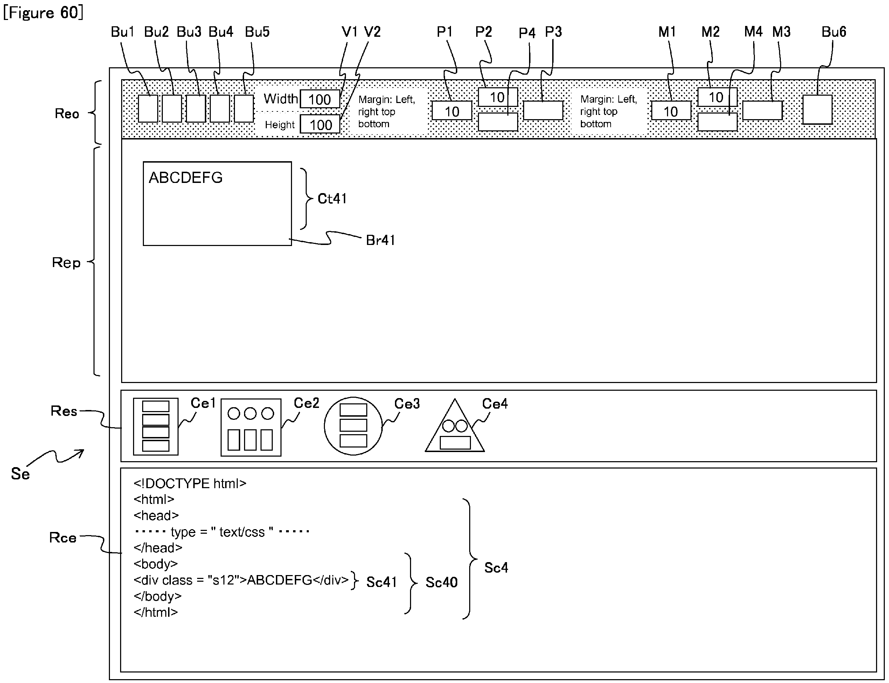

Figure **60** is a diagram showing an editing screen **Se** that is displayed on the display unit **14a** of the HP creation assisting device **40** in embodiment 4. Elements in Figure **60** assigned with the same symbol as those in Figure **15** are identical to those in the editing screen **Se** of embodiment 1.

An HP creation assisting process performed by the HP creation assisting device 40 in embodiment 4 comprises a process of a computer determining a type of adjacent tags, an attribute contained in a tag, and an attribute value contained in a source code of a created home page, and a process of the computer organizing the source code by replacing the adjacent tags with one tag if a determination result meets a predetermined condition.

These processes are performed by the processor **11** executing a program stored in the memory **42**. It is also understood that a common operation system for making the processor **11** function as a text editor or as a browser is stored in the memory **42**. A program for performing a process of assisting the creation of a home page can be further stored in the memory **42** as in the HP creation assisting device **10**, **20**, or **30** of embodiment 1, 2, or 3. For example, when the program of embodiment 1 is stored in the memory **42**, contents can be edited on the preview screen **Rep**, and a source code corresponding to one or more contents edited on the preview screen **Rep** would be displayed on the source screen **Rce**.

The HP creation assisting device **40** in embodiment 4 does not need to have a function of performing the HP creation assisting process of the HP creation assisting device **10** in embodiment 1, but is assumed hereinafter to have the function of the HP creation assisting device **10** in embodiment 1 for convenience of explanation.

A home page editing process using the HP creation assisting device **40** is explained in detail hereinafter.

For example, in the editing state shown in Figure **60**, a block box **Br41** is created in the preview screen **Rep**, and content "ABCDEFG" **Ct41** is placed within the block box **Br41**. A source code **Sc4** corresponding to the entire page displayed on the preview screen **Rep** is displayed on the source screen **Rce**, and the source code **Sc4** contains a body element **Sc40**, which contains a source element **Sc41** corresponding to the block box **Br41**.

A user can set various styles for the content "ABCDEFG" **Ct41** contained in a block box with the operation buttons **Bu21** to **Bu23** on the text editing screen **TSe** displayed on the editing screen **Se**.

In this regard, the style is set according to the following rules 1 to 3.

(Rule 1) When CSS is set for an HTML element, a span tag is used, and CSS is not set to a tag other than span tags. This is to increase the probability that the front and back tags match when organizing tags.

(Rule 2) A tag is not set to span contents divided by a tag.

This is because setting a tag to span contents divided by a tag produces a portion where only one of a start tag and an end tag of another tag is placed between a start tag and a corresponding end tag such that the hierarchical relationship of tags in HTML elements cannot be determined at this portion, resulting in combining the same type of end tags and start tags in accordance with the tag hierarchical relationship so that an optimal process for organizing a source code would no longer be possible.

(Rule 3) When CSS is set for a tag, CSS for a parent tag is not changed. This is because if CSS for the parent tag of tags is changed, the other child tags from the parent tag are affected.

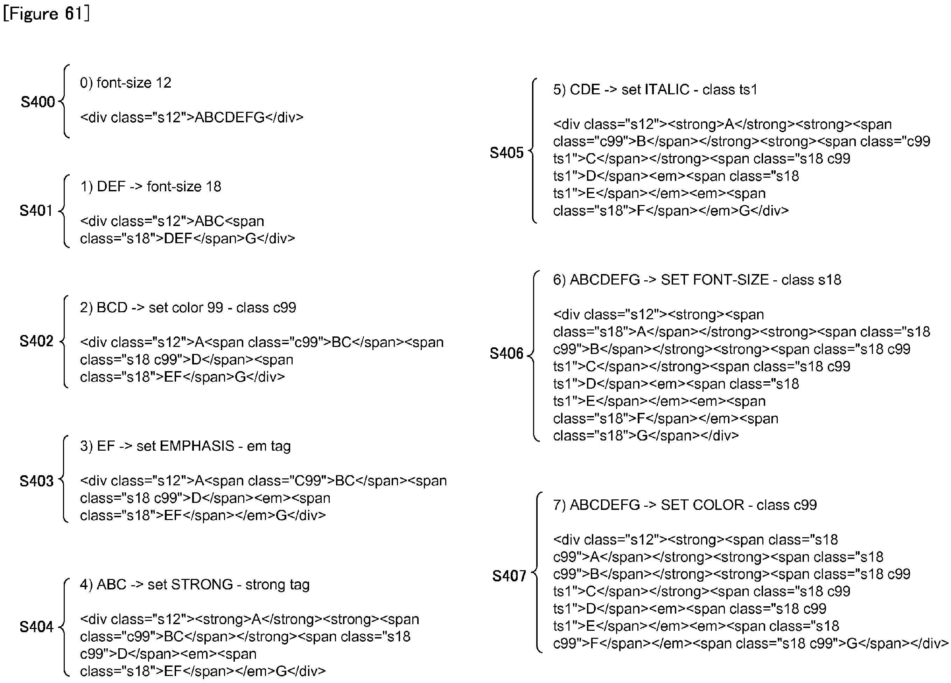

Figure **61** is a diagram for explaining the operation of the HP creation assisting device **40** shown in Figure **59**, and shows a change in the source code when various styles are set for contents in style setting processes S400 to S407.

### (Style setting process S400)

For example, the font size of the content "ABCDEFG" **Ct41** shown in Figure **60** is set to 12. Such a font size is set by adding the class attribute "class="s12"" to a start tag <div> of a div element as shown in Figure **61**.

### (Style setting process S401)

When the part "DEF" of the content "ABCDEFG" is set to font size "18", this is set by using a span tag and adding the class attribute "class="s18"" to the start tag <span>.

### (Style setting process S402)

When the part "BCD" of the content "ABCDEFG" is set to "color 99", this is set by adding the class attribute "class="c99"" to the start tag <span> before "BC" and the start tag <span> before "D".

### (Style setting process S403)

When the part "EF" of the content "ABCDEFG" is set to emphasis (EMPHASIS), this is set by placing <em>tag and </em> tag before and after a span element comprising the content "EF".

### (Style setting process S404)

When the part "ABC" of the content "ABCDEFG" is set to another emphasis (STRONG), this is set by placing <strong>tag and </strong> tag before and after the content "A" and placing <strong> and tag</strong> tag before and after the content "BC".

### (Style setting process S405)

When the part "CDE" of the content "ABCDEFG" is set to Italic, this is set by adding the class attribute value "ts1" to the <span> tag in front of the contents "C", "D", and "E".

### (Style setting process S406)

When the part "ABCG" of the content "ABCDEFG" is set to font size "18", this is set by adding the class attribute value "s18" to the <span> tag in front of each of the contents "A", "B", "C", and "G" of the content "ABCDEFG".

### (Style setting process S407)

When the part "AEFG" of the content "ABCDEFG" is set to "color 99", this is set by adding the class attribute value "c99" to the <span> tag in front of each of the contents "A", "E", "F", and "G" of the content "ABCDEFG".

### (Style setting process S408)

When the part "ABCDG" of the content "ABCDEFG" is set to emphasis (EMPHASIS), this is set by placing an <em> tag immediately in front of the <strong> tag of "A", "B", and "C" of the content "ABCDEFG", placing an </em> tag immediately after the </strong> tag of "A", "B", and "C" of the content "ABCDEFG", placing a an <em> tag immediately in front of the <span> tag of "D" and "G" of the content "ABCDEFG", and placing an </em> tag immediately after a </span> tag of "D" and "G".

### (Style setting process S409)

When the part "DEFG" of the content "ABCDEFG" is set to emphasis (STRONG), this is set by placing a <strong> tag immediately in front of the <em> tag of "D" of the content "ABCDEFG", and placing a </strong> tag immediately after the </em> tag of "G".

### (Style setting process S410)

When the part "ABFG" of the content "ABCDEFG" is set to Italic, this is set by adding the class attribute value "ts1" to the <span> tag in front of the contents "A", "B", "F", and "G".

A process for organizing a source code obtained in this manner is now explained.

This process for organizing a source code basically recognizes two patterns and combines the tag content for optimization with the presence of the pattern.

The two patterns are the following pattern 1 and pattern 2.

### (Pattern 1)

When the same tags (strong, em, or the like) are next to each other, the content is combined and a single tag is formed.

### (Pattern 2)

If specific adjacent tags (e.g., span) have the same class specification, the contents thereof are combined, and a single specific tag (e.g., span) is formed.

First, the processor **11** analyzes an input source code **Sc4a** to analyze HTML elements in order from the top hierarchy of a hierarchical structure formed by the HTML elements constituting the source code **Sc4a**.

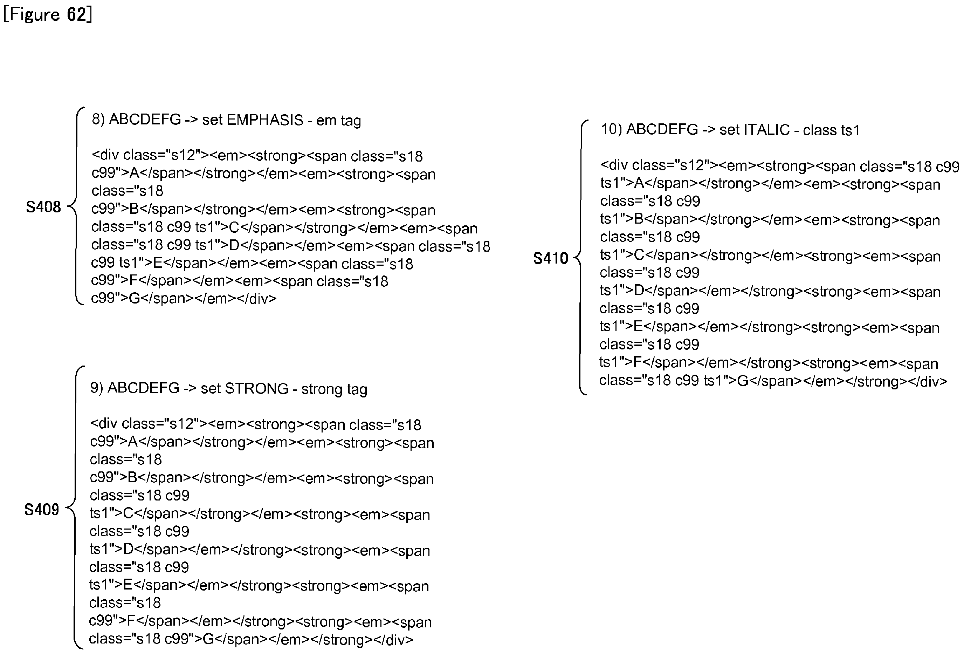

In this regard, organization of the source code **Sc4a** obtained in the style setting process S410 of Figure **62** is used an example for explanation. The source code subjected to processing of the HP creation assisting device **40** in embodiment 4 is not limited thereto.

A source code is organized by the HP creation assisting device **40** in embodiment 4 in order from the top hierarchy for each hierarchy of a hierarchical structure of a plurality of elements constituting the source code.

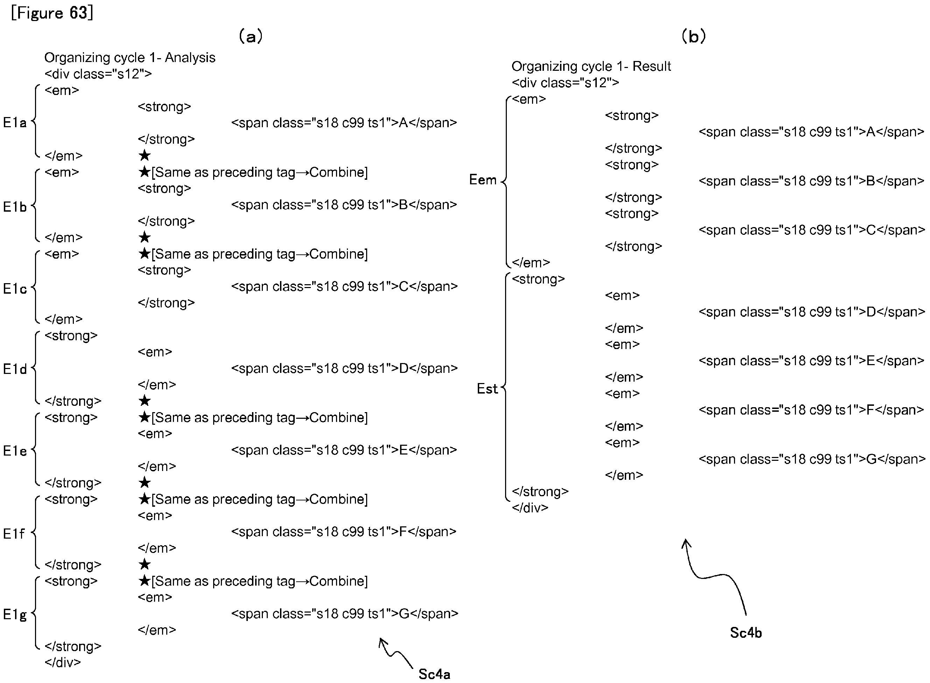

In the first organizing process (organizing cycle 1), the processor **11** first divides the description in the source code contained between a start tag <div class = "s12"> and an end tag </div> into HTML elements (first hierarchical elements) **E1a** to **E1g** belonging to a hierarchy that is one lower than the tag (first hierarchy) as shown in Figure **63****.**

Next, the processor **11** detects a portion where the same tags are adjacent between adjacent first hierarchical elements and combines elements defined by the same tag.

For example, <em> tags are adjacent between <em> element **E1a** and <em> element **E1b** and between <em> element **E1b** and <em> element **E1c** in the example shown in Figure **63(a)**. <strong> tags are adjacent between <strong> element **E1d** and <strong> element **E1e**, between <strong> element **E1e** and <strong> element **E1f**, and between <strong> element **E1f** and <strong> element **E1g**.

Thus, the processor **11** combines and converts <em> element **E1a** to <em> element **E1c** to a single <em> element **Eem**, and combines and converts <strong> element **E1d** to <strong> element **E1g** to a single <strong> element **Est** as shown in Figure **63(b)**. An organized source code **Sc4b** is thereby obtained.

Next in the second organizing process (organizing cycle 2), the processor **11** analyzes a code of a source code contained in the <em> element **Eem** and a code of the source code contained in the <strong> element **Est**, and divides the code of the source code contained in the <em> element **Eem** into HTML elements (second hierarchical elements) **Eema** to **Eemc** belonging to a hierarchy that is one lower than the <em> element **Eem** (second hierarchy), and divides the code of the source code contained in the <strong> element **Est** into HTML elements (second hierarchical elements) **Estd** to **Estg** belong to a hierarchy that is one lower than the <strong> element **Est** (second hierarchy).

Next, the processor **11** detects a portion where the same tags are adjacent between adjacent second hierarchical elements and combines elements defined by the same tag.

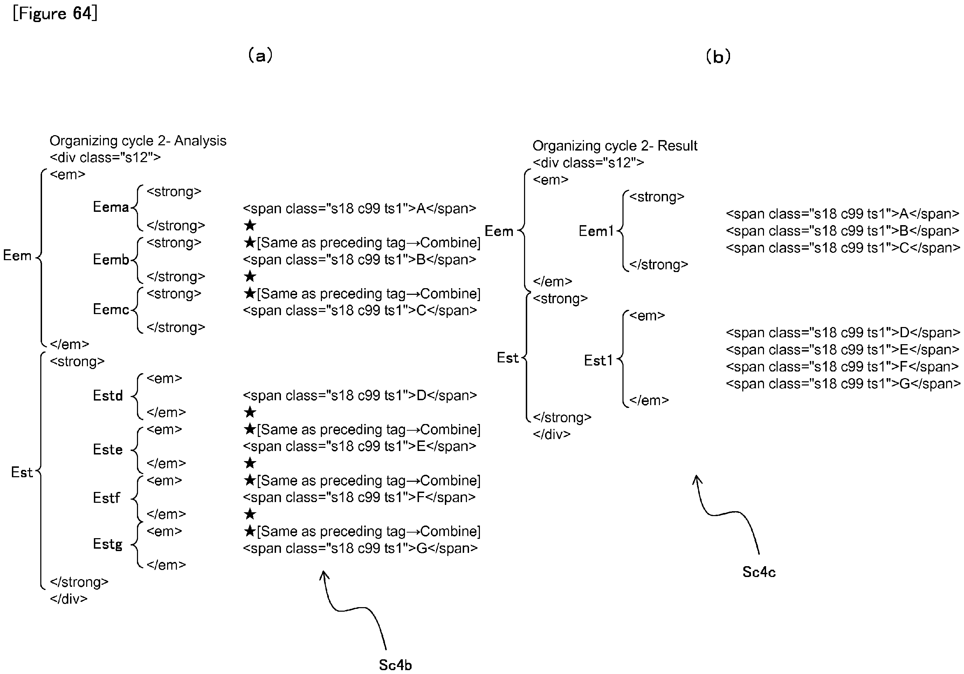

For example, <strong> tags are adjacent between the <strong> element **Eema** and <strong> element **Eemb** and between the <strong> element **Eemb** and <strong> element **Eemc** as shown in Figure **64(a)**.

<em> tags are adjacent between the <em> element **Estd** and <em> element **Este**, between the <em> element **Este** and <em> element **Estf**, and between the <em> element **Estf** and <em> element **Estg**.

Thus, the processor **11** combines and converts <strong> element **Eema** to <strong> element **Eemc** into a single <strong> element **Eem1**, and combines and converts <em> element **Estd** to <em> element **Estg** into a single <em> element **Est1** as shown in Figure **64(b)**. A further organized source code **Sc4c** is thereby obtained.

Subsequently in the third organizing process (organizing cycle 3), the processor **11** analyzes a description of a source code contained in the <strong> element **Eem1** and a description of the source code contained in the <em> element **Est1**, and divides the description of the source code contained in the <strong> element **Eem1** into HTML elements (third hierarchical elements) **Eem11** to **Eem13** belonging to a hierarchy that is one lower than the <strong> element **Eem1** (third hierarchy), and divides the description of the source code contained in the <em> element **Est1** into HTML elements (third hierarchical elements) **Est11** to **Est14** belong to a hierarchy (third hierarchy) that is one lower than the <em> element **Est1**.

Next, the processor **11** detects a portion where specific tags are adjacent and tag class specification (attribute value of class attribute) is the same between adjacent third hierarchical elements and combines elements defined by the same tag with the same class specification.

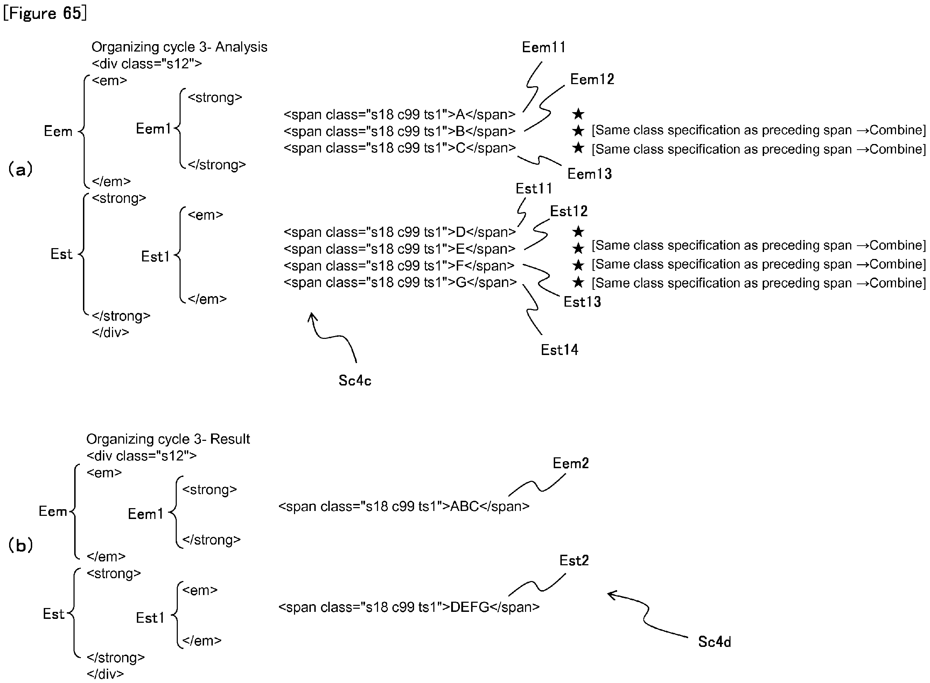

For example, in <strong> element **Eem1**, as shown in Figure **65(a)**, <span> element **Eem12** and the preceding <span> element **Eem11** have the same tag of the same class specification, and <span> element **Eem13** and the preceding <span> element **Eem12** have the same tag of the same class specification.

In <em> element **Est1**, <span> element **Est12** and the preceding <span> element **Est11** have the same tag of the same class specification, and <span> element **Est13d** and the preceding <span> element **Est12** have the same tag of the same class specification, and <span> element **Est14** and the preceding <span> element **Est13** have the same tag of the same class specification.

Thus, the processor **11** combines and converts <span> element **Eem11** to <span> element **Eem13** into a single <span> element **Eem2**, and combines and converts <span> element **Est11** to <span> element **Est14** into a single <em> element **Est2** as shown in Figure **65(b)**. A further organized source code **Sc4d** is thereby obtained.

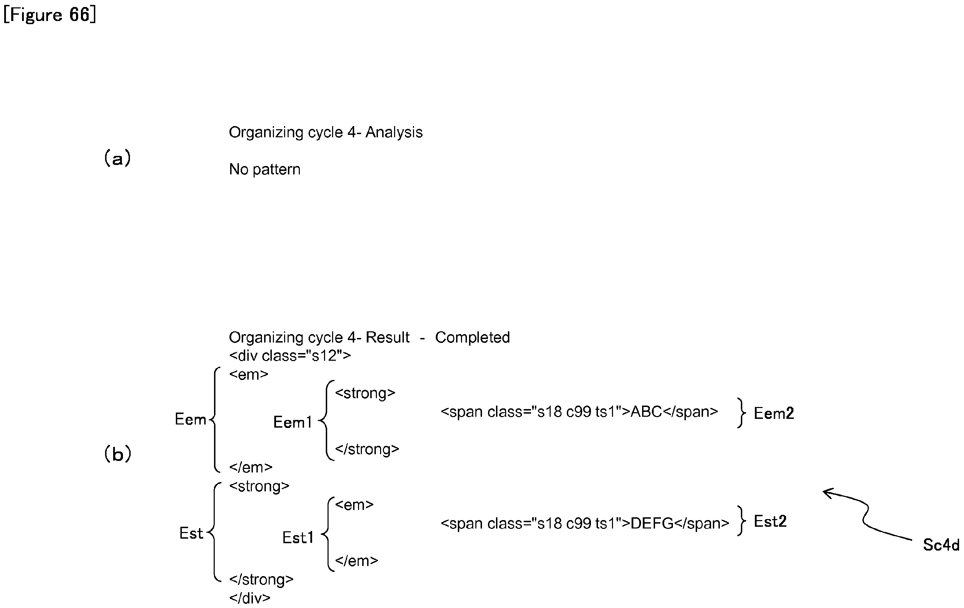

In the fourth organizing process (organizing cycle 4), the processor **11** analyzes a description of a source code contained in <span> element **Eem2** and a description of a source code contained in <span> element **Est2**. Since these elements do not contain an element to be divided, the processor determines that there is no HTML element with a combinable description pattern as shown in Figure **66(a)**, and determines the organization result obtained in the third organizing process (organizing cycle 4) as the fourth organizing result (Figure **66(b)**) to complete the organizing of the source code.

In this manner, in embodiment 4, a type of adjacent tags, an attribute contained in a tag, and an attribute value contained in a source code of a created home page are determined, and a source code is organized by replacing adjacent tags to a single tag if a determination result meets a predetermined condition. Thus, a source code of a mechanically created home page can be converted to a simple code without redundancy. And thereby, a load from data processing with a browser or the like that displays the home page based on the source code can be reduced. As a result, the browser responsiveness, search speed and the like can be improved.

In embodiment 4, a source code optimization process for organizing a source code has been explained by using an exemplary source code without a portion with a tag set to span contents divided with a tag. Meanwhile, the source code optimization process can be used for a source code comprising a portion with a tag set to span contents divided with a tag.

For example, in the first HTME element "<div><em>ABC</em><strong>DEFG</strong></div>", the content "ABCDEFG" is divided into a content "ABC" and content "DEFG" with an em tag and a strong tag.

Meanwhile in the second HTME element "<div><em>AB<span>C</em><strong>DE</span>FG</strong></div>", the span element is set so that the span element spans the content "ABC" and content "DEFG".

The second HTME element with such a configuration can be optimized by adding a new tag to the portion "C</em><strong>DE" within the span tag of the content "ABCDEFG" and the portions "<em>AB" and FG</strong> outside the span tag.

Specifically, the portion "C</em><strong>DE" inside the span tag is changed to "<em>C</em><strong>DE</strong>" by adding an em start tag <em> and strong end tag </strong>. The portion "<em>AB" outside the span tag is changed to "<em>AB</em>" by adding an em end tag "</em>". The portion "FG</strong>" outside the span tag is changed to "<strong>FG</strong>" by adding a strong start tag "<strong>".

As a result, the second HTME element "<div><em>AB<span>C</em><strong>DE</span>FG</strong></div>" is changed to a third HTME element "<div><em>AB</em><span><em>C</em><strong>DE</strong></span> <strong>FG</strong></div>".

The second HTME element thereby becomes a source code (third HTME element) without a portion where a tag is set to span contents divided by a tag.

An HP creation assisting process performed by the HP creation assisting device **40** in embodiment 4 can also be executed by a web application which operates by cooperation between a program installed on a web server and a program in a programming language that operates on a browser on the user side terminal as in embodiment 1 to 3 instead of a stand-alone application that is operated by a program installed on the user side terminal as in embodiment 4.

In this case, the optimized source code can be stored on the server side or provided to the user side terminal.

The present invention has been exemplified with preferred embodiments of the present invention, but the present invention should not be interpreted to be limited to the embodiments. It is understood that the scope of the present invention should be interpreted based solely on the Claims. It is understood that those skilled in the art can implement an equivalent scope from the descriptions of the specific preferred embodiments of the invention based on the description of the present invention and common general knowledge.

### [Industrial Applicability]

The present invention is useful as an invention with which a general user can create an intended home page by a simple operation on a home page editing screen in the field of methods, programs, recording media and devices for assisting the creation of a home page.

### [Reference Signs List]

**1** Element "text"
**2** Content
**3** Start tag
**4** End tag
**10, 20** HP creation assisting device
**10a, 20a** Computer
**11, 21** Processor
**12, 22** Memory
**13** Input interface
**13a** Input operation unit
**14** Output interface
**14a** Display unit
**15** I/O interface
**15a** External storage device
**16** Network controlling unit
**17** Data bus
**31** style attribute
**B, B1-B4** Box
**Ba, Bda, Bdb1-Bdb2, Bdc1-Bdc2, Bdd, Bde1-Bde2, Bdf1-Bdf2 E1, Srb0** body element
**Brla-Brld, Br2a-Br2d, Bxla-Bxlc, Bx2a-Bx2c** Block box
**Br3, Br3a-Br3b, Bxld-Bxlf, Bx2d-Bx2f** Inline box
**Bu1-Bu6, Bu21-Bu24** Operation button
**C1-C4** Content (1) to content (4)
**C1a-C1f, C2a-C2f, Cn, Cn1-Cn6, Cr1-Cr3, Cr3a, Cr3b** Content
**Cht1, Cht3, Eht1, Eht2, Sht2, Sht3** Highlighted region
**Ccr2, Hcr3, Scr1** Clicked region
**D** Display data
**Dc** Attribute information
**Dcp** Property
**Dcv** Value
**De** Declaration element
**Dh** Description
**Dm** Width of margin region
**Dhs** Hierarchical structure information
**Dp** Width of padding region
**Ds** Selector
**Ds1b, Ds1c** test 1 attribute
**Ds2b, Ds2c** test 2 attribute
**Dse, Dsf** test attribute
**Dtx** Text input region
**E2, Erla-Erle, Er2a-Er2d, Er3, Er30-Er32** div element
**E3** p element
**E4** u element
**Eg, Eg1-Eg6** Display element guide
**Eh** Hierarchical structure of DOM structure
**Eh1** Hierarchical structure of browser DOM
**ELd** DOM structure element (identifier)
**ELs** Source element (identifier)
**Emla-Emlc, Em2a-Em2c, Enlb-Enlc, Enle-Enlf, En2b-En2c,**
**En2e-En2f** Block element
**Emld-Emlf, Em2d-Em2f, Er3a-Er3d** Inline element
**Eps** Position information
**Es** Code for setting a style
**Eta** Tag type information
**G** Guide symbol
**Rg1-Rg6** Display element guide
**Ha, Hd, Hda, Hdb1-Hdb2, Hdc1-Hdc2, Hdd, Hde1-Hde2, Hdf1-Hdf2, Srh0** head element
**He, He1-He6, Hm1-Hm6** HTML element
**Hpa-Hpf, Sd** Display screen
**M1-M4, P1-P4, V1-V2** Value inputting region
**Mde** DOM structure element map
**Mp** Mouse pointer
**Mse** Source element map
**N** Network
**Nd** Node information
**Ne1-Ne6** Node
**Rb** Box border
**Rbu** button placement region
**Rc** Content region (displayed portion)
**Rce** Source screen
**Reo** Operation screen
**Rep** Preview screen
**Res** Material selection screen
**Rhd** Hierarchical structure screen
**Rm** Margin region
**Rp** Padding region
**S** Operation signal
**S1, Sc, Sca, Scb1-Scb2, Scc1-Scc2, Scd, Sce1-Sce2, Scf1-Scf2, Sr0, Srla-Srlh, Sr3, Sr30-Sr32** Source code
**Sb, Sb1-Sb6** Symbol
**Se, Se2** Editing screen
**Sec** Selector
**Tt** title element
**TSe** Text editing screen

## Claims

1. A method for assisting the creation of a home page with a computer, comprising:
the computer creating a box on an editing screen based on a user operation, the box being a rectangular frame for placing a content of the home page;
the computer determining a positional relationship between a target box, which is a target of creation, and an existing box adjacent to the target box; and
the computer editing at least a description for the target box between the target box and the existing box in the source code so that the description is in accordance with a layout rule matching the positional relationship among a plurality of layout rules specifying the placement of the box.

2. A program for executing a method for assisting the creation of a home page with a computer, wherein the program is configured to make the computer execute:
creating a box on an editing screen based on a user operation, the box being a rectangular frame for placing a content of the home page;
determining a positional relationship between a target box, which is a target of creation, and an existing box adjacent to the target box; and
editing at least a description for the target box between the target box and the existing box in the source code so that the description is in accordance with a layout rule matching the positional relationship among a plurality of layout rules specifying the placement of the box.

3. A computer readable recording medium with the program of claim 2 recorded thereon.

4. An device for assisting the creation of a home page, wherein the device has:
means for creating a box on an editing screen based on a user operation, the box being a rectangular frame for placing a content of the home page;
means for determining a positional relationship between a target box, which is a target of creation, and an existing box adjacent to the target box; and
means for editing at least a description for the target box between the target box and the existing box in the source code so that the description is in accordance with a layout rule matching the positional relationship among a plurality of layout rules specifying the placement of the box.

5. A method for assisting the creation of a home page with a computer, comprising:
the computer displaying an editing screen for the home page, the editing screen comprising a preview screen, a source screen, and a hierarchical structure screen, one or more contents constituting the home page being displayed in the preview screen, one or more elements constituting a source code of the home page being displayed in the source screen, and a hierarchical structure comprising one or more hierarchical nodes corresponding to each of the one or more contents being displayed in the hierarchical structure screen; and
the computer executing at least one of the following display processes:
a first display process in which, when one of the one or more contents is selected on the preview screen, an element corresponding to the selected content among the one or more elements is highlighted and displayed on the source screen and a hierarchical node corresponding to the selected content among the one or more hierarchical nodes is highlighted and displayed on the hierarchical structure screen by the computer;
a second display process in which, when one of the one or more elements is selected on the source screen, a content corresponding to a selected element among the one or more contents is highlighted and displayed on the preview screen and a hierarchical node corresponding to the selected element among the one or more hierarchical nodes is highlighted and displayed on the hierarchical structure screen by the computer; and
a third display process in which, when one of the one or more hierarchical nodes is selected on the hierarchical structure screen, a content corresponding to the selected hierarchical node among the one or more contents is highlighted and displayed on the preview screen and an element corresponding to the selected hierarchical node among the one or more elements is highlighted and displayed on the source screen by the computer.

6. A program for making a computer perform a process for assisting the creation of a home page, wherein the program makes the computer:
display an editing screen for the home page, the editing screen comprising a preview screen, a source screen, and a hierarchical structure screen, one or more contents constituting the home page being displayed in the preview screen, one or more elements constituting a source code of the home page being displayed in the source screen, and a hierarchical structure comprising one or more hierarchical nodes corresponding to each of the one or more contents being displayed in the hierarchical structure screen; and
execute at least one of the following display processes:
a first display process in which, when one of the one or more contents is selected on the preview screen, an element corresponding to the selected content among the one or more elements is highlighted and displayed on the source screen and a hierarchical node corresponding to the selected content among the one or more hierarchical nodes is highlighted and displayed on the hierarchical structure screen:
a second display process in which, when one of the one or more elements is selected on the source screen, a content corresponding to a selected element among the one or more contents is highlighted and displayed on the preview screen and a hierarchical node corresponding to the selected element among the one or more hierarchical nodes is highlighted and displayed on the hierarchical structure screen; and
a third display process in which, when one of the one or more hierarchical nodes is selected on the hierarchical structure screen, a content corresponding to the selected hierarchical node among the one or more contents is highlighted and displayed on the preview screen and an element corresponding to the selected hierarchical node among the one or more elements is highlighted and displayed on the source screen.

7. A computer readable recording medium with the program of claim 6 recorded thereon.

8. An device for assisting the creation of a home page, comprising:
displaying means for displaying an editing screen for the home page, the editing screen comprising a preview screen, a source screen, and a hierarchical structure screen, one or more contents constituting the home page being displayed in the preview screen, one or more elements constituting a source code of the home page being displayed in the source screen, and a hierarchical structure comprising hierarchical nodes corresponding to each of the one or more contents being displayed in the hierarchical structure screen, and
controlling means for controlling the display means to perform at least one of the following display processes:
a first display process in which, when one of the one or more contents is selected on the preview screen, the displaying means highlights and displays an element corresponding to the selected content among the one or more elements on the source screen and highlights and displays a hierarchical node corresponding to the selected content among the one or more hierarchical nodes on the hierarchical structure screen;
a second display process in which, when one of the one or more elements is selected on the source screen, the displaying means highlights and displays a content corresponding to a selected element among the one or more contents on the preview screen and highlights and displays a hierarchical node corresponding to the selected element among the one or more hierarchical nodes on the hierarchical structure screen; and
a third display process in which, when one of the one or more hierarchical nodes is selected on the hierarchical structure screen, the displaying means highlights and displays a content corresponding to the selected hierarchical node among the one or more contents on the preview screen and highlights and displays an element corresponding to the selected hierarchical node among the one or more elements on the source screen.

9. A method for assisting the creation of a home page with a computer, wherein the method comprises:
the computer displaying a plurality of blocks for placing a content of the home page so that at least one block is contained within at least one other block on an editing screen based on an editing operation of a user;
the computer switching an editing mode for a parent block comprising at least one block between a normal editing mode and a batch editing mode based on a user operation; and
when the editing mode for the parent block is in the batch editing mode, denying an individual editing operation on a block contained in the parent block and batch editing the block contained in the parent block with the parent block in accordance with an editing operation of a user on the parent block, and when the editing mode for the parent block is in the normal editing mode, the computer executing an editing process of the block contained in the patent block in accordance with an editing operation of a user on the block contained in the parent block.

10. A program for executing a method for assisting the creation of a home page with a computer, wherein the program is configured to:
switch an editing mode for a parent block comprising at least one block between a normal editing mode and a batch editing mode based on a user editing operation; and
when the editing mode for the parent block is in the batch editing mode, deny an individual editing operation on a block contained in the parent block and batch edit the block contained in the parent block with the parent block in accordance with an editing operation on the parent block, and when the editing mode for the parent block is in the normal editing mode, execute an editing process of the block contained in the patent block in accordance with an editing operation on the block contained in the parent block with the computer.

11. A computer readable recording medium with the program of claim 10 recorded thereon.

12. A device for assisting the creation of a home page, wherein the device comprises:
means for displaying a plurality of blocks for placing a content of the home page so that at least one block is contained within at least one other block on an editing screen based on an editing operation of a user;
means for switching an editing mode of a parent block comprising at least one block between a normal editing mode and a batch editing mode based on a user operation; and
means for, when the editing mode for the parent block is in the batch editing mode, denying an individual editing operation on a block contained in the parent block and batch editing the block contained in the parent block with the parent block in accordance with an editing operation of a user on the parent block, and, when the editing mode for the parent block is in the normal editing mode, editing the block contained in the patent block in accordance with an editing operation of a user on the block contained in the parent block.

13. A method for assisting the creation of a home page with a computer, wherein the method comprises:
the computer determining a type of adjacent tags, an attribute contained in a tag, and an attribute value contained in a source code of a created home page; and
the computer organizing the source code by replacing the adjacent tags with one tag if a result of the determination meets a predetermined condition.

14. A program for executing a method for assisting the creation of a home page with a computer, wherein the program is configured to make the computer execute:
determining a type of adjacent tags, an attribute contained in a tag, and an attribute value contained in a source code of a created home page; and
organizing the source code by replacing the adjacent tags with one tag if a result of the determination meets a predetermined condition.

15. A computer readable recording medium with the program of claim 14 recorded thereon.

16. A device for assisting the creation of a home page, wherein the device comprises:
means for determining a type of adjacent tags, an attribute contained in a tag, and an attribute value contained in a source code of a created home page; and
means for organizing the source code by replacing the adjacent tags with one tag if a result of the determination meets a predetermined condition.
